(19) Europäisches Patentamt
European Patent Office
Office européen des brevets

(11) **EP 3 667 595 B1**

(12) **EUROPEAN PATENT SPECIFICATION**

(45) Date of publication and mention
of the grant of the patent:
**26.02.2025 Bulletin 2025/09**

(21) Application number: **18845024.1**

(22) Date of filing: **07.08.2018**

(51) International Patent Classification (IPC):
**G06Q 20/06** (2012.01)    **G06Q 20/36** (2012.01)

(52) Cooperative Patent Classification (CPC):
**G06Q 20/065; G06Q 20/02; G06Q 20/3672;**
**G06Q 20/3674; G06Q 20/3678; G06Q 20/38;**
**G06Q 20/3829; H04L 9/3239; H04L 9/50;**
G06Q 2220/00; H04L 2209/56

(86) International application number:
**PCT/JP2018/029560**

(87) International publication number:
**WO 2019/031487 (14.02.2019 Gazette 2019/07)**

(54) **VIRTUAL CURRENCY DATA ISSUING SYSTEM, USER TERMINAL, MANAGEMENT DEVICE, METHOD, AND COMPUTER PROGRAM**

SYSTEM ZUR AUSGABE VON VIRTUELLEN WÄHRUNGSDATEN, BENUTZERENDGERÄT, VERWALTUNGSVORRICHTUNG, VERFAHREN UND COMPUTERPROGRAMM

SYSTÈME D'ÉMISSION DE DONNÉES DE MONNAIE VIRTUELLE, TERMINAL D'UTILISATEUR, DISPOSITIF DE GESTION, PROCÉDÉ, ET PROGRAMME D'ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2017 JP 2017152669**

(43) Date of publication of application:
**17.06.2020 Bulletin 2020/25**

(73) Proprietor: **NTI, Inc.**
**Yokkaichi-shi**
**Mie 510-8021 (JP)**

(72) Inventor: **NAKAMURA, Takatoshi**
**Yokkaichi-shi**
**Mie 510-8021 (JP)**

(74) Representative: **Gill Jennings & Every LLP**
**The Broadgate Tower**
**20 Primrose Street**
**London EC2A 2ES (GB)**

(56) References cited:
**WO-A1-2007/020782    JP-A- 2002 123 771**
**JP-A- 2003 335 085    JP-A- 2015 177 285**
**JP-A- 2015 225 370    JP-A- H10 307 885**
**US-A- 5 999 625**

• YING LI ET AL: "A survey of e-cash research", SYSTEM OF SYSTEMS ENGINEERING (SOSE), 2012 7TH INTERNATIONAL CONFERENCE ON, IEEE, 16 July 2012 (2012-07-16), pages 847 - 850, XP032253722, ISBN: 978-1-4673-2974-3, DOI: 10.1109/SYSOSE.2012.6333572

• AIGBE PRINCEWILL ET AL: "Analysis of Security Issues in Electronic Payment Systems", INTERNATIONAL JOURNAL OF COMPUTER APPLICATIONS, vol. 108, no. 10, 1 December 2014 (2014-12-01), pages 10 - 14, XP055828723, Retrieved from the Internet <URL:http://citeseerx.ist.psu. edu/viewdoc/download?doi=10.1.1.671.9129& rep=rep1&type=pdf> DOI: 10.5120/18946-9993

- MUSLIYANA ZUHAR ET AL: "SECURITY ENHANCEMENT OF ADVANCED ENCRYPTION STANDARD (AES) USING TIME-BASED DYNAMIC KEY GENERATION", ARPN JOURNAL OF ENGINEERING AND APPLIED SCIENCES, 1 October 2015 (2015-10-01), pages 8347 - 8350, XP055828931, Retrieved from the Internet <URL:http://www.arpnjournals. org/jeas/research_papers/rp_2015/ jeas_1015_2725.pdf> [retrieved on 20210729]
- KNUDSEN LARS R.: "Dynamic Encryption", JOURNAL OF CYBER SECURITY AND MOBILITY, vol. 3, no. 4, 3 April 2015 (2015-04-03), pages 357 - 370, XP055828938, ISSN: 2245-1439, Retrieved from the Internet <URL:https://www. riverpublishers. com/journal/journal_articles/RP_Jour nal_2245-1439_341.pdf> DOI: 10.13052/ jcsm2245-1439.341
- HUY-HOANG NGO ET AL: "Dynamic Key Cryptography and Applications", INTERNATIONAL JOURNAL OF NETWORK SECURITY, 1 May 2010 (2010-05-01), pages 161 - 174, XP055828951, Retrieved from the Internet <URL:http://isrc.ccs.asia.edu. tw/ijns/contents/ijns-v10- n3/ijns-2010-v10-n3-p161-174.pdf> [retrieved on 20210729], DOI: 10.6633/IJNS.201005.10(3).01
- ANONYMOUS: "Cryptography - Wikipedia, the free encyclopedia", 8 June 2013 (2013-06-08), pages 1 - 17, XP055091395, Retrieved from the Internet <URL:http://en.wikipedia.org/w/index. php?title=Cryptography&oldid=558953349> [retrieved on 20131203]

**Description**

**Technical Field**

The present invention relates to a virtual currency, and more particularly relates to crypto cash.

**Background Art**

In recent years, various proposals related to FinTech have been made, and some of the proposals have already been put into practical use.

Some of the proposals are called virtual currency. For example, Bitcoin (trademark), which began with a thesis published by someone using the name Satoshi Nakamoto and is realized by a system constructed on the Internet, is also generally called a virtual currency. On the other hand, bitcoin is sometimes referred to as cryptocurrency or crypto cash.

First, a structure of bitcoin will be described. Bitcoin is generally established by the following structure.

First, bitcoin is generated as follows.

A person who has the right to generate bit coins is limited to an administrator who manages nodes to be described below. The node administrator participates in a certain game played on the Internet. The game is repeated, and the node administrator who has won the game can obtain a predetermined number of bitcoins every time the administrator wins the game.

The bit coins generated in this way are transferred to a third party including a person other than a node administrator from the node administrator who obtains the bitcoins, for example, for "payment" in the same manner as general currency, and will be distributed as a result.

In this connection, how to prevent double transfer is a very important problem in the field of virtual currency or virtual money without being limited to bitcoin. Since general money, which is a tangible object, disappears from the transferor's hands when transferred from the transferor to the transferee, after the transferor transfers the money to the transferee, it is not possible for the transferor to transfer the same money to another transferee in principle. However, since the virtual currency is easy to duplicate and it is possible that the virtual currency as data owned by the transferor is not extinguished even when the transferor transfers the virtual currency to the transferee, it is very easy to transfer the same virtual currency to many people. Unless the same virtual currency can be prevented from being transferred to many people, such virtual currency cannot gain any trust as currency.

Bitcoin intends to solve such a problem of double transfer through a method of preserving all transaction records. The transaction records are as follows, for example. For simplicity, it is assumed that only four persons A to D participate in the structure of bitcoin and the node administrators are only two persons A and B. It will be assumed here that the node administrator A wins the above-described game and gains 1,000 bitcoins, and the node administrator B wins the above-described game and gains 500 bitcoins.

In this state, the bit coins that A to D respectively have are as described below.

[Table 1]

| | |
|---|---|
| A | +1000 |
| B | +500 |
| C | 0 |
| D | 0 |

Next, it is assumed that A has paid 100 bit coins to C and B has paid 200 bit coins to D.

In this state, the bit coins that A to D respectively have are as described below.

[Table 2]

| | | |
|---|---|---|
| A | +1000 | -100 (to C) |
| B | +500 | -200 (to D) |
| C | 0 | +100 (from A) |
| D | 0 | +200 (from B) |

Next, it is assumed that A has paid 300 bit coins to B and D has paid 100 bit coins to C.

In this state, the bit coins that A to D respectively have are as described below.

[Table 3]

| | | | |
|---|---|---|---|
| A | +1000 | -100 (to C) | -300 (to B) |
| B | +500 | -200 (to D) | +300 (from A) |
| C | 0 | +100 (from A) | +100 (from D) |
| D | 0 | +200 (from B) | -100 (to C) |

All of the records indicated in Tables 1 to 3 described above are transaction records. According to the transaction records described above, it can be seen at the time of Table 3 that A has 600 bit coins (= +1000 - 100 - 300), B similarly has 600 bitcoins, C has 200 bitcoins, and D has 100 bitcoins.

Bitcoin which has such a structure is interesting in that some data as a main body of bitcoin is not delivered from the transferor to the transferee in the transfer of bitcoin between A to D in the example described above. In spite of this, an attraction of the bitcoin structure is that the current balance of bitcoin of A to D can be specified as long as the transaction records exist. Again, in the bitcoin structure, there is no data corresponding to a coin entity, even though the naming "coin" is used to evoke the idea of a tangible object.

Note that the phenomenon that the node administrator in the bitcoin structure wins the game and gains bit coins can occur after the transaction is advanced to some extent, for example, after the time of Table 3.

Further, in Tables 1 to 3, although the persons participating in the transfer of bit coins also act as persons that participate in the generation of bitcoins, in the actual bitcoin operations, general users who are not involved in the generation of bit coins also participate in the transfer of bitcoins.

In the bitcoin structure, as described above, each participant who participates in the bitcoin structure does not have data corresponding to his/her bitcoin. In other words, even though each participant's wallet is empty, since all past transaction records exist so as to be accessible and the balance of bitcoin at that time is specified in this way from the access record, the bitcoin structure is established based on mutual understanding or the common illusion that the bitcoin of each participant should be like this.

For that reason, in order for all participants to believe in the common illusion, it is necessary to guarantee that the transaction record is accurate at any time or that the transaction record cannot be falsified.

Bitcoin ensures the guarantee with blockchain and the technology and idea of proof-of-work. The transaction records of bitcoin have a structure in which new transaction records are linked to previous transaction records. As new transaction record data (blocks) are continuously linked to the past transaction records, the transaction record data are linked in the form of a chain of blocks. This is called a blockchain. When a new block that is to be added to the blockchain is generated, a value obtained by encryption of the previous block (more precisely, a hash value created from the data of the past block) is added to the new block. Thus, if the past block is falsified after the time when the new block is added to the blockchain, the hash value is changed and the falsification is detected, and thus, in actual fact, the data of the past block that was created previously cannot be falsified.

In addition, blockchain data is recorded in servers called nodes, which exist in large numbers on the Internet. The same blockchain data is recorded in each of the nodes. As described above, the administrator of the node is a participant in a certain kind of game described above. The only person who can add a new transaction record block to the past transaction record is a person who is a winner of the game described above. That is, when the number of persons who can add a new block to a node is limited to only one person, appropriate block data is ensured.

With the structure described above, since the blockchain recorded in each node cannot be falsified by the hash value or alternatively the hash value is changed when a falsification is made, the fact that falsification occurred is detected. Even when some of the blockchains recorded in each node are falsified in the same way, including the hash value (for example, even when some of the blockchains recorded in multiple nodes are also falsified in the same way) so that the falsification of the past block data is not detected, if a large number of non-falsified blockchains exist out of the blockchains recorded in a large number of nodes, the falsification of the past block data including the hash value can be nullified made powerless by adopting the state of the non-falsified blockchains as true, and this theory of majority rule is adopted in the actual bitcoin structure. As described above, the node administrator can obtain bitcoins as a reward by winning the game. Motivated by the desire to win games to obtain bitcoins, the node administrators improve the computing power of their own computer. In order for a malicious third party to falsify a majority of the blockchains recorded in the nodes, it is necessary for the malicious third party to prepare a computer having computing power that is equal to or greater than at least half of the sum of the computing power of the large number of computers of the node administrators. A person who participates in the bitcoin structure trusts that, in actual fact, it is not possible to prepare a computer that has such computing power. Such trust or confidential relationship guarantees the legitimacy of not only the blockchain but also the transaction record, and gives a certain kind of trust to the bitcoin.

US5999625 A discloses an electronic cash system in which virtual coins are issued by an issuer to user terminals. The coins are transferred between user terminals during payment transactions and may be redeemed with the issuer. A message authentication code (MAC) is used to secure and validate the coins.

## Summary of Invention

### Technical Problem

The structure of bitcoin is as described above, but the inventor of the present invention has significant doubts about referring to bitcoin as virtual currency or even referring to bitcoin as crypto cash.

This is because, in the structure of bitcoin, for the most part a cryptographic technique is only used to guarantee the legitimacy of transaction records. That is, when a new block is added to the blockchain described above, a hash value of the previous block is taken. Further, when transferring bitcoin, although the transfer is performed by encrypted communication using a public key system, and a cryptographic technique is used at such time, the encryption in question is encryption for performing communication, and thus such encryption does not have a meaning to the extent of especially referring to bitcoin as "crypto cash". For example, if we assume a case in which certain data having a monetary value that is described in plaintext exists, and encrypted communication using a public key system is used when transferring the data from a given person to another person via a network such as the Internet, if asked whether it is appropriate to refer to that plaintext data as "crypto cash", it is likely that most people would say that it is not appropriate.

Moreover, in the case of bitcoin, as described above, there is actually no data that is delivered from the value transferor to the transferee at the time of transferring the value. This is equivalent to not using money (banknotes or coins) that are tangible objects which mediate the transfer of value through the transfer thereof when causing a currency to function.

That is, although bitcoin may function as a currency, it has no monetary essence and is also extremely limited in the use of cryptography. The problem with the lack of monetary essence is that it is necessary to record all of the past transaction records, and this gives rise to the need to spend a huge amount of time and labor as well as a huge amount of waste in recording the large amount of data of the past transaction records. Actually, the amount of blockchain data recorded for bitcoin is already enormous, and the recording of the enormous blockchain data as well as recording of the same blockchain data in a large number of nodes causes tremendous waste. On the other hand, when data that serves to replace money is circulated among users, the safety of the data becomes a problem.

From this point of view, although very vague, the idea exists that cryptographic technology should be utilized to establish a virtual currency, and there is a possibility that a safe virtual currency, more specifically, safe virtual money can be established by appropriate use of cryptographic technology. The reason that bitcoin is sometimes referred to as cryptocurrency or the like is that this is a way to give users an "image" of safety due to use of cryptography.

However, as described above, the use of cryptographic technology in bitcoin is extremely limited.

In this connection, in the bitcoin structure, the ability to generate virtual currency is limited to only some persons. As described above, in the bitcoin structure, only the persons who manage the nodes can generate bitcoins. However, since a general user is not restricted from becoming the administrator of a node, it is possible for a general user to go around to the side that generates bitcoins (in the bitcoin structure, the action of generating bitcoins is referred to as "mining". Further, in the bitcoin structure, a person who can generate bitcoins by way of such "mining" is referred to as a "miner"). However, having said that, a huge amount of equipment investment as well as a high degree of knowledge is required in order to become a miner, and in practice only some people can generate virtual currency.

In this respect, it would be extremely convenient if general users could easily generate virtual currency. Further, it is widely known that one of the reasons why the bitcoin structure was widely accepted is that bitcoin is extremely democratic because centralized administrators do not exist in the blockchains as described above that form the nucleus of the bitcoin structure. Given that is the case, if a structure can be constructed in which the users themselves can generate virtual currency, there is a high possibility that such a structure would be more widely accepted by the general public.

An object of the present invention is to provide technology for enabling an ordinary user to generate virtual currency that is data created as crypto cash in the true sense of the word.

### Solution to Problem

The invention is set out in the independent claims.

In order to solve such a problem, the inventor of the present invention proposes the invention to be described below.

The present invention is a virtual currency data issuing system configured to include: a user terminal that generates virtual currency data that is data having a monetary value, and that comprises a user terminal input means that accepts input of information, a user terminal transmission and reception means that transmits and receives data via a predetermined network, and a user terminal information processing means that performs information processing, the user terminal being one of a plurality of user terminals each intended to be used by a user; and a management device that performs management of generation of the virtual currency data in the user terminal, and that comprises a management device transmission and reception means that transmits and receives data via the network, and a management device information processing means that performs information processing; the user terminal and the management device each being connectable to the network. That is, the user terminal and the management device are essential components for the virtual currency data issuing system. The user terminal is generally owned by each user, and is used by at least the user, and there may be a plurality or a large number of the user terminals. In contrast, the management device is used by a person that performs management of the virtual currency data, and in general there is one management device.

In the user terminal of the virtual currency data issuing system, the user terminal input means is configured to accept amount information that is information that specifies an amount of money to be paid with virtual currency data that a user desires to issue, and the user terminal information processing means comprises a user terminal first information processing means that attaches a user ID, which is information for distinguishing a user of the user terminal from a user of another user terminal and which differs on a user terminal basis, to the amount information accepted by the user terminal input means, and that causes the amount information with the user ID attached to be transmitted from the user terminal transmission and reception means to the management device via the network.

Further, in the management device of the virtual currency data issuing system, the management device transmission and reception means is configured to accept the amount information with the user ID attached from the user terminal, and the management device information processing means comprises: a credit determination unit that makes a determination as to whether the virtual currency data of an amount of money specified by the amount information with the user ID attached is to be issued for the user specified by the user ID accepted by the management device transmission and reception means, and that generates issuance permission information when it is made a determination the virtual currency data is to be issued for the user, and a management device first information processing means that causes the issuance permission information generated by the credit determination unit to be transmitted from the management device transmission and reception means via the network to the user terminal which sent the amount information.

In addition, in the user terminal of the virtual currency data issuing system, the user terminal transmission and reception means is configured to receive the issuance permission information from the management device; and the user terminal information processing means comprises: a user terminal encryption means that, when the user terminal transmission and reception means receives the issuance permission information, generates virtual currency encryption data by encrypting original data including the amount information using a scheme that is different to that used in another user terminal, and a user terminal second information processing means that generates virtual currency data including at least the virtual currency encryption data by adding necessary data to the virtual currency encryption data.

As described above, the virtual currency data issuing system includes a user terminal and a management device.

The user terminal includes a user terminal input means. The user terminal input means is configured to accept amount information that is information that specifies an amount of money to be paid with virtual currency data that a user desires to issue, and the user terminal input means may of course also be used to perform input of other data. The amount of money specified by the amount information, in short, determines the monetary value of the virtual currency data to be issued subsequently. The unit of the amount of money specified by the amount information may match a unit of legal currency such as Japanese Yen, US Dollar or Euro, but does not need to match a unit of legal currency. For example, the unit of the amount of money specified by the amount information may match a unit of other virtual currency data that is different from the virtual currency data issued by the present virtual currency data issuing system.

The user terminal comprises a user terminal information processing means that performs information processing. The user terminal information processing means includes the user terminal first information processing means that attaches a user ID, which differs on a user terminal basis, to the amount information accepted by the user terminal input means, and also transmits the amount information with the user ID attached to the management device by means of the user terminal transmission and reception means. The amount information which the user input is sent to the management device via a network.

On the other hand, the amount information with the user ID attached is received by the management device transmission and reception means in the management device of the virtual currency data issuing system. The reason for sending the amount information to the management device once from the user terminal is for the management device to make a determination as to whether or not the user terminal may issue the virtual currency data, before the user terminal issues the virtual currency data. That is, the management device or the administrator of the management device may be perceived as being equivalent to a centralized rights holder that is detested in the system of bitcoin. However, although a system in which there are no administrators sounds nice when speaking of the system as being democratic, it can also be said that, when expressed differently, it is a system in which there is no one who assumes responsibility. That is, if a system is adopted that allows virtual currency data to be issued completely freely at user terminals, confidence with respect to the monetary value of the virtual currency data cannot be maintained. In the virtual currency data issuing system of the present invention, a framework is adopted in which the responsibility regarding confidence with respect to the monetary value of the virtual currency data falls on the management device. Upon accepting amount information with a user ID attached from the user terminal, the management device makes a determination as to whether virtual currency data having a monetary value that is specified by the amount information is to be issued by the user specified by the user ID. The determination in question is a determination as to whether or not settlement using the virtual currency data is possible, for example, the determination is a so-called "credit determination" that is similar to a determination that is made in the case of performing settlement by credit card. The management device information processing means has a credit determination unit that makes the relevant determination. If the credit determination unit determines that the user specified by the user ID that was sent from the user terminal may be suitable to issue virtual currency data having the monetary value specified by the amount information, the credit determination unit generates issuance permission information. The management device information processing means also includes a first information processing means that, when the credit determination unit generates the issuance permission information, transmits the issuance permission information to the user terminal via the management device transmission and reception means.

The user terminal in the virtual currency data issuing system receives issuance permission information that was sent from the management device via the network, by means of the user terminal transmission and reception means thereof. The user terminal that received the issuance permission information generates virtual currency data. The virtual currency data includes at least virtual currency encryption data. The virtual currency encryption data is data that should be referred to as the, so to speak, body of the virtual currency data, and is data generated by encrypting original data. The original data includes at least amount information. As long as the original data includes amount information, other information may be included in addition to the amount information. In each user terminal, encryption of original data is performed by a user terminal encryption means. The user terminal encryption means in the respective user terminals are configured to be capable of performing encryption processing by different schemes to each other. Here, the phrase perform encryption processing "by different schemes" means that the processing schemes for executing encryption at the time of executing encryption processing are different. For example, because it is usual for encryption processing to be executed using an algorithm and a key, if at least either one of the algorithm and the key is different, it can be said that the original data was encrypted by a different scheme. As a more specific example, a case can be mentioned in which, on the one hand, the user terminal encryption means in the respective user terminals are configured to perform encryption processing using the same algorithm, while on the other hand, each user terminal encryption means is configured to perform encryption processing using a key that is different from the keys used by the other user terminal encryption means.

The user terminal also includes a user terminal second information processing means that generates virtual currency data by adding necessary data to the virtual currency encryption data. However, when there is no data that it is necessary to add, the user terminal second information processing means adopts the virtual currency encryption data as it is, as the virtual currency data. In other words, in this case, the user terminal second information processing means does not have any function. Encryption condition data that is described later can be mentioned as data which may potentially be added to the virtual currency encryption data by the user terminal second information processing means.

The virtual currency data that is generated by the user terminal is passed to another device that is owned by another user or the like from the user terminal that generated the virtual currency data. The phrase "is passed" to another device means that while transfer of the virtual currency data from the user terminal to another device may be realized by transmission and reception of data, the transfer may also be performed without being accompanied by transmission and reception of data. For example, in some cases the virtual currency data is displayed as a two-dimensional barcode specifying the virtual currency data on a display of the user terminal, and the virtual currency data "is passed" to another device which reads the two-dimensional barcode with built-in camera. In this case, although transmission and reception of the virtual currency data itself is not performed between the user terminal and the other device, the virtual currency data is delivered. Usually, the virtual currency data is used by another device that received the virtual currency data directly from the user terminal that generated the virtual currency data or via at least one device.

According to the virtual currency data issuing system, since virtual currency data that is data which plays the same role as money in legal currency is present, a means for recording a vast amount of data like a blockchain in the case of bitcoin is not required. Further, although the virtual currency data in question is under the management of a management device, the respective users at the respective user terminals can generate or issue the virtual currency data. In comparison to a case where the issuer of virtual currency data is only one person or a restricted number of persons, the degree of freedom with respect to issuing the virtual currency data is high, and can also said to be democratic. In addition, in this virtual currency data issuing system, because a so-called "credit determination" is made at the management device before virtual currency data is generated or issued at a user terminal, the possibility of a situation arising in which settlement is not accepted when performing settlement with the virtual currency data is low. This enhances the reliability of the virtual currency data that is issued with the virtual currency data issuing system of the present invention.

The inventor of the present invention also proposes, as one aspect of the present invention, a user terminal constituting a virtual currency data issuing system as described above. The effect thereof is the same as the effect of the virtual currency data issuing system described above.

An example of the user terminal is as follows.

The user terminal according to the present invention is a user terminal that, in combination with a management device, constitutes a virtual currency data issuing system configured to include: the user terminal that generates virtual currency data that is data having a monetary value, and that comprises a user terminal input means that accepts input of information, a user terminal transmission and reception means that transmits and receives data via a predetermined network, and a user terminal information processing means that performs information processing, the user terminal being one of a plurality of user terminals each intended to be used by a user; and the management device that performs management of generation of the virtual currency data in the user terminal, and that comprises a management device transmission and reception means that transmits and receives data via the network, and a management device information processing means that performs information processing; the user terminal and the management device each being connectable to the network.

In the user terminal, the user terminal input means is configured to accept amount information that is information that specifies an amount of money to be paid with virtual currency data that a user desires to issue, and the user terminal information processing means comprises a user terminal first information processing means that attaches a user ID, which is information for distinguishing a user of the user terminal from a user of another user terminal and which differs on a user terminal basis, to the amount information accepted by the user terminal input means, and that causes the amount information with the user ID attached to be transmitted from the user terminal transmission and reception means to the management device via the network.

In the management device that is used in combination with the user terminal, the management device transmission and reception means is configured to accept the amount information with the user ID attached from the user terminal, and the management device information processing means comprises a credit determination unit that makes a determination as to whether the virtual currency data of an amount of money specified by the amount information with the user ID attached is to be issued for the user specified by the user ID accepted by the management device transmission and reception means, and that generates issuance permission information when it is made a determination the virtual currency data is to be issued for the user, and a management device first information processing means that causes the issuance permission information generated by the credit determination unit to be transmitted from the management device transmission and reception means via the network to the user terminal which sent the amount information.

Further, in the user terminal, the user terminal transmission and reception means is configured to receive the issuance permission information from the management device, and the user terminal information processing means comprises: a user terminal encryption means that, when the user terminal transmission and reception means receives the issuance permission information, generates virtual currency encryption data by encrypting original data including the amount information using a scheme that is different to that used in another user terminal, and a user terminal second information processing means that generates virtual currency data including at least the virtual currency encryption data by adding necessary data to the virtual currency encryption data.

As described above, the user terminal includes a user terminal encryption means that encrypts original data to convert the data to virtual currency encryption data.

In an embodiment which does not fall within the scope of the claims, the user terminal encryption means may be configured to always encrypt the original data by the same scheme. As described in the foregoing, although the scheme that is executed when a user terminal encryption means encrypts original data differs for each user terminal encryption means in the respective user terminals, when focusing on a single user terminal encryption means, the scheme of encryption may be fixed to always be the same scheme. That is, in each user terminal, an algorithm and a key that

are used when encryption processing is executed may always be the same. Note that, as described later, in a case where the user terminal encryption means in each user terminal is configured to be capable of performing encryption processing by the same scheme that is fixed, the management device is configured to perform processing that is the same as the encryption processing executed when original data is encrypted into virtual currency encryption data by the user terminal encryption means of each user terminal, or processing that decrypts the virtual currency encryption data that is generated by such encryption processing. Thus, the management device is configured to be capable of making a determination as to whether or not virtual currency data issued at each user terminal is authentic. This ensures the appropriateness of the settlement using the virtual currency data.

On the other hand, in another embodiment which does not fall within the scope of the claims, the user terminal encryption means may be configured to change the scheme used to encrypt the original data, at a predetermined timing. As described above, the user terminal encryption means may always perform encryption by the same scheme. However, changing the scheme used to encrypt the original data at an appropriate timing can obviously lower the possibility of the encryption scheme being discovered by a third party, and doing so can also increase the reliability of the virtual currency data. To change the encryption scheme, it suffices to, for example, change the algorithm used in the encryption processing, change the key used in the encryption processing, or change both the algorithm and the key used in the encryption processing. Although a timing at which to change the scheme used to encrypt original data can be determined as appropriate by the user terminal encryption means, for example, the scheme used to encrypt original data can be changed each time processing that encrypts original data has been performed a predetermined number of times, or each time the date changes. According to the claimed invention, the user terminal encryption means is configured to change the scheme used to encrypt the original data every time the original data is encrypted. According to this configuration, the reliability of the virtual currency data will increase because each piece of virtual currency encryption data included in each virtual currency data issued by each user terminal will be encrypted by a different scheme. Note that, as described later, in a case where the user terminal encryption means in each user terminal is configured to change the encryption scheme at a predetermined timing, the management device is configured to be capable of ascertaining the encryption scheme that is executed when the user terminal encryption means of each user terminal encrypts original data into virtual currency encryption data, or is configured to be capable of performing processing that is the same as the encryption processing, or processing that decrypts virtual currency encryption data generated by the encryption processing. Thus, the management device is configured to be capable of making a determination as to whether or not virtual currency data issued at each user terminal is authentic. This ensures the appropriateness of the settlement using the virtual currency data.

The user terminal information processing means comprises a user terminal solution generating means that can continuously generate a solution that is formed by enumerating a predetermined number of at least one of characters, numbers, and symbols based on an initial solution that differs on a user terminal basis, with a solution generated under a same condition always being a same solution, and the user terminal encryption means may be configured to change a scheme used to encrypt the original data based on the solution that is provided from the user terminal solution generating means. If the user terminal includes such a user terminal information processing means, the user terminal encryption means will be able to change the encryption scheme by use of a method which has regularity but which is extremely difficult for a malicious third party to discover. As described later, in a case where the user terminal has the user terminal solution generating means, the management device includes a management device solution generating means that can generate the same solutions as the solutions generated by the respective user terminal solution generating means. Thus, the management device can ascertain the encryption scheme executed when the user terminal encryption means of each user terminal encrypts original data into virtual currency encryption data, or is capable of performing processing that is the same as the encryption processing, or processing that decrypts virtual currency encryption data generated by the encryption processing.

As described above, the user terminal encryption means included in the respective user terminals in the present invention changes the encryption scheme that is executed in order to convert original data to virtual currency encryption data.

As described later, in some cases the management device performs settlement processing. The settlement processing is processing in which the management device to which virtual currency data generated at a user terminal and passed to another device from the user terminal was retransmitted from the other device for requesting settlement accepts payment with the virtual currency data. Further, when accepting settlement, the management device confirms the authenticity of the virtual currency data issued by the user terminal. For this purpose, it is necessary for the management device to decrypt virtual currency data included in the virtual currency encryption data, or to subject original data which the management device possesses to encryption processing that is the same as the encryption processing performed by the user terminal. In such a case, aside from whether or not it is essential, it is at least convenient if the management device that received the virtual currency data can ascertain from the virtual currency data which user terminal generated the virtual currency data or under what condition(s) the virtual currency encryption data included in the virtual currency data which the management device received was encrypted by the user terminal encryption means.

In order to enable the management device to ascertain from the virtual currency data which user terminal generated the virtual currency data that the management device received, it suffices that, for example, the user terminal second information processing means is configured to add to the virtual currency encryption data a user ID specifying the user terminal that encrypted the virtual currency encryption data and to adopt the virtual currency encryption data with the user ID added as the virtual currency data.

In order to enable the management device to ascertain from the virtual currency data the condition(s) under which the virtual currency encryption data included in virtual currency data that the management device received was encrypted by the user terminal encryption means, it suffices that, for example, the user terminal second information processing means is configured to add, to the virtual currency encryption data, encryption condition data for specifying a condition of the encryption executed by the user terminal encryption means when the virtual currency encryption data was encrypted, and to adopt the virtual currency encryption data with the encryption condition data added as the virtual currency data.

The inventor of the present invention also proposes, as one aspect of the present invention, a management device constituting a virtual currency data issuing system as described above. The effect thereof is the same as the effect of the virtual currency data issuing system described above.

An example of the management device is as follows.

The management device according to the present invention is a management device that, in combination with a user terminal, constitutes a virtual currency data issuing system configured to include: the user terminal that generates virtual currency data that is data having a monetary value, and that comprises a user terminal input means that accepts input of information, a user terminal transmission and reception means that transmits and receives data via a predetermined network, and a user terminal information processing means that performs information processing, the user terminal being one of a plurality of user terminals each intended to be used by a user; and the management device that performs management of generation of the virtual currency data in the user terminal, and that comprises a management device transmission and reception means that transmits and receives data via the network, and a management device information processing means that performs information processing; the user terminal and the management device each being connectable to the network.

In the user terminal that is used in combination with the management device, the user terminal input means is configured to accept amount information that is information that specifies an amount of money to be paid with virtual currency data that a user desires to issue, and the user terminal information processing means comprises a user terminal first information processing means that attaches a user ID, which is information for distinguishing a user of the user terminal from a user of another user terminal and which differs on a user terminal basis, to the amount information accepted by the user terminal input means, and that causes the amount information with the user ID attached to be transmitted from the user terminal transmission and reception means to the management device via the network.

Further, in the management device, the management device transmission and reception means is configured to accept the amount information with the user ID attached from the user terminal; and the management device information processing means comprises: a credit determination unit that makes a determination as to whether the virtual currency data of an amount of money specified by the amount information with the user ID attached is to be issued for the user specified by the user ID accepted by the management device transmission and reception means, and that generates issuance permission information when it is made a determination the virtual currency data is to be issued for the user, and a management device first information processing means that causes the issuance permission information generated by the credit determination unit to be transmitted from the management device transmission and reception means via the network to the user terminal which sent the amount information.

Furthermore, in the user terminal, the user terminal transmission and reception means is configured to receive the issuance permission information from the management device; and the user terminal information processing means comprises: a user terminal encryption means that, when the user terminal transmission and reception means receives the issuance permission information, generates virtual currency encryption data by encrypting original data including the amount information using a scheme that is different to that used in another user terminal, and a user terminal second information processing means that generates virtual currency data including at least the virtual currency encryption data by adding necessary data to the virtual currency encryption data.

As described above, the management device in the present invention is configured so that, before the respective user terminals issue virtual currency data, the management device performs a determination regarding so-called "credit" that is a determination as to whether or not the respective user terminals may be suitable to issue virtual currency data. In addition, the management device in the present invention may be configured to perform a determination regarding settlement as described hereunder. An example of the management device that performs a determination regarding settlement is as follows.

The management device transmission and reception means of the management device is configured to accept, via the network, virtual currency data generated by any of the user terminals from the user terminal which generates the virtual currency data or from any device that received the virtual currency data by transfer directly or indirectly from the user terminal which generates the virtual currency data, and the management device information processing means comprises a settlement means that, when the virtual currency data accepted from the user terminal is authentic, accepts settlement of an amount of money specified by the amount information encrypted and included in virtual currency encryption data included in the virtual currency data with respect to a user of a device that is a transmitting source of the virtual currency data.

The management device that performs a determination as to whether or not to accept settlement receives virtual currency data from any device including a user terminal that generated the virtual currency data. The settlement means of the management device accepts settlement when it is accepted that the virtual currency encryption data included in the virtual currency data is authentic (or when it is accepted that the virtual currency data is authentic based thereon). Naturally, the important point in this case is what kind of condition is to be satisfied in order for virtual currency data to be accepted as authentic. In the present invention, configurations are adopted so as perform the determination in question according to two types of management devices.

These two types are described hereunder.

First, a first type of management device is configured, for example, as described in the following.

The management device information processing means of such a management device includes a management device decryption means for decrypting virtual currency encryption data included in the virtual currency data received by the management device transmission and reception means, and the settlement means is configured to accept the settlement by determining the virtual currency data in which the virtual currency encryption data is included to be authentic when the management device decryption means is able to decrypt the virtual currency encryption data.

The first type of management device includes a management device decryption means, and decrypts virtual currency encryption data by means of the management device decryption means. On the condition that the virtual currency data could be decrypted and restored to the original data, it is regarded that the authenticity of the virtual currency data could be proved. In this case, although information other than virtual currency encryption data that is included in the virtual currency data may be used for determining the authenticity of the virtual currency data, the authenticity of the virtual currency data is proved by the fact that the virtual currency encryption data could be decrypted. By setting whether or not decryption can be performed as an authentication condition, it is possible to increase the accuracy of confirmation of the authenticity of the virtual currency data executed by such a settlement device, and as a result, to increase the safety and reliability of virtual currency data utilized in combination with the settlement device. Note that, the reason that information other than the virtual currency encryption data included in the virtual currency data may be used for determining the authenticity of the virtual currency data similarly applies with regard to the second type of management device that is described later.

As mentioned above, in some cases, which do not fall within the scope of the claims, the user terminal encryption means may be configured to always encrypt the original data by the same scheme. In such a case, the management device decryption means is configured to always decrypt virtual currency encryption data by the same scheme when confirming the authenticity of virtual currency data generated by the same user terminal. In this case, when the user terminal encryption means of each user terminal converts original data into virtual currency encryption data, each user terminal encryption means uses only one encryption scheme, respectively, which is executed to convert the original data into virtual currency encryption data, and the management device ascertains all of the respective encryption schemes, and furthermore the management device decryption means thereof is configured to be capable of decrypting virtual currency encryption data that was encrypted by each of the user terminal encryption means, respectively, to thereby restore the original data.

In this connection, it is needless to say that a state is entered in which a large number of pieces of the virtual currency data exist at the same time, for example, within user terminals and the aforementioned other devices. Accordingly, in a case where the management device decryption means attempts to decrypt virtual currency data which the management device received from another device, as a general rule it is necessary for the management device to ascertain the encryption scheme which was used when the virtual currency encryption data which it is about to attempt to decrypt was encrypted by the user terminal encryption means.

Here, a case will be assumed in which, for instance, the user terminal encryption means of each user terminal executes encryption processing by different schemes to each other, but the encryption scheme executed by each user terminal encryption means is fixed to always the same scheme, respectively. In this case, when the user terminal encryption means of each user terminal converts original data into virtual currency encryption data, each user terminal encryption means uses only one encryption scheme, respectively, that is executed when performing such conversion, and the management device ascertains all of the encryption schemes, and furthermore the management device decryption means thereof is configured to be capable of decrypting virtual currency encryption data that was encrypted by each of the user terminal encryption means, respectively, to thereby restore the original data. However, even if the management device has such a management device decryption means, if the management device does not know which user terminal encrypted the virtual currency encryption data on which decryption is about to be performed, because the encryption schemes executed by the user terminal encryption means at the respective user terminals differ from each other, the management device decryption means cannot identify which scheme should be used to decrypt the virtual currency encryption data in question, and it will thus be difficult to perform decryption of the virtual currency encryption data. This problem is solved by use of the aforementioned user ID which is included in the virtual currency data by the user terminal second information processing means in the user terminal. By means of the user ID that is included in the virtual currency data along with the virtual currency encryption data, the management device can ascertain which user terminal the virtual currency encryption data that the management device decryption means is about to attempt to decrypt was encrypted at. Thus, the management device can know which scheme the relevant virtual currency encryption data used for encryption, and therefore decryption of the virtual currency encryption data is possible.

However, a user ID is not essential when the management device decrypts virtual currency encryption data using the management device decryption means thereof. Let us assume that a validated period of virtual currency data that is set in the virtual currency data issuing system in the present invention is comparatively short. For example, let us assume that a configuration is adopted in which settlement by virtual currency data is accepted only within a period of several weeks or, as a shorter period, for example, within five minutes from the time that the virtual currency data was generated. On the other hand, the management device ascertains all of the encryption schemes executed by the user terminal encryption means of the respective user terminals when virtual currency encryption data was encrypted for which there is a possibility of being included in virtual currency data for which the validated period has not expired. Although depending on the number of pieces of virtual currency data issued by the user terminals within the validated period, if the management device decryption means of the management device executes decryption scheme corresponding to all of the encryption schemes that were executed when virtual currency encryption data included in virtual currency data generated within the validated period was encrypted with respect to the one piece of virtual currency encryption data which the management device decryption means is attempting to decrypt by a brute force attack, as long as there is no fraudulence such as falsification in the virtual currency encryption data in question, the management device decryption means should be able to decrypt the virtual currency encryption data one time among the multiple times that execution of a decryption scheme is performed. In this case, from the viewpoint of the management device, because the virtual currency data for which authenticity should be confirmed, that is, the virtual currency encryption data that should be taken as an object on which to attempt decryption is only virtual currency encryption data generated within a preceding period of time corresponding to the length of time of the validated period, the number of pieces of virtual currency data is significantly less than in a case where there is no validated period. Naturally, if the aforementioned validated period is long, since the number of times the management device must perform decryption processing by the brute force attack will increase, the length of the validated period should be appropriately determined by taking into account the number of pieces of virtual currency data that will be generated within the validated period as well as the computing power of the management device that will perform the decryption processing. Furthermore, in the virtual currency data issuing system of the present invention, amount information and a user ID are sent from the user terminal to the management device in order to execute the aforementioned credit determination prior to each user terminal generating virtual currency data. Accordingly, in a case where certain virtual currency data is sent to the management device from another device that requests to make a settlement, the management device can ascertain each of the user terminals that issued virtual currency data for which the validated period has not expired based on the user IDs received in a predetermined time period in the past that corresponds to the validated period. If all of the encryption schemes executed by the user terminal encryption means of the user terminals specified by the aforementioned user IDs are executed with respect to the virtual currency encryption data included in the virtual currency data, it should be possible to decrypt the virtual currency data as long as there is no fraudulence such as falsification in the virtual currency encryption data.

As mentioned above, in an embodiment which does not fall within the scope of the claims, the user terminal encryption means may be configured to change the scheme used to encrypt the original data, at a predetermined timing. In such a case, the management device decryption means in the first type of management device is configured so that, when decrypting virtual currency encryption data included in the virtual currency data received by the management device transmission and reception means, the management device decryption means decrypts the virtual currency encryption data using a scheme corresponding to a scheme used when the virtual currency encryption data is encrypted.

In a case where the user terminal encryption means of the respective user terminals execute encryption processing by different scheme to each other, and the encryption scheme that is executed by each user terminal encryption means is changed at a predetermined timing, the management device ascertains all of the plurality or large number of encryption schemes that can be executed by the respective user terminal encryption means that are executed when the user terminal encryption means of each user terminal converts original data to virtual currency encryption data, and the management device decryption means of the management device is configured to be capable of decrypting virtual currency encryption data that was encrypted by each of the user terminal encryption means to thereby restore the virtual currency encryption data to the original data.

It will be assumed here that the management device is such a device. However, as mentioned above, even if the encryption scheme that is executed by the user terminal encryption means in each user terminal is only one kind of scheme that is always fixed, respectively, when the management device decryption means of the management device attempts to decrypt virtual currency encryption data that is included in virtual currency data sent to the management device, as a general rule it is necessary for the management device to ascertain the encryption scheme which was used when the virtual currency encryption data which it is about to attempt to decrypt was encrypted by the user terminal encryption means. More specifically, even if the encryption scheme that is executed by the user terminal encryption means in each user terminal is only one kind of scheme, as mentioned above, unless the management device can identify the user terminal that encrypted the virtual currency encryption data which it is about to attempt to decrypt, the management device cannot identify the scheme for decrypting the virtual currency encryption data. Further, if the user terminal encryption means changes the encryption scheme at a predetermined timing, as a general rule it is necessary that, in addition to ascertaining which user terminal encryption means encrypted the virtual currency encryption data which it is about to attempt to decrypt, the management device also ascertains which scheme was used to encrypt the virtual currency encryption data at the user terminal encryption means of the user terminal in question.

Among the aforementioned problems, the problem that the management device must ascertain which user terminal encryption means encrypted the virtual currency encryption data which it is about to attempt to decrypt is solved by use of the aforementioned user ID that is included in the virtual currency data by the user terminal second information processing means in the user terminal. Further, the problem that the management device must ascertain which scheme the user terminal encryption means of the relevant user terminal used to encrypt the virtual currency encryption data is solved by use of the aforementioned encryption condition data that is included in the virtual currency data by the user terminal second information processing means in the user terminal. The user ID enables the management device to identify the user terminal that encrypted the virtual currency encryption data which it is attempting to decrypt, and the encryption condition data enables the management device to identify the scheme that was used when the user terminal encryption means of the relevant user terminal encrypted the virtual currency encryption data. Thus, the management device can identify the scheme that was used when the virtual currency encryption data was encrypted, and hence the management device is also able to identify the decryption scheme. That is, the management device can decrypt the virtual currency encryption data using the management device decryption means thereof.

However, in the foregoing it has been described that in a case, which does not fall within the scope of the claims, where an encryption scheme that is executed by the user terminal encryption means is only one kind of scheme that is fixed, even if a user ID is not included in the virtual currency data, it is possible for the management device decryption means to perform decryption of the virtual currency encryption data by executing decryption processing on the virtual currency encryption data by the brute force attack. Similarly, even in a case where the user terminal encryption means in each user terminal is configured to change, at a predetermined timing, the encryption scheme to be executed, even if at least one of a user ID and encryption condition data is not included in the virtual currency data, it is possible for the management device decryption means to perform decryption of the virtual currency encryption data by executing decryption processing on the virtual currency encryption data by the brute force attack.

For example, a case will be assumed in which a user ID is included in the virtual currency data, but encryption condition data is not included therein. In this case, by means of the user ID included in the virtual currency data, the management device can ascertain which user terminal encrypted the virtual currency encryption data that is included in the virtual currency data. In this case, it is possible for the management device decryption means of the management device to perform decryption of the virtual currency encryption data by attempting to decrypt the virtual currency encryption by the brute force attack by using decryption scheme that correspond to the plurality of encryption scheme that can be executed by the user terminal encryption means of the user terminal that is specified by the user ID. If the validated period of the virtual currency data is short, the number of times that the management device decryption means should execute decryption processing by the brute force attack will be small.

For example, a case, which does not fall within the scope of the claims, will be assumed in which encryption condition data is included in the virtual currency data, but a user ID is not included therein. In this case, because there is no user ID, although the management device cannot ascertain which user terminal encrypted the virtual currency encryption data included in the virtual currency data, instead, by means of the encryption condition data included in the virtual currency data, the management device can ascertain a condition that identifies the scheme used when the virtual currency encryption data was encrypted by the user terminal encryption means. In this case, it is possible for the management device decryption means of the management device to perform decryption of the virtual currency encryption data by attempting to decrypt the virtual currency encryption data by the brute force attack by using decryption schemes that correspond to the plurality of encryption schemes that can be executed by the user terminal encryption means included in each user terminal under the condition identified by the encryption condition data. In this case also, if the validated period of the virtual currency data is short, the number of times that the management device decryption means should execute decryption processing by the brute force attack will be small. Further, in the virtual currency data issuing system of the present invention, in order to execute the aforementioned credit determination prior to the respective user terminals generating virtual currency data, amount information and a user ID are sent from the user terminal to the management device. Accordingly, in a case where certain virtual currency data is sent to the management device from another device that requests to make a settlement, the management device can ascertain the respective user terminals that issued virtual currency data for which the validated period has not expired based on the user IDs received in a predetermined time period in the past that corresponds to the validated period. Therefore, in a case where the management device performs, by the brute force attack, decryption that corresponds to encryption schemes identified by means of a condition that is specified by the encryption condition data, it will suffice to execute only decryption schemes corresponding to encryption schemes that are executed by the user terminal encryption means of the user terminal that is specified by the aforementioned user ID on the virtual currency encryption data that is included in the virtual currency data.

For example, a case, which does not fall within the scope of the claims, will be assumed in which neither encryption condition data nor a user ID is included in virtual currency data. In this case, because there is no user ID, the management device cannot ascertain which user terminal the virtual currency encryption data included in the virtual currency data was encrypted at, and because there is also no encryption condition data, the management device also cannot ascertain a condition that identifies the scheme used when the virtual currency encryption data was encrypted by the user terminal encryption means. In such a case, the management device decryption means of the management device attempts to decrypt the virtual currency encryption data using decryption schemes corresponding to all of the encryption schemes that can be executed in the user terminal encryption means of all of the user terminals by the brute force attack. It is thus possible to perform decryption of the virtual currency encryption data. In this case also, if the validated period of the virtual currency data is short, the number of times the management device decryption means should execute decryption processing by the brute force attack will be small. Further, as mentioned above, the decryption schemes which the management device decryption means of the management device attempts to use by the brute force attack can be limited to only decryption schemes which correspond to all of the encryption schemes that could be executed by the user terminal encryption means of the user terminal that sent the user ID and amount information to the management device at a past timing at which the virtual currency data in question was within the validated period.

According to the claimed invention, as mentioned above, the user terminal information processing means includes a user terminal solution generating means that can continuously generate a solution that is formed by enumerating a predetermined number of at least one of characters, numbers, and symbols based on an initial solution that differs for each of the user terminals, with a solution generated under the same condition always being the same solution. In such a case, the user terminal encryption means is configured to change a scheme used to encrypt the original data based on the solution that is provided from the user terminal solution generating means.

In a case where the user terminal is such a terminal, the management device information processing means in the management device includes a management device solution generating means that records initial solutions that are identical to initial solutions of the user terminals, respectively, and based on the solutions can generate the solution that is identical to the solution generated by the user terminal solution generating means of the user terminals, respectively. Further, the management device decryption means in the management device is configured to determine a scheme of decrypting the virtual currency encryption data based on the solution that is provided from the management device solution generating means.

This configuration can be regarded as one aspect of a case, which does not fall within the scope of the claims, where the user terminal encryption means of the user terminal changes an encryption scheme at a predetermined timing. Although the user terminal encryption means of each user terminal changes the encryption scheme, the user terminal encryption means changes the encryption scheme using a solution that is generated by the user terminal solution generating means in a manner such that a solution generated under the same condition is always the same solution. For example, the user terminal encryption means is configured to always use the same algorithm as an algorithm for executing encryption processing, and can use the aforementioned solution as it is as a key for executing encryption processing or can use a result obtained after performing a predetermined arithmetic operation on the aforementioned solution. By changing the solution that is used as the key, it is possible for the user terminal encryption means to change the encryption scheme. However, the solution may also be used to change the algorithm which the user terminal encryption means uses for executing the encryption processing.

In a case where the user terminal is configured to change the encryption scheme based on a solution, as long as the management device is configured to be capable of generating the same solution as the solution generated at the respective user terminals, the management device can decrypt virtual currency encryption data that was encrypted by the user terminal encryption means of the respective user terminals. In the management device, the management device solution generating means is provided for generating solutions that are the same as the solutions generated at the respective user terminals.

For example, the user terminal solution generating means and the management device solution generating means may be configured to generate an initial solution by substituting into a mathematical expression that includes the time of day at that time point as a variable. By this means, the user terminal solution generating means in two independent devices that are at separate locations to each other, and the management device solution generating means can generate synchronized solutions. This is close to a scheme of synchronization referred to as "time synchronization" that is already in practical use in the form of tokens or the like that are being practically applied in a wide range of fields such as Internet banking.

On the other hand, as a technique for generating a solution at the user terminal solution generating means and at the management device solution generating means, for example, a technique can be adopted that obtains a new solution by substituting a past solution into a predetermined mathematical expression, and then substitutes the obtained solution into the same mathematical expression to obtain a new solution. This is close to a scheme of synchronization referred to as "event synchronization" that is already in practical use in the form of tokens or the like as mentioned above. In a case where event synchronization is adopted, a configuration is adopted so that solutions generated by the user terminal solution generating means and solutions generated by the management device solution generating means are the same when solutions that are generated in the same sequential order are compared with each other. For example, the user terminal solution generating means and the management device solution generating means may be configured to generate solutions by an algorithm which generates a next solution by means of a function $X_{n+1} = f(X_n)$, in which "X" is taken as the solution.

In this case, the user terminal solution generating means and the management device solution generating means may be configured to retain the most recently created solution, and to delete all of the solutions generated prior to the most recently created solution. That is, it is possible to configure the user terminal solution generating means and the management device solution generating means to retain only the solution that is required for generating the next solution. In this case, if the user terminal solution generating means and the management device solution generating means are to generate, for example, a 4th solution, the user terminal solution generating means and the management device solution generating means generate the 4th solution by substituting $X_3$ that is a 3rd solution which is retained by the user terminal solution generating means and the management device solution generating means into the expression $X_{n+1} = f(X_n)$ so as to obtain $X_4 = f(X_3)$. Note that, if a mathematical expression that uses a plurality of past solutions such as, for example, $X_{n+1} = f(X_n)+f(X_{n-1})$ is to be used, the solutions which the user terminal solution generating means and the management device solution generating means should retain are the two solutions which were used most recently. Thus, the number of solutions to be used by the user terminal solution generating means and the management device solution generating means in order to generate a new solution is not necessarily limited to one. Further, the number of initial solutions in this case is two. Thus, in some cases the number of initial solutions is not limited to one solution, and may be a plurality of solutions.

The user terminals have the respective initial solutions at least at the initial time point at which each user terminal is used, and the management device has the initial solutions which are being retained by all of the user terminals at least at the initial time point at which the management device is used. Therefore, the management device can generate solutions that are the same as solutions generated by a plurality or a large number of user terminals, and thus all of the pieces of virtual currency encryption data generated by the plurality or large number of user terminals can be decrypted by the management device decryption means thereof.

Note that, the solution itself or information for specifying the solution is an example of the aforementioned encryption condition data.

The second type of management device is configured, for example, as described hereunder.

The management device information processing means of the management device includes: a management device encryption means that generates encryption data for confirmation by encrypting original data that is identical to original data encrypted at the user terminal, that includes the amount information that is received by the management device transmission and reception means, and a determining means that compares virtual currency encryption data included in the virtual currency data received by the management device transmission and reception means with the encryption data for confirmation that is generated by the management device encryption means, and determines that the virtual currency data in which the virtual currency encryption data is included is authentic when both of the data coincide with each other; and the settlement means is configured to accept the settlement when the determining means determines that the virtual currency data is authentic.

The second type of management device includes a management device encryption means. The management device encryption means is configured to generate encryption data for confirmation by encrypting original data that is identical to original data encrypted at the user terminal. When the second type of management device received virtual currency data that has been sent to request to make a settlement, the virtual currency encryption data included in the virtual currency data and the encryption data for confirmation generated by the management device encryption means are compared by the determining means, and when both of the data coincide with each other, the determining means determines that the virtual currency data in which the virtual currency encryption data in question is included is authentic. In this management device, the settlement is accepted when the determining means determines that the virtual currency data is authentic.

In the first type of management device, a configuration is adopted in which, as mentioned above, it is regarded that the authenticity of the virtual currency data is proved by the fact that the virtual currency encryption data could be decrypted. In contrast, in the second type of management device, the authenticity of the virtual currency data is proved by the fact that virtual currency encryption data that is the same as virtual currency encryption data included in the virtual currency data sent from the aforementioned other device could be generated based on original data which the management device has. Note that, the original data which the management device has may be all the data constituting the original data that is sent from the user terminal. Alternatively, the amount information in the original data may be sent to the management device from the user terminal as described above, and data other than the amount information in the original data may be generated inside the management device or may be obtained by the management device from a source other than the user terminal.

By setting whether or not virtual currency encryption data (encryption data for confirmation) that is the same as the virtual currency encryption data generated by the user terminal can also be generated by the management device as an authentication condition, it is possible to increase the accuracy of confirmation of the authenticity of the virtual currency data executed by such a settlement device, and as a result, to increase the safety and reliability of virtual currency data utilized in combination with the settlement device.

As mentioned above, the second type of management device is configured to compare virtual currency encryption data included in virtual currency data that is sent to request to make a settlement and encryption data for confirmation (which may be a plurality of pieces of encryption data in some cases), and to thereby determine the authenticity of the virtual currency data based on whether or not the virtual currency encryption data and (at least one piece of) the encryption data for confirmation coincide.

It suffices that the encryption data for confirmation that is used for confirming the authenticity of the virtual currency data is generated before a determination as to the authenticity of the aforementioned virtual currency encryption data is performed by the determining means of the management device, and there are two timings that are representative of the timing of generating the encryption data for confirmation.

In some cases the second type of management device generates encryption data for confirmation after virtual currency data that has been sent to request to make a settlement is received. The management device information processing means in such a management device includes a first recording means that records original data that is identical to original data encrypted at the user terminal that includes the amount information that is received by the management device transmission and reception means, and the management device encryption means is configured so that, when the virtual currency data is received by the management device transmission and reception means, the management device encryption means reads, from the first recording means, original data that is identical to data serving as an origin of the virtual currency encryption data included in the virtual currency data, and encrypts the original data that is read. That is, the management device is configured to record original data generated using amount information that was sent thereto for the aforementioned credit determination in the first recording means, for example, at the same time as or immediately after performing the credit determination (that is, independently of a timing at which virtual currency data is received from another device), and when it becomes necessary to perform a determination as to the authenticity of virtual currency data, to encrypt the original data and adopt the resulting data as encryption data for confirmation, and the determining means of the management device compares the generated encryption data for confirmation and the virtual currency encryption data that is included in the virtual currency data that is sent to request to make a settlement.

Further, in some cases the second type of management device generates the encryption data for confirmation in advance prior to receiving virtual currency data that has been sent to request to make a settlement, that is, independently of the timing at which virtual currency data is received from another device. The management device information processing means in such a management device includes a second recording means that records the encryption data for confirmation, and the determining means is configured so that, when the management device transmission and reception means receives the virtual currency data, the determining means compares encryption data for confirmation that is recorded in the second recording means with virtual currency encryption data included in the virtual currency data that the management device transmission and reception means receives, and determines that the virtual currency data in which the virtual currency encryption data is included is authentic when the encryption data for confirmation that is identical to the virtual currency encryption data is recorded in the second recording means. That is, the management device encrypts original data generated using amount information that was sent thereto for the aforementioned credit determination, for example, at the same time as or immediately after performing the credit determination and adopts the resulting data as encryption data for confirmation, and records the encryption data for confirmation that was generated in the second recording means, and subsequently, when it becomes necessary to perform a determination as to the authenticity of virtual currency data, the determining means compares the encryption data for confirmation from the second recording means and virtual currency encryption data included in the virtual currency data that has been sent to request to make a settlement.

As mentioned above, in some cases, which are not covered by the claims, the user terminal encryption means is configured to always encrypt the original data by the same scheme. In such a case, the management device encryption means is configured to always encrypt the original data by the same scheme when confirming the authenticity of virtual currency data that was generated by the same user terminal. In this case, when the user terminal encryption means of each user terminal converts original data into virtual currency encryption data, each user terminal encryption means executes only one encryption scheme, respectively, and the management device ascertains all of the encryption schemes, and furthermore the management device encryption means thereof is configured to be capable of encrypting original data that is the same as original data encrypted by each user terminal encryption means and to be capable of generating virtual currency encryption data that is the same as the virtual currency encryption data generated at each user terminal.

In this connection, when the second type of management device is used in the virtual currency data issuing system also, similarly to when the first type of management device is used in the virtual currency data issuing system, a state is entered in which a large number of pieces of the virtual currency data exist at the same time, for example, within the user terminals and the aforementioned other devices. Accordingly, in a case where the management device encryption means of the management device attempts to encrypt original data which the management device has, in order to confirm the authenticity of virtual currency data which has been sent to the management device to request to make a settlement, as a general rule it is necessary for the management device to ascertain the encryption scheme which was used when the original data which the management device encryption means is about to attempt to encrypt was encrypted by the user terminal encryption means. This is a problem that is common in nature with the problem that "in a case where the management device decryption means attempts to decrypt virtual currency data which the management device received from another device, as a general rule it is necessary for the management device to ascertain the encryption scheme which was used when the virtual currency encryption data which it is about to attempt to decrypt was encrypted by the user terminal encryption means" that arises when the first type of management device is used.

Here, a case, which is not covered by the claims, will be assumed in which, for instance, although the user terminal encryption means of each user terminal executes encryption processing by different schemes to each other, the encryption scheme that is executed by each user terminal encryption means is fixed to always the same scheme. In this case, the user terminal encryption means of each user terminal executes only one encryption scheme, respectively, when converting original data into virtual currency encryption data, and the management device ascertains all of the encryption schemes, and furthermore the management device encryption means thereof is configured so that, by executing encryption processing using the same scheme as the scheme executed at each user terminal encryption means, respectively, the management device encryption means can generate encryption data for confirmation that is the same as the virtual currency encryption data generated by each user terminal, based on original data that is the same as the original data encrypted by the user terminal. However, even if the management device has such a management device encryption means, if the management device does not know which user terminal encrypted the original data on which encryption is about to be performed, because the encryption schemes executed by the user terminal encryption means at the respective user terminals differ from each other, the management device encryption means cannot identify which scheme should be used to encrypt the original data in question, and it will thus be difficult to correctly encrypt the original data. Here, the phrase "correctly encrypt the original data" means that by encrypting original data that is the same as the original data encrypted by the user terminal, using a scheme that is identical to the scheme performed by the user terminal, the encryption data for confirmation generated by the management device is the same as the virtual currency encryption data generated by the user terminal. Although not applying to a case where, for example, upon the receipt of a user ID and amount information from a user terminal, encryption data for confirmation is immediately generated and recorded in the second recording means, in the case of a settlement device having the first recording means which records a large number of pieces of original data in particular, the question of which original data to select as an object to be encrypted by the management device encryption means can also become a problem. This problem is solved by using the aforementioned user ID that is included in the virtual currency data by the user terminal second information processing means in the user terminal. By means of the user ID that is included in the virtual currency data together with the virtual currency encryption data, among the following two questions, namely, which original data should be encrypted, and which scheme to use to encrypt the original data that the management device is about to attempt to encrypt, the management device can know at least the answer to the latter question, and hence the user ID is advantageous for correctly encrypting the virtual currency encryption data.

However, a user ID is not essential in a case where the management device encrypts original data using the management device encryption means thereof. This is similar to the situation regarding the first type of management device. For example, if a validated period of virtual currency data that is set in the virtual currency data issuing system is comparatively short, in the second type of management device also, similarly to the case of the first type of management device, by encrypting original data by the brute force attack approach, it is possible to correctly encrypt the original data, in other words, so as to obtain virtual currency encryption data that is the same as the virtual currency encryption data generated by the user terminal as a result. That is, if the management device encryption means of the management device executes all encryption schemes which were potentially executed when original data that served as the origin of virtual currency encryption data which is possibly included in virtual currency data for which the validated period has not expired, for example, on one piece of original data that the management device encryption means is attempting to encrypt, by the brute force attack, it should be possible to correctly encrypt the original data one time among the plurality of times that the encryption schemes are executed. Further, in the virtual currency data issuing system of the present invention, before the respective user terminals generate virtual currency data, the management device receives amount information and a user ID from the relevant user terminal in order to execute the aforementioned credit determination. Accordingly, in a case where certain virtual currency data is sent to the management device from another device that requests to make a settlement, the management device can ascertain the user terminals with respect to which there is a possibility that the respective user terminals issued the virtual currency data for which the validated period has not expired based on the user IDs received via the network in a predetermined time period in the past. Taking the above situation into consideration, it is sufficient for the determining means of the management device to take only encryption data for confirmation that corresponds to virtual currency encryption data for which there is a possibility that the data was generated in a period corresponding to the validated period as the objects for comparison with virtual currency encryption data included in the virtual currency data that was sent to request to make a settlement.

As mentioned above, in a case not covered by the claims, the user terminal encryption means may be configured to change a scheme used to encrypt the original data, at a predetermined timing. In this case, the management device encryption means in the second type of management device is configured so that, when encrypting the original data, the management device encryption means encrypts the original data by the same scheme as the scheme used when original data that is identical to the original data is encrypted by the user terminal encryption means.

In a case, not covered by the claims, where the user terminal encryption means of the respective user terminals execute encryption processing by different schemes to each other, and the encryption scheme that is executed by each user terminal encryption means is changed at a predetermined timing, the management device ascertains all of the plurality or large number of encryption schemes that can be executed by the respective user terminal encryption means that are executed when the user terminal encryption means of each user terminal converts original data to virtual currency encryption data, and the management device encryption means of the management device is configured to be capable of executing encryption processing that is executed when original data is encrypted into virtual currency encryption data by each user terminal encryption means, and thus is configured so as to be capable of generating, from original data that is the same as original data encrypted by the user terminal, encryption data for confirmation that is the same as virtual currency encryption data that is generated by encrypting the original data at the user terminal.

It will be assumed here that the management device is such a device. However, in the management device according to the second pattern also, similar problems to the case of the management device according to the first pattern arise. That is, even if the encryption scheme that is executed by the user terminal encryption means in each user terminal is only one kind of scheme that is always fixed, respectively, in order to generate encryption data for confirmation that is the same as virtual currency encryption data included in virtual currency data sent to the management device based on original data that served as the origin of the virtual currency encryption data in question, as a general rule it is necessary for the management device to identify which user terminal was the user terminal that encrypted the original data, and in addition, if the encryption scheme used by the user terminal encryption means is changed at a predetermined timing, it is also necessary for the management device to ascertain the encryption scheme which was used when the original data was encrypted by the user terminal encryption means. Furthermore, as mentioned above, a case may also arise in which it is necessary to select which original data should be taken as an object to be encrypted.

Among the aforementioned problems, the solution to the problem that the management device must ascertain which user terminal encryption means encrypted the virtual currency encryption data which the management device is attempting to encrypt is the aforementioned user ID that is included in the virtual currency data by the user terminal second information processing means in the user terminal. Further, the solution to the problem that the management device must ascertain which scheme the user terminal encryption means of the relevant user terminal used to encrypt the virtual currency encryption data is the aforementioned encryption condition data that is included in the virtual currency data by the user terminal second information processing means in the user terminal. There is no difference with regard to the user ID, the encryption condition data, and the scheme used as well as the effect between the management device according to the first pattern and the management device according to the second pattern. The only difference is whether the aforementioned items are used for decrypting virtual currency encryption data or are used for encrypting original data. For example, the user terminal second information processing means may be configured to add to the virtual currency encryption data, encryption condition data for specifying a condition of encryption executed by the user terminal encryption means when the virtual currency encryption data is encrypted, and to adopt the virtual currency encryption data to which the encryption condition data is added as the virtual currency data, and the management device encryption means in this case may be configured so that, when encrypting the original data, the management device encryption means determines a scheme of encrypting the original data according to the encryption condition data that is included in the virtual currency data together with the virtual currency encryption data.

However, in the management device according to the first pattern, by adopting the brute force attack approach, it is possible to decrypt virtual currency encryption data even without using at least one of a user ID and encryption condition data. Similarly, in the management device according to the second pattern also, it is possible to correctly encrypt original data even without using at least one of a user ID and encryption condition data.

According to the claimed invention, as mentioned above, the user terminal information processing means includes a user terminal solution generating means that can continuously generate a solution that is formed by enumerating a predetermined number of at least one of characters, numbers, and symbols based on an initial solution that differs for each of the user terminals, with a solution generated under the same condition always being the same solution. In such a case, the user terminal encryption means is configured to change a scheme used to encrypt the original data based on the solution that is provided from the user terminal solution generating means.

In a case where the user terminal is such a terminal, the management device information processing means in the management device includes a management device solution generating means that records initial solutions that are identical to initial solutions of the user terminals, respectively, and based on the solutions can generate the solution that is identical to the solution generated by the user terminal solution generating means of the user terminals, respectively, and the management device encryption means is configured to determine a scheme of encrypting the original data based on the solution that is provided from the management device solution generating means.

This can be regarded as one aspect of a case where the user terminal encryption means of the user terminal changes the encryption scheme at a predetermined timing. Although the user terminal encryption means of each user terminal changes the encryption scheme, the user terminal encryption means changes the encryption scheme using a solution generated by the user terminal solution generating means in a manner such that a solution generated under the same condition is always the same solution. In a case where the user terminals are configured to change an encryption scheme based on a solution, if the management device is configured to be capable of generating a solution that is the same as a solution generated at the respective user terminals, the management device can generate, from original data that is the same as the original data encrypted at the respective user terminals, encryption data for confirmation that is the same as virtual currency encryption data obtained when original data is encrypted by the user terminal encryption means of the respective user terminals. A scheme used for generating a solution in the management device solution generating means in the management device according to the second pattern may be the same as mentioned with respect to the first pattern. Further, with regard to the scheme that uses the solution, there is no difference between the management device according to the first pattern and the management device according to the second pattern apart from the point regarding whether the scheme is used for decryption of virtual currency encryption data or is used for encryption of original data.

The inventor of the present invention also proposes, as one aspect of the present invention, a method that is executed by a user terminal constituting a virtual currency data issuing system as described above. The effect thereof is the same as the effect of the user terminal described above.

An example of the method that is executed by a user terminal is as follows.

The method is a method which is executed by a user terminal information processing means of a user terminal that, in combination with a management device, constitutes a virtual currency data issuing system configured to include: the user terminal that generates virtual currency data that is data having a monetary value, and that comprises a user terminal input means that accepts input of information, a user terminal transmission and reception means that transmits and receives data via a predetermined network, and a user terminal information processing means that performs information processing, the user terminal being one of a plurality of user terminals each intended to be used by a user; and the management device that performs management of generation of the virtual currency data in the user terminal, and that comprises a management device transmission and reception means that transmits and receives data via the network, and a management device information processing means that performs information processing; with the user terminal and the management device each being connectable to the network.

This method includes: a step of accepting, by means of the user terminal input means, amount information that is information that specifies an amount of money to be paid with virtual currency data that a user desires to issue; and a step of attaching a user ID, which is information for distinguishing each user of the user terminals from a user of another user terminal and which differs on a user terminal basis to the amount information accepted by the user terminal input means, and causing the amount information with the user ID attached to be transmitted from the user terminal transmission and reception means to the management device via the network; with the step of accepting amount information and the step of attaching a user ID being executed by the user terminal information processing means.

In the management device that is combined with the user terminal executing this method, the management device transmission and reception means is configured to accept the amount information with the user ID attached from the user terminal; and the management device information processing means includes: a credit determination unit that makes a determination as to whether the virtual currency data of an amount of money specified by the amount information with the user ID attached is to be issued for the user specified by the user ID accepted by the management device transmission and reception means, and that generates issuance permission information when it is made a determination the virtual currency data is to be issued for the user, and a management device first information processing means that causes the issuance permission information generated by the credit determination unit to be transmitted from the management device transmission and reception means via the network to the user terminal which sent the amount information.

This method further includes: a step of receiving the issuance permission information from the management device by means of the user terminal transmission and reception means; a step of, when the user terminal transmission and reception means receives the issuance permission information, generating virtual currency encryption data by encrypting original data including the amount information using a scheme that is different from that used in another user terminal; and a step of generating virtual currency data including at least the virtual currency encryption data by adding necessary data to the virtual currency encryption data; the step of receiving the issuance permission information, the step of generating virtual currency encryption data, and the step of generating virtual currency data being executed by the user terminal information processing means.

The inventor of the present invention also proposes, as one aspect of the present invention, a computer program for causing, for example, a general-purpose computer to function as a user terminal information processing means of a user terminal constituting a virtual currency data issuing system as described above. For example, the computer program is as follows.

The computer program is a computer program for causing a predetermined computer to function as a user terminal information processing means of a user terminal that, in combination with a management device, constitutes a virtual currency data issuing system configured to include: the user terminal that generates virtual currency data that is data having a monetary value, and that comprises a user terminal input means that accepts input of information, a user terminal transmission and reception means that transmits and receives data via a predetermined network, and the user terminal information processing means that performs information processing, the user terminal being one of a plurality of user terminals each intended to be used by a user; and the management device that performs management of generation of the virtual currency data in the user terminal, and that comprises a management device transmission and reception means that transmits and receives data via the network, and a management device information processing means that performs information processing; with the user terminal and the management device each being connectable to the network.

Further, the computer program causes the computer to execute a step of accepting, by means of the user terminal input means, amount information that is information that specifies an amount of money to be paid with virtual currency data that a user desires to issue; and a step of attaching a user ID, which is information for distinguishing each user of the user terminals from a user of another user terminal and which differs on a user terminal basis to the amount information accepted by the user terminal input means, and causing the amount information with the user ID attached to be transmitted from the user terminal transmission and reception means to the management device via the network.

Furthermore, in the management device that is used in combination with the user terminal having the user terminal information processing means that is realized by the computer program, the management device transmission and reception means is configured to accept the amount information with the user ID attached from the user terminal, and the management device information processing means includes: a credit determination unit that makes a determination as to whether the virtual currency data of an amount of money specified by the amount information with the user ID attached is to be issued for the user specified by the user ID accepted by the management device transmission and reception means, and that generates issuance permission information when it is made a determination the virtual currency data is to be issued for the user; and a management device first information processing means that causes the issuance permission information generated by the credit determination unit to be transmitted from the management device transmission and reception means via the network to the user terminal which sent the amount information.

Further, the computer program also causes the computer to execute: a step of receiving the issuance permission information from the management device by means of the user terminal transmission and reception means; a step of, when the user terminal transmission and reception means receives the issuance permission information, generating virtual currency encryption data by encrypting original data including the amount information using a scheme that is different from that used in another user terminal, and a step of generating virtual currency data including at least the virtual currency encryption data by adding necessary data to the virtual currency encryption data.

The inventor of the present invention also proposes, as one aspect of the present invention, a method that is executed by a management device constituting a virtual currency data issuing system as described above. The effect thereof is the same as the effect of the management device described above.

An example of the method that is executed by a management device is as follows.

The method is a method which is executed by a management device information processing means of a management device that, in combination with a user terminal, constitutes a virtual currency data issuing system configured to include: the user terminal that generates virtual currency data that is data having a monetary value, and that comprises a user terminal input means that accepts input of information, a user terminal transmission and reception means that transmits and receives data via a predetermined network, and a user terminal information processing means that performs information processing, the user terminal being one of a plurality of user terminals each intended to be used by a user; and the management device that performs management of generation of the virtual currency data in the user terminal, and that comprises a management device transmission and reception means that transmits and receives data via the network, and a management device information processing means that performs information processing; with the user terminal and the management device each being connectable to the network.

In the user terminal that is combined with the management device executing this method, the user terminal input means is configured to accept amount information that is information that specifies an amount of money to be paid with virtual currency data that a user desires to issue, and the user terminal information processing means comprises a user terminal first information processing means that attaches a user ID, which is information for distinguishing each user of the user terminals from a user of another user terminal and which differs on a user terminal basis, to the amount information accepted by the user terminal input means, and that causes the amount information with the user ID attached to be transmitted from the user terminal transmission and reception means to the management device via the network.

Further, this method includes: a step of accepting, by means of the management device transmission and reception means, the amount information with the user ID attached from the user terminal; a step of making determination as to whether the virtual currency data of an amount of money specified by the amount information with the user ID attached is to be issued for the user specified by the user ID accepted by the management device transmission and reception means, and generating issuance permission information when it is made a determination the virtual currency data is to be issued for the user; and a step of causing the issuance permission information to be transmitted from the management device transmission and reception means via the network to the user terminal which sent the amount information; with each of the steps being executed by the management device information processing means.

In the user terminal that is combined with the management device executing this method, the user terminal transmission and reception means is configured to receive the issuance permission information from the management device; and the user terminal information processing means comprises: a user terminal encryption means that, when the user terminal transmission and reception means receives the issuance permission information, generates virtual currency encryption data by encrypting original data including the amount information using a scheme that is different from that used in another user terminal, and a user terminal second information processing means that generates virtual currency data including at least the virtual currency encryption data by adding necessary data to the virtual currency encryption data.

The inventor of the present invention also proposes, as one aspect of the present invention, a computer program for causing, for example, a general-purpose computer to function as a management device information processing means of a management device constituting a virtual currency data issuing system as described above. For example, the computer program is as follows.

The computer program is a computer program for causing a predetermined computer to function as a management device information processing means of a management device that, in combination with a user terminal, constitutes a virtual currency data issuing system configured to include: the user terminal that generates virtual currency data that is data having a monetary value, and that comprises a user terminal input means that accepts input of information, a user terminal transmission and reception means that transmits and receives data via a predetermined network, and a user terminal information processing means that performs information processing, the user terminal being one of a plurality of user terminals each intended to be used by a user; and the management device that performs management of generation of the virtual currency data in the user terminal, and that comprises a management device transmission and reception means that transmits and receives data via the network, and the management device information processing means that performs information processing; with the user terminal and the management device each being connectable to the network.

In the user terminal that is used in combination with the management device having the management device information processing means that is realized by the computer program, the user terminal input means is configured to accept amount information that is information that specifies an amount of money to be paid with virtual currency data that a user desires to issue, and the user terminal information processing means comprises a user terminal first information processing means that attaches a user ID, which is information for distinguishing each user of the user terminals from a user of another user terminal and which differs on a user terminal basis, to the amount information accepted by the user terminal input means, and that causes the amount information with the user ID attached to be transmitted from the user terminal transmission and reception means to the management device via the network.

Further, the computer program causes the computer to execute: a step of accepting, by means of the management device transmission and reception means, the amount information with the user ID attached from the user terminal; a step of making determination as to whether the virtual currency data of an amount of money specified by the amount information with the user ID attached is to be issued for the user specified by the user ID accepted by the management device transmission and reception means, and generating issuance permission information when it is made a determination the virtual currency data is to be issued for the user; and a step of causing the issuance permission information to be transmitted from the management device transmission and reception means via the network to the user terminal which sent the amount information.

Furthermore, in the user terminal that is used in combination with the management device having the management device information processing means that is realized by the computer program, the user terminal transmission and reception means is configured to receive the issuance permission information from the management device, and the user terminal information processing means comprises: a user terminal encryption means that, when the user terminal transmission and reception means receives the issuance permission information, generates virtual currency encryption data by encrypting original data including the amount information using a scheme that is different from that used in another user terminal; and a user terminal second information processing means that generates virtual currency data including at least the virtual currency encryption data by adding necessary data to the virtual currency encryption data.

**Brief Description of Drawings**

FIG. 1 is a diagram showing an overall configuration of a settlement system according to a first embodiment;
FIG. 2 is a diagram showing an external appearance of a user terminal included in the settlement system shown in FIG. 1;
FIG. 3 is a diagram showing a configuration of hardware of the user terminal included in the settlement system shown in FIG. 1;
FIG. 4 is a block diagram showing functional blocks generated inside the user terminal included in the settlement system shown in FIG. 1;
FIG. 5 is a diagram showing a configuration of hardware of a settlement device included in the settlement system shown in FIG. 1;
FIG. 6 is a block diagram showing functional blocks generated inside the settlement device included in the settlement system shown in FIG. 1;
FIG. 7 is a diagram showing a configuration of hardware of a settlement terminal included in the settlement system shown in FIG. 1;
FIG. 8 is a block diagram showing functional blocks generated inside the settlement terminal included in the settlement system shown in FIG. 1;
FIG. 9 is a diagram showing a flow of a process to be executed at the time of settlement on the settlement system shown in FIG. 1;
FIG. 10 is a diagram showing an example of an image displayed on a display of the user terminal included in the settlement system shown in FIG. 1;

FIG. 11 is a diagram conceptually showing the content of a part of data recorded in a credit information recording unit in the settlement device included in the settlement system shown in FIG. 1;

FIG. 12 is a diagram showing another example of the image displayed on the display of the user terminal included in the settlement system shown in FIG. 1;

FIG. 13 is a block diagram showing an example of functional blocks generated inside a settlement device included in a settlement system of Modification Example 1;

FIG. 14 is a block diagram showing functional blocks generated inside a user terminal included in a settlement system of Modification Example 2;

FIG. 15 is a block diagram showing functional blocks generated inside a settlement device included in the settlement system of Modification Example 2;

FIG. 16 is a block diagram showing another example of the functional blocks generated inside the settlement device included in the settlement system of Modification Example 2;

FIG. 17 is a block diagram showing another example of the functional blocks generated inside the settlement device included in the settlement system of Modification Example 2;

FIG. 18 is a block diagram showing functional blocks generated inside a settlement device included in a settlement system of a second embodiment;

FIG. 19 is a diagram showing a flow of a process to be executed at the time of settlement on the settlement system of the second embodiment;

FIG. 20 is a block diagram showing functional blocks generated inside a settlement device included in a settlement system of Modification Example 3;

FIG. 21 is a block diagram showing functional blocks generated inside a settlement device included in a settlement system of a third embodiment;

FIG. 22 is a diagram showing a flow of a process to be executed at the time of settlement on the settlement system of the third embodiment; and

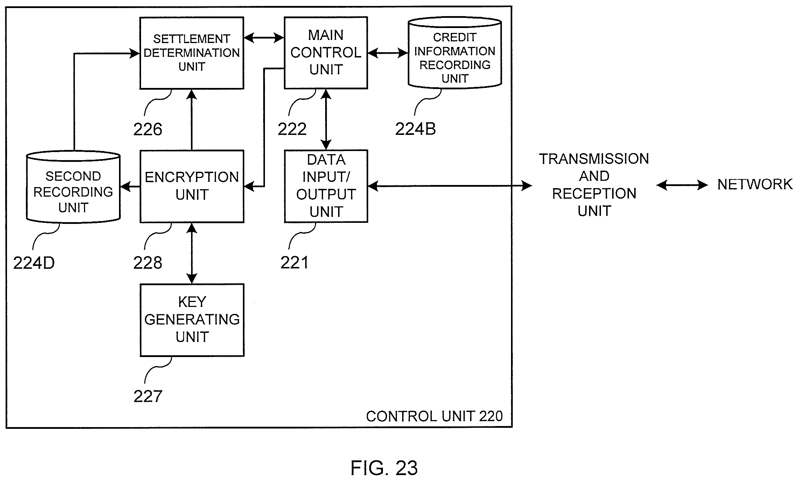

FIG. 23 is a block diagram showing functional blocks generated inside a settlement device included in a settlement system of Modification Example 4.

**Description of Embodiments**

First to third embodiments of the present invention will be described below. In the description of each of the embodiments and modification examples thereof, the same element is represented by the same reference numeral and duplicative description will not be presented in some cases.

Unless there is a particular contradiction, each embodiment and each modification example can be combined with each other.

<<First Embodiment>>

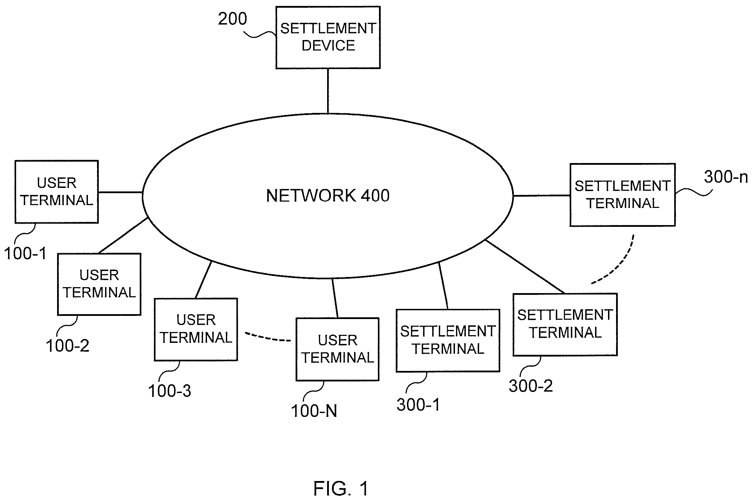

FIG. 1 schematically shows an overall configuration of a settlement system according to a first embodiment.

The settlement system is configured to include a plurality of user terminals 100-1 to 100-N (which may also hereinafter simply be described as "user terminal 100."), a settlement device 200, and a plurality of settlement terminals 300-1 to 300-n (which may also hereinafter simply be described as "settlement terminal 300."). These are all connectable to a network 400.

The network 400 is the Internet in this embodiment without being limited thereto.

The user terminal 100 corresponds to an example of the user terminal according to the present invention, the settlement terminal 300 corresponds to an example of another device, and the settlement device 200 corresponds to an example of a management device according to the present invention.

Although not limited thereto, in this embodiment, payment of money using virtual currency data described below is, in principle, performed on an administrator (who manages or owns the settlement terminal 300, for example) of the settlement terminal 300 from an administrator (generally, owner) of the user terminal 100, and is performed on an administrator of another user terminal 100 from an administrator of one user terminal 100 in some cases.

Normally, the user terminal 100 is possession of each user. The user terminal 100 includes a computer. The user terminal 100 is a general-purpose mobile phone, a smartphone, a tablet, a notebook computer, a desktop computer, or the like. Among them, the smartphone or the tablet is particularly preferable for use as the user terminal 100, considering that the smartphone or the tablet is portable and suitable for installation of computer programs to be described below. The smartphone is, for example, an iPhone that is manufactured and sold by Apple Japan, LLC. An example of the tablet is an iPad that is manufactured and sold by Apple Japan, LLC. Hereinafter, the description is made assuming that the user terminal 100 is the smartphone, but is not limited thereto.

The user terminal 100 at least needs to be capable of transmitting and receiving data. In this embodiment, since the user terminal 100 is the smartphone, it is naturally possible to transmit and receive data.

A configuration of the user terminal 100 will be described below. Each of the user terminals 100-1 to 100-N has the same configuration in relation to the present invention.

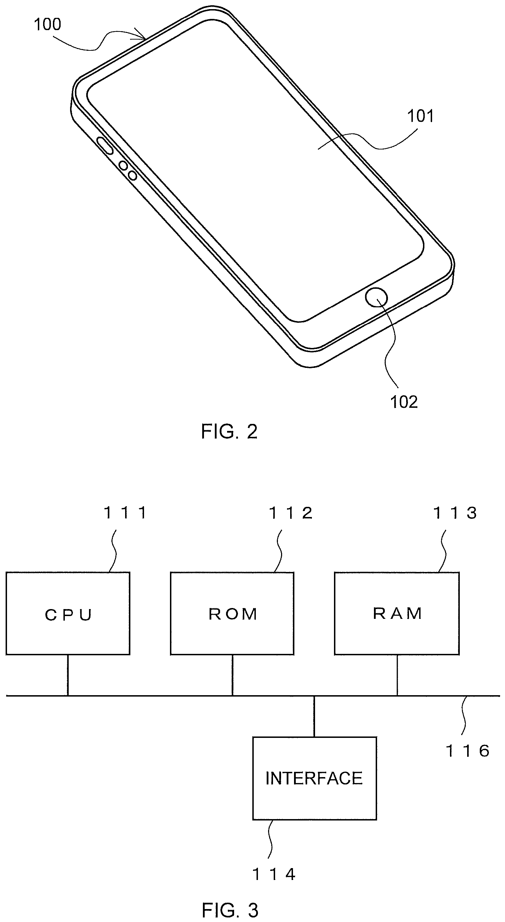

An example of external appearance of the user terminal 100 is shown in FIG. 2.

The user terminal 100 includes a display 101. The display 101 is used to display still images or moving images, and a publicly known or well-known display can be used. The display 101 is, for example, a liquid crystal display. The user terminal 100 also includes an input device 102. The input device 102 is used for the user to perform a desired input on the user terminal 100. A publicly known or well-known input device can be used as the input device 102. The input device 102 of the user terminal 100 in this embodiment is a button-type input device, but is not limited thereto, and a numeric keypad, a keyboard, a trackball, a mouse, or the like can also be used. Moreover, when the display 101 is a touch panel, the display 101 also has a function of the input device 102, which is applied to this embodiment.

Data input from the input device 102 will be described in detail below, but includes, for example, start information relating to start of processing, amount information which is information for specifying the monetary value of virtual currency data, payment information on use of virtual currency data, transfer information on transfer of virtual currency data, a user ID, etc.

A configuration of hardware of the user terminal 100 is shown in FIG. 3.

The hardware includes a CPU (central processing unit) 111, a ROM (read only memory) 112, a RAM (random access memory) 113, and an interface 114, which are interconnected by a bus 116.

The CPU 111 is an arithmetic operation device that performs arithmetic operations. The CPU 111, for example, executes a computer program recorded in the ROM 112 to execute processing to be described below. It should be noted that the computer program used herein includes at least a computer program for causing the user terminal 100 to function as a user terminal of the present invention. The computer program may be pre-installed in the user terminal 100, or may be post-installed. The computer program may be installed in the user terminal 100 via a predetermined recording medium (not shown) such as a memory card, or may be installed via a network such as the Internet.

The ROM 112 records computer programs and data necessary for the CPU 111 to execute processing to be described below. The computer program recorded in the ROM 112 is not limited thereto. For example, when the user terminal 100 is the smartphone, a computer program and data are recorded, for example, for executing telephone calls or e-mails, which are required to cause the user terminal to function as the smartphone. The user terminal 100 can also browse a homepage based on data received via the network 400, and is mounted with a publicly known web browser for enabling the browsing of the homepage.

The RAM 113 provides a work area necessary for the CPU 111 to perform processing. Virtual currency data to be described below may be recorded in the RAM 113. Further, the above-described computer program may be recorded in the RAM 113 in some cases.

The interface 114 performs data exchange between the CPU 111 and the RAM 113 connected via the bus 116 and the outside. The display 101 and the input device 102 described above are connected to the interface 114. Data on the operation content input from the input device 102 is input to the bus 116 from the interface 114. Further, image data to be described below is output from the interface 114 to the display 101. The interface 114 is also connected to a transmission and reception unit (not shown).

The transmission and reception unit transmits and receives data via the network 400 that is the Internet. Such communication may also be performed in a wired manner, but when the user terminal 100 is the smartphone, the communication is wirelessly performed in general. As long as it is possible, the transmission and reception unit may have a publicly known or well-known configuration. The data (for example, permission information to be described below) received by the transmission and reception unit from the network 400 is received through the interface 114, and the data (for example, amount information) passed from the interface 114 to the transmission and reception unit is sent to the outside, for example, to the settlement device 200 by the transmission and reception unit via the network 400.

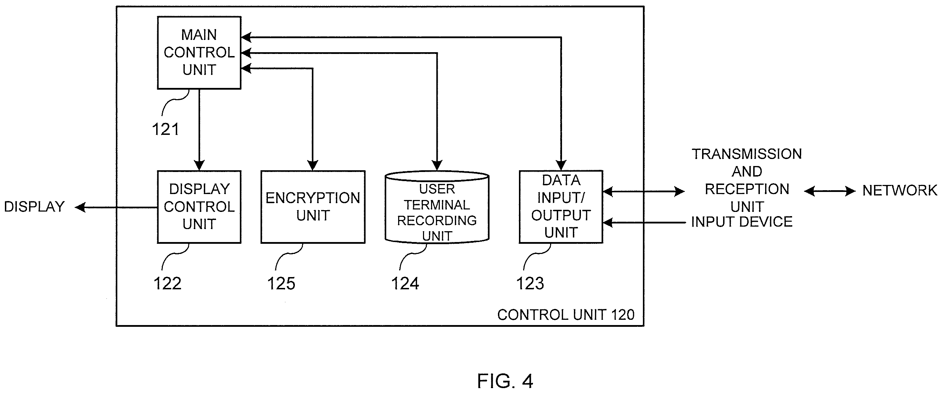

Functional blocks as shown in FIG. 4 are generated within the user terminal 100 when the CPU 111 executes the computer program. It should be noted that while the following functional blocks may be generated with functions of the above-described computer program alone for causing the user terminal 100 to function as the user terminal of the present invention, the following functional blocks may be generated in cooperation with the above-described computer program and an OS and other computer programs installed in the user terminal 100.

A control unit 120 to be described below is generated in the user terminal 100 in relation to functions of the present invention, and a main control unit 121, a display control unit 122, a data input/output unit 123, a user terminal recording unit 124, and an encryption unit 125 are generated in the control unit 120.

The control unit 120 executes information processing as described below.

The main control unit 121 performs overall control in the control unit 120. For example, the main control unit 121 controls the display control unit 122 based on data received from the data input/output unit 123 to be described in detail below.

The main control unit 121 may receive, from the data input/output unit 123, the start information, the amount information, the payment information, the transfer information, and the user ID input from the input device 102, and when receiving them, the main control unit 121 performs each processing to be described below. For example, when receiving the start information, the main control unit 121 transmits an instruction to the display control unit 122 to perform processing for causing the display 101 to perform a display for prompting the user to input data necessary for generating virtual currency data such as amount information. When receiving the amount information, the main control unit 121 generates original data as described below by using the received amount information as it is or by adding data other than the amount information as needed. The main control unit 121 sends the generated original data to the encryption unit 125. Furthermore, the main control unit 121 sends the amount information and the user ID to the data input/output unit 123. The amount information and the user ID are sent from the input/output unit 123 to the settlement device 200 via the transmission/reception unit and the network 400. Data necessary for specifying the original data generated by the main control unit 121 may be further added to the amount information and the user ID sent to the settlement device 200. The use of such data will be described below.

The main control unit 121 may receive permission information to be described below from the data input/output unit 123 which will be described below. When receiving the permission information, the main control unit 121 sends an instruction for encrypting the original data to the encryption unit 125. Such an instruction may be sent to the encryption unit 125 together with the above-described original data, and this is performed in this embodiment although not limited thereto.

As described below, the main control unit 121 may receive virtual currency encryption data from the encryption unit 125. The main control unit 121 that has received the virtual currency encryption data uses the received virtual currency encryption data as virtual currency data as it is or generates virtual currency data by adding data other than the virtual currency encryption data as needed. The generated virtual currency data is sent to the user terminal recording unit 124, or an instruction for causing the display 101 to perform a below-mentioned display based on the virtual currency data is sent to the display control unit 122. The main control unit 121 may read virtual currency data from the user terminal recording unit 124 as described below. The main control unit 121 that has read it sends an instruction to the display control unit 122 to cause the display 101 to perform a display based on the virtual currency data, and in some cases, sends it to the data input/output unit 123.

The display control unit 122 controls an image displayed on the display 101 while being controlled by the main control unit 121. The display 101 displays an image based on the data sent from the display control unit 122. The main control unit 121 sends, to the display control unit 122, an instruction as to what image should be displayed on the display 101.

The data input/output unit 123 inputs and outputs data to/from the control unit 120. Specifically, the data input/output unit 123 receives the input from the input device 102. For example, the start information, the amount information, the payment information, the transfer information and the user ID are input from the input device 102 to the data input/output unit 123. These information is sent from data input/output unit 123 to the main control unit 121.

In addition, the data input/output unit 123 receives, from the transmission and reception unit, the permission information sent from the settlement device 200 or the like via the network 400. The data input/output unit 123 sends the received permission information to the main control unit 121.

Further, the data input/output unit 123 may receive the amount information and the user ID from the main control unit 121. The data input/output unit 123 which has received the amount information and the user ID sends the amount information and the user ID to the transmission and reception unit, and the amount information and the user ID are sent from the transmission and reception unit to the settlement terminal 300 via the network 400. The data input/output unit 123 may receive the virtual currency data from the main control unit 121. The data input/output unit 123 which has received the virtual currency data sends the virtual currency data to the transmission and reception unit, and the virtual currency data is sent from the transmission and reception unit, for example, to another user terminal 100 or the settlement terminal 300. A transmission destination of the virtual currency data is designated by the main control unit 121 according to the input from the input device 102, as will be described below.

As described above, the user terminal recording unit 124 receives the virtual currency data generated by the main control unit 121 from the main control unit 121, and records the virtual currency data therein. When viewed as hardware, the user terminal recording unit 124 is configured by a part of the RAM 113.

In addition, the virtual currency data recorded in the user terminal recording unit 124 may be read by the main control unit 121 at a timing as described below.

The encryption unit 125 may receive the original data from the main control unit 121 as described above. When receiving the original data from the main control unit 121, the encryption unit 125 has a function of encrypting the original data and converting it into virtual currency encryption data. The encryption processing performed by the encryption unit 125 in each user terminal 100 is set to be different among user terminals 100. Since the encryption processing is generally defined by an algorithm and a key used for encryption, at least one of the algorithm and the key used for the encryption processing to be executed in each user terminal 100 is unique for each user terminal 100.

The details of the encryption processing to be performed by the encryption unit 125 of each user terminal 100 will be described below.

The encryption unit 125 sends the generated virtual currency encryption data to the main control unit 121.

Next, the settlement device 200 will be described. It should be noted that, although not limited thereto, in this embodiment, the settlement device 200 has a function of executing credit determination which is a determination as to whether virtual currency data having a value corresponding to a certain amount is to be issued in each user terminal 100, and a settlement determination which is a determination as to whether settlement based on the following virtual currency data is to be performed when the virtual currency data is sent from a device other than a device that has issued virtual currency data (in this embodiment, the user terminal 100 or the settlement terminal 300, but not limited thereto). The credit determination and the settlement determination will be described in detail below.

The settlement device 200 is a general computer, and in this embodiment, is a general server device in more detail. Hardware configuration thereof may be equivalent to that of a settlement device in the conventional settlement system.

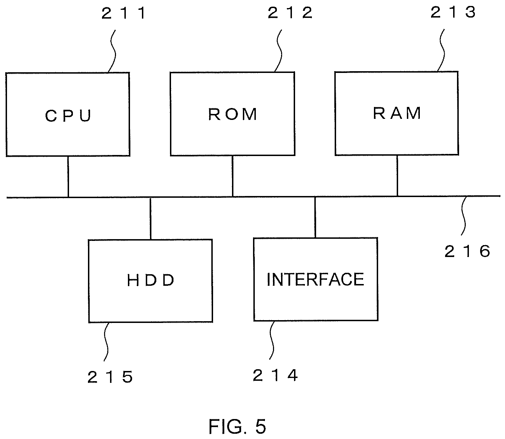

An example of the hardware configuration of the settlement device 200 is shown in FIG. 5.

The hardware includes a CPU 211, a ROM 212, a RAM 213, an interface 214, and a large-capacity recording medium that is an HDD (hard disk drive) 215 in this embodiment, and these are connected to each other by a bus 216.

The CPU 211 is an arithmetic operation device that performs arithmetic operations. The CPU 211, for example, executes a computer program recorded in the ROM 212 to execute processing to be described below. It should be noted that the computer program used herein includes at least a computer program for causing the settlement device 200 to function as the settlement device (or administration device) of the present invention. The computer program may be pre-installed in the settlement device 200, or may be post-installed. The computer program may be installed in the settlement device 200 via a predetermined recording medium such as a memory card, or may be installed via the network such as the Internet.

The ROM 212 records the computer program and data necessary for the CPU 211 to execute processing to be described below. The computer program recorded in the ROM 212 is not limited thereto, and any other necessary computer programs may be recorded.

The RAM 213 provides a work area necessary for the CPU 211 to perform processing.

The interface 214 performs data exchange between the CPU 211, the RAM 213, and the like connected via the bus 216 and the outside. The interface 214 is at least connected to the transmission and reception unit. The data received by the transmission and reception unit from the network 400 is received by the interface 214, and the data passed from the interface 214 to the transmission and reception unit is sent to the outside, for example, to the user terminal 100 by the transmission and reception unit, via the network 400.

The HDD 215 is a large-capacity recording medium as described above, and records data. At least a part of the computer program or data necessary for the CPU 211 to execute processing to be described below may be recorded on the HDD 215 instead of the ROM 212, and most of the computer program and data are more practically recorded on the HDD 215.

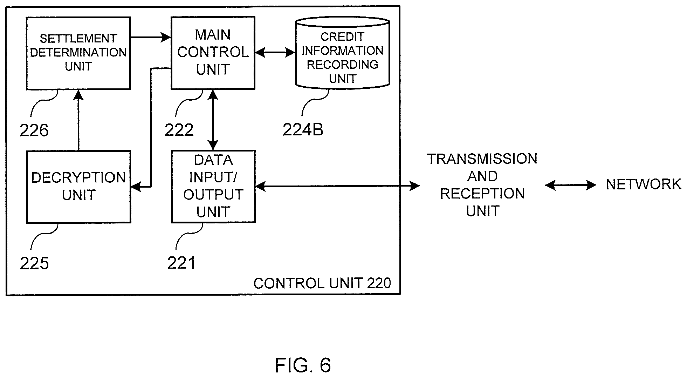

Functional blocks as shown in FIG. 6 are generated within the settlement device 200 when the CPU 211 executes the computer program. It should be noted that while the following functional blocks may be generated with functions of the above-described computer program alone for causing the settlement device 200 to function as the settlement device of the present invention, the following functional blocks may be generated in cooperation with the above-described computer program and the OS and other computer programs installed in the settlement device 200.

A control unit 220 to be described below is generated in the settlement device 200 in relation to the functions of the present invention. A data input/output unit 221, a main control unit 222, a credit information recording unit 224B, a decryption unit 225, and a settlement determination unit 226 are generated in the control unit 220.

The data input/output unit 221 inputs and outputs data to/from the control unit 220. Specifically, the data input/output unit 221 receives various data to be described below, from the main control unit 222.

For example, the data input/output unit 221 receives the permission information from the main control unit 222. The received permission information is sent to the transmission and reception unit from the data input/output unit 221, and is sent to the user terminal 100 via the network 400.

The data input/output unit 221 also receives various data to be described below, which are received by the transmission and reception unit from the user terminal 100 or the settlement terminal 300 via the network 400, from the transmission and reception unit, and sends the received data to the main control unit 222. For example, the data input/output unit 221 may receive virtual currency data and amount information from the transmission and reception unit, and the data input/output unit 221 which has received any one of the virtual currency data and the amount information sends it to the main control unit 222.

The main control unit 222 performs overall control in the control unit 220. For example, the main control unit 222 executes credit determination processing to be described below. Further, the main control unit 222 performs settlement processing to be described below, and sends data described below to the decryption unit 225 and the like, thereby causing the decryption unit 225 to perform necessary processing.

As described above, the main control unit 222 may receive the amount information from the data input/output unit 221. The main control unit 222 which has received the amount information executes the credit determination processing. When executing the credit determination processing, the main control unit 222 performs the credit determination processing by using data recorded in the credit information recording unit 224B. Data on each user for making credit determination is recorded in the credit information recording unit 224B. The content of the data recorded in the credit information recording unit 224B and the details of the credit determination processing to be performed by the main control unit 222 will be described below. When the main control unit 222 determines, as a result of the credit determination, that virtual currency data having a monetary value specified by amount information may be generated in the user terminal 100 of a user who has sent the amount information, the main control unit 222 generates permission information. Conversely, when the main control unit 222 does not determine that the virtual currency data may be generated by the user terminal 100 of the user who has sent the amount information, the main control unit 222 does not generate any permission information. It should be noted that although not limited thereto, in this embodiment, when no permission information is generated, the main control unit 222 generates effective non-permission information having a content that the user terminal 100 is not permitted to issue virtual currency data. In any case, when the permission information or the non-permission information is generated, the main control unit 222 sends it to the data input/output unit 221. It should be noted that when the result of the credit determination is negative, the main control unit 222 may stop the processing at that time without generating the non-permission information.

As described above, the main control unit 222 may receive the virtual currency data from the data input/output unit 221, and the main control unit 222 that has received the virtual currency data may send the virtual currency encryption data to the decryption unit 225. It should be noted that in this case, the data to be sent to the decryption unit 225 may be only the virtual currency encryption data out of the data included in the virtual currency data, or may include the overall virtual currency data which also includes data other than the virtual currency encryption data.

The main control unit 222 may also receive final determination data described below from the settlement determination unit 226. As will be described below, the final determination data is data indicating that settlement is accepted or settlement is not accepted. The main control unit 222 is configured to execute settlement processing when receiving affirmative final determination data described below, which has a content indicating acceptance of settlement. In this embodiment, the settlement processing is processing for accepting payment of money to the settlement terminal 300 or the like that has sent the virtual currency encryption data. The main control unit 222 stores data indicating what kind of settlement has been performed. For example, the main control unit 222 is configured to record, in a recording medium (not shown), information as to how much payment is finally accepted for whom (an administrator or the like of which settlement terminal 300 or the like) while the information being discriminated among the respective settlement terminals 300. On the other hand, the main control unit 222 does not perform the processing for accepting the settlement when receiving negative final determination data described below which has a content indicating unacceptance of the settlement.

As described above, the decryption unit 225 may receive virtual currency data (or virtual currency encryption data) from the main control unit 222.

When the decryption unit 225 receives the virtual currency encryption data, the decryption unit 225 decrypts the virtual currency encryption data and returns it to the original data. Details of the decryption processing will be described below. The decrypted data is the original data, which includes at least the amount information. The decryption unit 225 sends the original data to the settlement determination unit 226 when the decryption unit 225 can decrypt the virtual currency encryption data. In this case, the original data to be sent from the decryption unit 225 to the settlement determination unit 226 may include data other than the virtual currency encryption data included in the virtual currency data. The fact that the original data has been sent from the decryption unit 225 to the settlement determination unit 226 indicates the fact that the decryption unit 225 has successfully decrypted the virtual currency encryption data.

On the other hand, when the decryption unit 225 could not decrypt the virtual currency encryption data, the decryption unit 225 notifies this fact to the settlement determination unit 226.

As described above, the original data may be sent from the decryption unit 225 to the settlement determination unit 226. When receiving the original data, the settlement determination unit 226 performs a settlement determination which is a determination as to whether the settlement should be accepted. As a result, the settlement determination unit 226 generates final determination data that is data including the content of either acceptance of the settlement or unacceptance of the settlement. How the settlement determination unit 226 generates the final determination data will be described later.

As described above, the settlement determination unit 226 may also receive, from the decryption unit 225, the notification that the virtual currency encryption data could not be decrypted. Upon receiving the notification, the settlement determination unit 226 generates final determination data including a content indicating unacceptance of the settlement.

In any case, when generating the final determination data, the settlement determination unit 226 sends it to the main control unit 222.

The settlement terminal 300 will be described below.

The settlement terminal 300 plays a role similar to that of the settlement terminal used in the settlement system using the credit card, and is a general computer. For example, it is assumed that the settlement terminal 300 is configured by a tablet.

The settlement terminal 300 includes a touch panel display (not shown), but an external appearance thereof is not shown because it is similar to that in FIG. 2. As a result, the settlement terminal 300 includes a display and an input device. However, the settlement terminal 300 may alternatively include a display that is not a touch panel type and an input device including necessary input devices selected from publicly known or well-known input devices such as a numeric keypad, a keyboard, a mouse, and a trackball, in other words, may include the display and the input device separately. The description will be made below assuming that the settlement system in this embodiment includes a touch panel display.

In addition, the settlement terminal 300 includes a camera (not shown). The camera may be externally attached, but the settlement terminal 300, which is a tablet, includes a publicly known built-in camera.

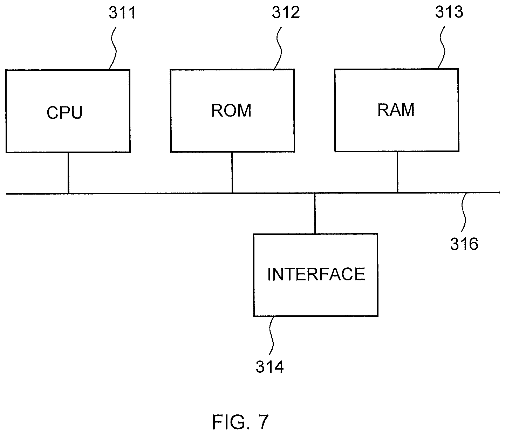

A configuration of hardware of the settlement terminal 300 is shown in FIG. 7.

The hardware includes a CPU 311, a ROM 312, a RAM 313, and an interface 314, which are interconnected by a bus 316.

The CPU 311 is an arithmetic operational device that performs arithmetic operations. The CPU 311, for example, executes a computer program recorded in the ROM 312 to execute processing to be described below. The computer program may be pre-installed in the settlement terminal 300, or may be post-installed. The computer program may be installed in the settlement terminal 300 via a predetermined recording medium such as the memory card, or may be performed via a network such as the LAN or the Internet.

The ROM 312 records the computer program and data necessary for the CPU 311 to execute processing described below, in other words, for causing the computer to function as another device described above. The computer program recorded in the ROM 312 is not limited thereto, and any other necessary computer programs may be recorded.

The RAM 313 provides a work area necessary for the CPU 311 to perform processing.

The interface 314 performs data exchange between the CPU 311, the RAM 313 and the like connected via the bus 316 and the outside. The interface 314 is at least connected to the transmission and reception unit which is not shown. The transmission and reception unit is connected to the network 400 to perform both transmission and reception of data via the network 400. The data passed to the transmission and reception unit from the interface 314 is sent to the outside, for example, to the settlement device 200 by the transmission and reception unit, via the network 400. The data output from the interface 314 and transmitted from the transmission and reception unit is mainly virtual currency data in relation to this embodiment.

The interface 314 is also connected to the input device provided on the touch panel display so as to accept an input from the input device. The interface 314 is connected to the touch panel display so as to send data for displaying an image to be described below, to the touch panel display. The data input from the input device to the interface 314 is, for example, data instructing the start of settlement, a settlement terminal ID to be described below, and the like.

The interface 314 is also connected to the camera described above. Image data including an image for specifying the virtual currency data is input from the camera to the interface 314. The virtual currency data is actually input to the interface 314 from the camera, which is slightly inaccurate.

The hardware may include a large-capacity recording medium, and the function at this time is as described above.

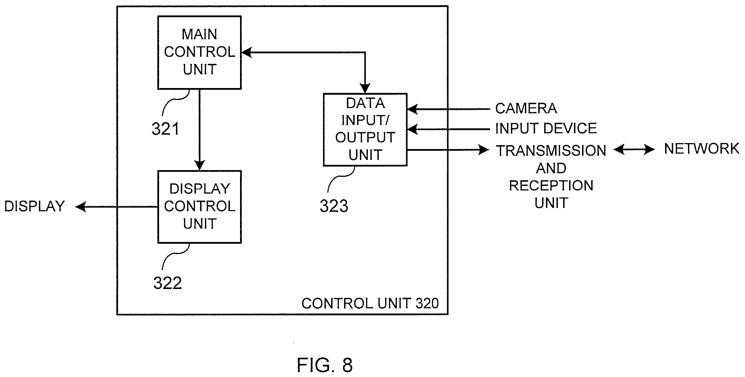

Functional blocks as shown in FIG. 8 are generated within the settlement terminal 300 when the CPU 311 executes the computer program. It should be noted that the following functional blocks may be generated with functions of the above-described computer program alone for causing the settlement terminal 300 to function as another device described above, the following functional blocks may be generated in cooperation with the above-described computer program and the OS and other computer programs installed in the settlement terminal 300.

A control unit 320 to be described below is generated in the settlement terminal 300 in relation to the functions of the present invention, and a main control unit 321, a display control unit 322, and a data input/output unit 323 are generated in the control unit 320.

The control unit 320 executes information processing as will be described below.

The main control unit 321 performs overall control within the control unit 320. For example, the main control unit 321 controls the display control unit 322 based on data received from the data input/output unit 323 to be detailed below.

The main control unit 321 is configured to receive virtual currency data from the data input/output unit 323 to be described below. The main control unit 321 of each settlement terminal 300 records a unique settlement terminal ID for each settlement terminal 300. The main control unit 321 attaches data of the settlement terminal ID to the received virtual currency data and sends it to the data input/output unit 323.

The display control unit 322 controls the images to be displayed on the above-described display of the touch panel type under control of the main control unit 321. An image based on the data sent from the display control unit 322 is displayed on the display. The main control unit 321 sends an instruction on what image should be displayed on the display, to the display control unit 322.

The data input/output unit 323 inputs and outputs data to/from the control unit 320.

Specifically, the data input/output unit 323 receives the input from the input device and sends it to the main control unit 321. An example of data input from the input device to the data input/output unit 323 is data for instructing the start of settlement. In addition, the settlement terminal ID described above may be input. Further, image data including the virtual currency data captured by the camera may be input to the data input/output unit 323.

Moreover, the data input/output unit 323 outputs the data to the transmission and reception unit, which is not shown. The data output to the transmission and reception unit is the virtual currency data sent from the main control unit 321. The settlement terminal ID is attached to the virtual currency data. The data output to the transmission and reception unit is transmitted to the settlement device 200 from the transmission and reception unit via the network 400.

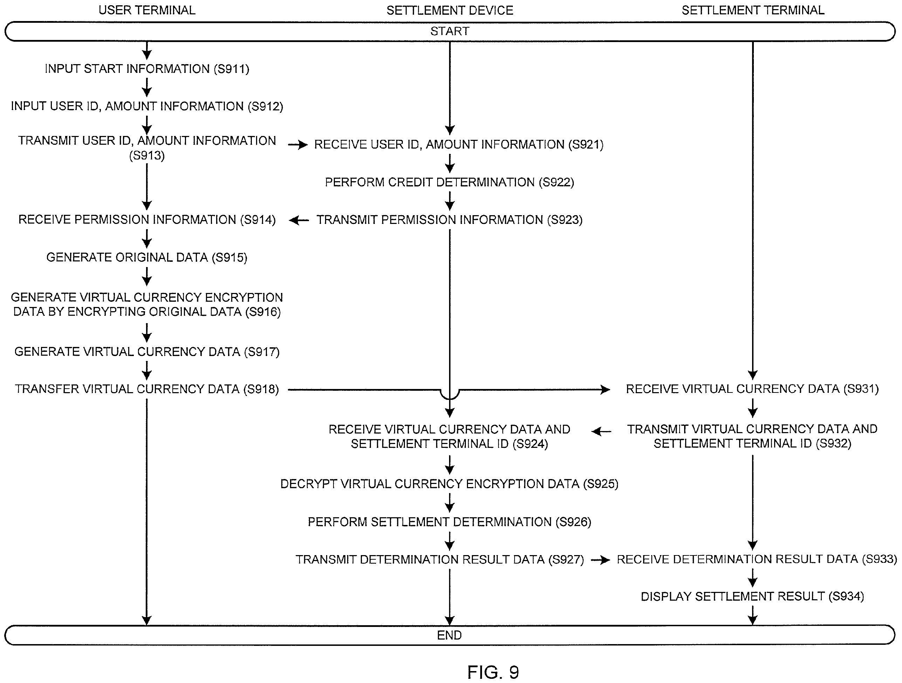

A method of using the settlement system as described above and an operation thereof will be described below with reference to FIG. 9.

First, as preparation for using such a system, a user ID is set in each of the user terminals 100 and a settlement terminal ID is set in each of the settlement terminals 300.

The user ID is an ID unique to each of the user terminals 100 for identifying each of the user terminals 100, and is generally an enumeration of alphabetic characters, numbers, and symbols. The same also applies to the settlement terminal ID. In order to avoid duplication of a large number of user IDs, the settlement device 200 (or an administrator thereof or the like) may issue a user ID to each of the user terminals 100. The same also applies to the settlement terminal ID. Alternatively, an individual identification number embedded in the hardware of the user terminal 100 from the time of shipment can be used as the user ID. The same also applies to the settlement terminal ID.

The administrator of each of the user terminals 100 inputs the user ID for the user terminals 100 by operating the input device 102. Note that such an input is not necessary when the individual identification number is used as the user ID. Data of the user ID is sent from the input device 102 to the interface 114 and sent from the interface 114 to the control unit 120. The data input/output unit 123 of the control unit 120 receives the data and sends it to the main control unit 121. The main control unit 121 may retain the data, or record it in the main control unit 121.

On the other hand, the main control unit 121 sends the user ID data to the data input/output unit 123. The user ID data is sent from the data input/output unit 123 to the transmission and reception unit, and then sent to the settlement device 200 via the network 400.

The settlement device 200 receives the user ID data at the transmission and reception unit. The user ID data is sent from the transmission and reception unit to the interface 214 and is sent from the interface 214 to the control unit 220. The data input/output unit 221 of the control unit 220 receives the data, and sends it to the main control unit 222. The main control unit 222 retains the data, or records it in the main control unit 222. When all the user terminals 100 perform this processing, the main control unit 222 has a list of all the user terminals 100. Using such a list, the settlement device 200 specifies someone (an owner of some user device 100) for which virtual currency data is generated.

The administrator of each of the settlement terminals 300 inputs the settlement terminal ID for the settlement terminal 300 by operating the input device. Data of the settlement terminal ID is sent from the input device to the interface 314, and then is sent from the interface 314 to the control unit 320. The data input/output unit 323 of the control unit 320 receives the data and sends it to the main control unit 321. The main control unit 321 retains the data, or records it in the main control unit 321.

On the other hand, the main control unit 321 sends the data of the settlement terminal ID to the data input/output unit 323. The data of the settlement terminal ID is sent from the data input/output unit to the transmission and reception unit, and is sent to the settlement device 200 via the network 400.

The settlement device 200 receives the data of the settlement terminal ID at the transmission and reception unit. The data of the settlement terminal ID is sent from the transmission and reception unit to the interface 214, and is sent from the interface 214 to the control unit 220. The data input/output unit 221 of the control unit 220 receives the data and sends it to the main control unit 222. The main control unit 222 retains the data, or records it in the main control unit 222. When all the settlement devices 200 perform this processing, the main control unit 222 has a list of all the settlement terminals 300. Using such a list, the settlement device 200 specifies someone (administrator of some settlement terminal 300) for which payment (settlement) is accepted.

First, the virtual currency data is generated.

Although not limited thereto, in this embodiment, generation of the virtual currency data starts upon an input of start information into the user terminal 100 by the user himself/herself (S911).

When the user inputs the start information, for example, the user may touch an icon (not shown) displayed on the display 101. Then, the start information is generated based on the operation content, and the generated start information is sent from the input device 102 to the main control unit 121 via the interface 114 and the data input/output unit 123.

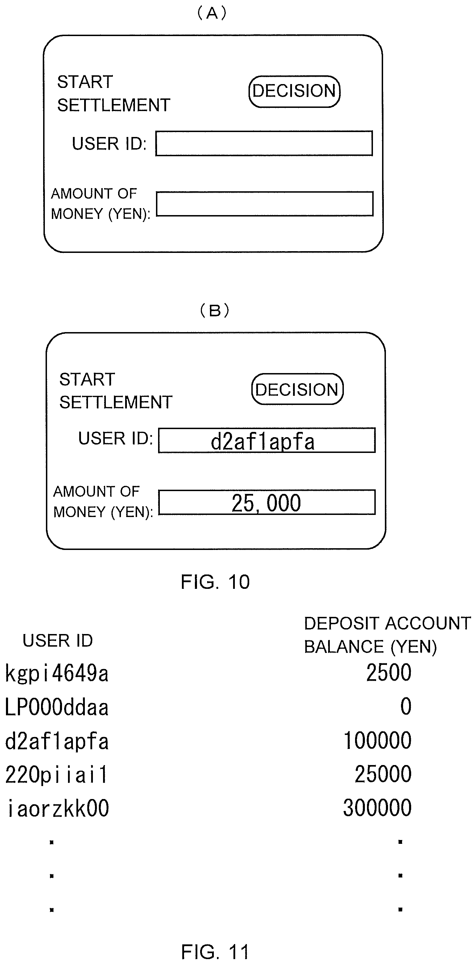

Upon reception of the start information, the main control unit 121 sends an instruction to the display control unit 122 to display an image for prompting the user to input the user ID or the like on the display 101. The display control unit 122, which has accepted this instruction, displays, on the display 101, an image for prompting the user to input the user ID, an amount of money for specifying a monetary value to be given to virtual currency data which the user is going to issue from now (for example, the amount to be paid to another person), for example, as shown in FIG. 10(A). The user inputs the user ID inside a rectangular frame on the right side of a field indicated as "User ID" on the display 101, and inputs the

**EP 3 667 595 B1**

foregoing amount of money inside a rectangular frame on the right side of a field indicated as "Amount of money (yen)", respectively (S912). Data on the user ID and the amount information, which is information for specifying the amount of money input by the user are input from the input device 102 to the data input/output unit 123 via the interface 114, and sent to the main control unit 121. Since the user ID and the amount information, which are input by the user, are displayed on the display 101, also including during the input, under control of the display control unit 122 controlled by the main control unit 121, the user can input the user ID and the amount information while checking the display 101. According to an example shown in FIG. 10(B), the user intends to pay 25,000 yen using this settlement system.

When the input of the user ID and the amount information is completed, the user clicks a button of "Decision" displayed on the display 101.

In this embodiment, the data to be input after the input of the start information is the user ID and the amount information as described above. However, the user ID is not required to be input each time the user generates virtual currency data at the user terminal 100, and for example, by recording the user ID in advance in the main control unit 121, it may be omitted to input the user ID every time virtual currency data is generated. Further, it is also possible to make it indispensable that the user inputs other information in addition to the user ID and the amount information.

When the user clicks the button of "Decision", the user ID and the amount information are sent from the data input/output unit 123 to the main control unit 121.

When receiving the user ID and the amount information, the main control unit 121 sends them to the data input/output unit 123. The user ID and the amount information are sent from the transmission and reception unit to the settlement device 200 via the network 400 (S913).

As in the case hereinafter, in this embodiment, all communications to be performed via the network 400 may be encryption communications. Such encryption is, of course, different from the encryption to be performed by the encryption unit 125 described below. The technique used for encryption and decryption for encryption communication may be publicly known or well known.

The settlement device 200 receives the user ID and the amount information at the transmission and reception unit (S921). The transmission and reception unit sends the user ID and the amount information to the data input/output unit 221, and the data input/output unit 221 sends the data to the main control unit 222.

The main control unit 222 performs credit determination which is determination as to whether a user having a user terminal 100 specified by the user ID may generate virtual currency data having a monetary value of an amount specified by the amount information (S922). As will be described below, if there is no particular problem, the settlement device 200 sends permission information for permitting issuance of virtual currency data to the user terminal 100. However, since virtual currency data is data having a monetary value, it is determined in advance whether the user who sent the user ID and the amount information may issue such virtual currency data. The settlement device 200 performs such credit determination before the user terminal 100 issues the virtual currency data, whereby the credit worthiness of the virtual currency data which will be subsequently issued by the user terminal 100 is enhanced.

Although not limited thereto, the main control unit 222 in this embodiment uses data recorded in the credit information recording unit 224B when performing credit determination. Although not limited thereto, the balance of the deposit account for each user is recorded in the credit information recording unit 224B in this embodiment. For example, the deposit account is under the management of the administrator or the like of the settlement device 200, and an amount of money which each user has deposited with the administrator or the like of the settlement device 200 is pooled in the deposit account of the user. The deposit account may be a bank account held by each user. The deposit account of each user is associated with the user ID as shown in FIG. 11. The balance of each user's deposit account is an amount of money obtained by subtracting the amount of money used to generate credit information as described below from the amount of money paid to the administrator or the like of the settlement device 200 by each user (in some cases, a plurality of numbers of times). According to FIG. 11, the balance of the deposit account of the user whose user ID is d2aflapfa is 100,000 yen. The main control unit 222 reads out the balance of this deposit account associated with the user ID from the credit information recording unit 224B.

The main control unit 222 performs the credit determination, for example, by comparing the amount of money specified by the amount information with the read-out balance of the deposit account. For example, when the amount of money specified by the amount information is smaller than the balance of the deposit account at that time, the main control unit 222 accepts the credit. When the credit is accepted, the main control unit 222, for example, subtracts the amount of money specified by the amount information (25,000 yen in this embodiment) from the balance of the deposit account, and transfers the residual amount of money to an account managed by the administrator or the like of the settlement device 200. This allows the administrator or the like of the settlement device 200 to pay the amount of money specified by the amount information afterwards or take responsibility for the payment. Therefore, aside from whether to create a mechanism in which the administrator of the settlement device 200 always follows the responsibility of paying afterwards, the virtual currency data which is set to have a value specified by the amount information and generated as described below have extremely high reliability. In this case, the money of the amount deposited in the deposit account or the money transferred therefrom to the account of the administrator or the like of the settlement device 200 has a character such as a deposit or security for the virtual currency data.

It should be noted that a credit determination method in which the main control unit 222 accepts the credit when the amount of money specified by the amount information is smaller than the balance of the deposit account at that time is merely an example, and for example it is possible to accept the credit when 80% or 50% of the amount of money specified by the amount information is smaller than the balance of the deposit account at that time, or define other rules. For example, in the case where credit is accepted when the amount of money specified by the amount information is smaller than the balance of the deposit account at that time, the main control unit 222 can subtract the amount of money of 80% from the balance of the deposit account, or subtract the amount of money itself specified by the amount information from the balance of the deposit account. Further, it is also possible to apply different rules depending on the case where virtual currency data is generated (for example, according to time or user).

Alternatively, when the user terminal 100 sends the start information to the settlement device 200, the settlement device 200 prompts a user who operates the user terminal 100 sending the start information, to pay the amount of money specified by the amount information which has been transmitted with being included in the start information (or a part of the amount of money such as 80% or 50% of the amount of money), and also when it is confirmed that the user has paid the amount of money to the administrator of the settlement device 200, for example, by payment with a credit card from the user terminal 100 (such on-line payment with a credit card is publicly known or well known), the main control unit 222 of the settlement device 200 may determine that user's credit is accepted. In this case as well, money having a property of deposit or security is accumulated in the account of the administrator or the like of the settlement device 200, as in the case of the above-described example.

Such credit determination may be not associated with an actual amount of money, and may be performed according to broader credibility such as an occupation, an employment history, a workplace, an annual income, an asset status, an age, a family make-up, possession of a home, etc.

In any case, the main control unit 222 generates permission information when the user's credit is accepted.

The main control unit 222 sends the generated permission information to the data input/output unit 221. The data input/output unit 221 sends the permission information to the transmission and reception unit, and sends it to the user terminal 100 via the network 400 (S923).

The user terminal 100 receives the permission information at the transmission and reception unit (S914). The transmission and reception unit sends the permission information to the data input/output unit 123, and the data input/output unit 123 sends it to the main control unit 121.

Upon receiving the permission information, the main control unit 121 generates original data based on the user ID and the amount information which have been received previously (S915). The original data includes the amount information. Although not limited thereto, in this embodiment, the main control unit 121 uses, as the original data, a simple connection of the amount information and the user ID. It should be noted that the original data indispensably requires the amount information and may include the user ID, but may further include other information. For example, time information about the date and time when the user entered the start information, position information such as the position of the user terminal 100 when the user entered the start information (for example, in the case of a smartphone, the position information of the user terminal 100 can be easily detected by using a standardly installed GPS (Global Positioning System) function), etc. can be included in the original data. In addition, information relating to user attributes such as a password set by the user, sexuality, and a telephone number can also be included in the original data. In this embodiment, it is assumed that the original data is as described above.

The original data is sent from the main control unit 121 to the encryption unit 125. It should be noted that the generation of the original data can be performed by the main control unit 121 at any time as long as the main control unit 121 has received the user ID and the amount information which serve as a source of the original data. Therefore, even before the main control unit 121 receives the permission information sent from the settlement device 200, or more specifically, immediately after the processing of S912 regarding the input of the user ID and the amount information is executed, the main control unit 121 can execute the processing of S915 regarding the generation of the original data.

As described above, non-permission information may be sent from the settlement device 200 to the user terminal 100. In this case, the main control unit 121 of the user terminal 100 does not generate the original data, and even if the main control unit 121 has generated the original data before obtaining non-permission information, the main control unit 121 does not send the original data to the encryption unit 125. In other words, in the user terminal 100 that has received the non-permission information, neither virtual currency encryption data nor virtual currency data as described below is generated. The non-permission information may include information indicating the reason for non-permission. It does not matter that an image indicating the reason for non-permission based on such information is displayed on the display 101 of the user terminal 100, whereby the user can check the reason for non-permission such as a shortage of the balance of his or her deposit account by viewing the display 101.

Upon receiving the original data from the main control unit 121, the encryption unit 125 encrypts the original data into virtual currency encryption data (S916).

As described above, the encryption units 125 of the respective user terminals 100 execute encryption processing by different schemes. However, although not limited thereto, the encryption scheme to be executed by the encryption unit 125 of each user terminal 100 in this embodiment is one fixed scheme. Since the respective user terminals 100 execute different encryption processing, although not limited thereto, in this embodiment, algorithms used for the encryption processing to be performed by the encryption units 125 of the respective user terminals 100 are the same, but keys to be used for the encryption processing are different from one another.

By using the algorithm and the key, the encryption unit 125 encrypts the original data received from the main control unit 121 to convert the original data into virtual currency encryption data.

The encryption unit 125 sends the generated virtual currency encryption data to the main control unit 121.

The main control unit 121 generates virtual currency data based on the virtual currency encryption data (S917).

The main control unit 121 may use the virtual currency encryption data as virtual currency data as it is, but in this embodiment, a plaintext user ID is attached to the virtual currency encryption data, and the virtual currency encryption data having the plaintext user ID attached thereto is used as virtual currency data. In other words, in this embodiment, for example, a combination of the plaintext user ID attached at the head and the virtual currency encryption data linked to the tail of the user ID is set as virtual currency data. The virtual currency data is data having a monetary value to be used by the user for payment, and the virtual currency encryption data is the main body of the virtual currency data.

The virtual currency data may be sent to the data input/output unit 123 as it is, but is generally sent from the main control unit 121 to the user terminal recording unit 124 and recorded there.

With the above processing, generation or issuance of the virtual currency data has terminated for the time being.

When the virtual currency data is issued, the user transfers the virtual currency data from the user terminal 100, for example, to a settlement terminal 300 managed by a store clerk, which is the other party to which money should be paid (S918). The transfer of the virtual currency data may be performed immediately after the virtual currency data is generated in the user terminal 100, or may be performed after a while, for example, after several days to several months have passed. It is a user's discretion when such virtual currency data is transferred.

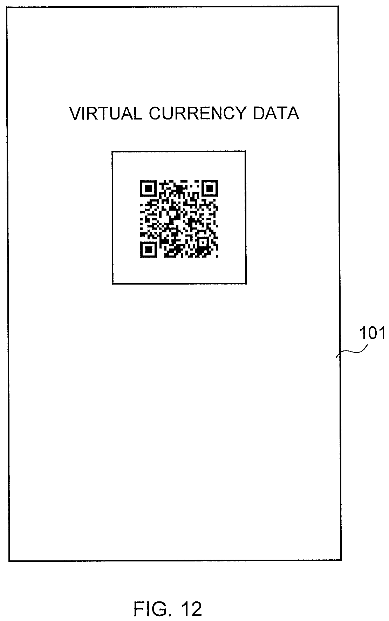

Although not limited thereto, in this embodiment, the transfer of the virtual currency data is performed by capturing an image of a two-dimensional barcode displayed as shown in FIG. 12 on the display 101 of the user terminal 100 by a camera equipped to the settlement terminal 300. The two-dimensional barcode displayed on the display 101 includes information for reconstructing virtual currency data. The two-dimensional barcode data is generated by the main control unit 121 that has read the virtual currency data from the user terminal recording unit 124. Such data is sent from the main control unit 121 to the display control unit 122. The display control unit 122 that has received the data on the two-dimensional barcode controls the display 101 so that the display 101 displays an image of the two-dimensional barcode based on the data.

The data of the image captured by the camera is sent from the camera of the settlement terminal 300 to the data input/output unit 323 via the interface 314, and then sent from the data input/output unit 323 to the main control unit 321. The main control unit 321 generates (reconstructs) virtual currency encryption data from the two-dimensional barcode shown in the image data. As a result, the settlement terminal 300 receives the virtual currency data from the user terminal 100 (S931).

Note that, in this embodiment, the transfer of the virtual currency data from the user terminal 100 to the settlement terminal 300 is performed by reading the two-dimensional barcode. However, this may be performed with a one-dimensional barcode or other identifiers as well as the two-dimensional barcode. Furthermore, it is not necessary to implement the transfer of the virtual currency data from the user terminal 100 to the settlement terminal 300 by reading such an identifier, but it may be implemented by transmitting the virtual currency data itself by Bluetooth (trademark) or other communication. To speak of extremes, this may be implemented by the user orally notifying the administrator or the like of the settlement terminal 300, or by displaying the virtual currency data on the display 101 so as to cause the administrator or the like of the settlement terminal 300 to view the virtual currency data. In these cases, for example, the administrator or the like of the settlement terminal 300 will input the virtual currency data to the settlement terminal 300 by manual input using the input device.

In any case, the main control unit 321 records the virtual currency data temporarily, for example, at least until the payment based on the virtual currency data is completed. Such recording is performed on the RAM 313 as hardware.

When receiving the virtual currency data from the user, the administrator or the like of the settlement terminal 300 operates the input device of the settlement terminal 300 to perform an operation for sending the virtual currency data to the settlement device 200.

When such an operation is performed, the content of the operation is sent from the input device to the main control unit 321 via the data input/output unit 323. When such an input is performed, the main control unit 321 sends the virtual currency data to the data input/output unit 323. The data input/output unit 323 sends the data to the transmission and reception unit, and the transmission and reception unit transmits the data to the settlement device 200 via the network 400 (S932). At this time, the settlement terminal 300 also sends a settlement terminal ID to the settlement device 200 together with the virtual currency data. In the following case, the settlement terminal 300 that is accepting settlement transmits the settlement terminal ID to the settlement device 200 together with the virtual currency data.

The settlement device 200 receives the data of the settlement terminal ID and the virtual currency data by the transmission and reception unit thereof (S924). The virtual currency data with the settlement terminal ID attached is sent to the main control unit 222 via the interface 214 and the data input/output unit 221.

The main control unit 222 that has received these data sends the data of the settlement terminal ID and the virtual currency data to the decryption unit 225.

The decryption unit 225 decrypts the virtual currency decryption data included in the virtual currency data (S925).

The processing of the decryption unit 225 is performed as inverse conversion processing which is inverse to conversion processing for original data which was executed when the virtual currency encryption data was encrypted by the encryption unit 125 of some user terminal 100. As described above, the encryption units 125 of the respective user terminals 100 perform encryption by using a common algorithm, but perform encryption conversion by using different keys. Then, the decryption unit 225 grasps an algorithm used when the encryption processing is performed in the encryption unit 125 of each user terminal 100, and performs the decryption processing by using the algorithm. Further, the decryption unit 225 grasps all the respective different keys used by the encryption units 125 of all the user terminals 100, and holds all the keys while each of the keys is associated with the user ID of the user terminal 100 having the encryption unit 125 in which the key is used.

Each decryption unit 225 performs decryption by using the algorithm used when the encryption processing is performed in the encryption unit 125 of each user terminal 100. Therefore, if a key used when virtual currency encryption data which is about to be decrypted from now was encrypted can be specified, or if a user terminal 100 having the key can be specified, it is theoretically possible to decrypt the virtual currency encryption data by only one attempt unless the virtual currency encryption data has been tampered with or the like.

As described above, the user ID is contained in a plaintext state in the virtual currency data. The decryption unit 225 extracts a user ID which is included in virtual currency data together with virtual currency encryption data which is about to be decrypted from now, and uses a key which has been held by the decryption unit 225 itself while the key is associated with the user ID in order to decrypt the virtual currency encryption data. Therefore, since the set of the algorithm and the key which were used when the virtual currency encryption data was encrypted by the encryption unit 125 of the user terminal 100 is completed, the decryption unit 225 can decrypt the virtual currency encryption data. As a result, the virtual currency encryption data returns to the original data in the plaintext state.

The decryption unit 225 sends the original data to the settlement determination unit 226 together with the data of the user ID and the settlement terminal ID which are included in a plaintext state in the virtual currency data. Note that, in this embodiment, based on the fact that the virtual currency encryption data has been successfully decrypted by the decryption unit 225, it has been temporarily determined or effectively determined that the virtual currency encryption data, and eventually, the virtual currency data containing the virtual currency encryption data is authentic.

On the other hand, if the virtual currency encryption data could not have been decrypted, information indicating this fact is sent from the decryption unit 225 to the settlement determination unit 226.

The settlement determination unit 226 receives, from the decryption unit 225, the original data, the user ID, and the settlement terminal ID, or the information indicating that the virtual currency encryption data could not have been decrypted.

When the original data, the user ID, and the settlement terminal ID out of the above data are received, the settlement determination unit 226 executes a settlement determination (S926).

As described above, the original data in this embodiment is the combination of the amount information and the user ID. On the other hand, the user ID which has been originally included in the virtual currency data is also sent to the settlement determination unit 226. The settlement determination unit 226 compares these two user IDs. When both the user IDs coincide with each other, the settlement determination unit 226 determines that the virtual currency encryption data is authentic. This is equivalent to verifying that the decryption executed in the decryption unit 225 has been correct.

However, since the confirmation as to whether the virtual currency encryption data is authentic has been actually performed based on the fact that the virtual currency encryption data could have been decrypted in the decryption unit 225, the confirmation as to whether the virtual currency encryption data is authentic may be omitted.

If the settlement determination unit 226 determines that the virtual currency encryption data is authentic, the settlement determination unit 226 generates final determination data indicating positive information that the payment of the amount of money specified by the amount information is accepted.

On the other hand, if the settlement determination unit 226 receives, from the decryption unit 225, information indicating that the virtual currency encryption data could not have been decrypted, or if it has not been determined that the virtual currency encryption data is authentic because the two user IDs did not coincide with each other, the settlement determination unit 226 generates final determination data indicating negative information that the payment of the amount of money specified by the amount information is not accepted.

In any case, the generated final determination data is sent from the settlement determination unit 226 to the main control unit 222.

The main control unit 222 receives the final determination data and performs the following processing.

When the final determination data is positive, the main control unit 222 executes processing of paying the amount of money specified by the final determination data to the administrator of the settlement terminal 300. The settlement processing is processing for accepting payment of money to the settlement terminal 300 that has transmitted the virtual currency encryption data. In this embodiment, the main control unit 222 holds data indicating what kind of settlement has been performed. For example, the main control unit 222 is configured to record, in a recording medium (not shown), information as to how much payment is finally accepted for whom (an administrator or the like of which settlement terminal 300) while the information being discriminated among the respective settlement terminals 300. These data are sent, for example, to a bank where a bank account specified by the administrator or the like of the settlement terminal 300 exists. As a result, for example, payment of the amount of money specified by the amount information is performed from the administrator of the settlement device 200 (or from a bank account or the like specified by a user using the virtual currency data) to the administrator or the like of the settlement terminal 300.

If the final determination data is positive, the main control unit 222 generates positive determination result data that is data including at least information indicating that the settlement has been performed, and the information of the amount of money of the settlement.

On the other hand, when the final determination data is negative, the main control unit 222 does not perform the settlement processing. In addition, the main control unit 222 generates negative determination result data that is data including at least information indicating that the settlement has not been performed.

In any case, the determination result data is sent from the main control unit 222 to the transmission and reception unit via the data input/output unit 221, and transmitted to the settlement terminal 300 via the network 400 (S927). The transmission of the determination result data to the settlement terminal 300 can be omitted, but will normally be performed.

The determination result data is received by the transmission and reception unit of the settlement terminal 300 (S933).

The determination result data received by the transmission and reception unit is sent to the main control unit 321 in the same manner as described above.

The main control unit 321 instructs the display control unit 322 to perform a display corresponding to the determination result data, and as a result, the display control unit 322 causes the display to perform the display corresponding to the determination result data (S934). Although not shown, for example, when the determination result data is positive, the display would be a display indicating that the settlement has been accepted, and the amount of money of the settlement, and when the determination result data is negative, the display would be a display indicating that the settlement has not been accepted. In the latter case, it would be better that information specifying a reason why the settlement has not been accepted is included in the determination result data, whereby the reason why the settlement has not been accepted is displayed on the display.

Note that it is possible to transmit the determination result data to the user terminal 100 so that the user terminal 100 also displays an image based on the determination result data on the display 101.

With the above processing, the processing of payment from the user to the administrator of the settlement terminal 300 using the virtual currency data is completed.

Note that in the above description, a recipient who is a designation to which the user pays with virtual currency data by using his or her own user terminal 100, and receives a monetary value based on the virtual currency data, is the administrator or the like of the settlement terminal 300. However, a recipient of payment based on virtual currency data using a certain user terminal 100 may be a user of another user terminal 100.

In that case, the user terminal 100 owned by the user who receives the payment may be configured to have functional blocks similar to those possessed by the settlement terminal 300 by installing, in the user terminal 100, a computer program similar to the computer program installed in the settlement terminal 300. This is possible if the user terminal 100 is a smartphone because the smartphone includes a computer. Further, the settlement terminal 300 has a camera as hardware, but if the user terminal 100 is a smartphone, the smartphone has a camera with common sense, so that the user terminal 100 satisfies that condition.

In this embodiment, the virtual currency data is delivered from the user terminal 100 to the settlement terminal 300 without using the network 400. However, regardless of whether such a delivery is a delivery of the virtual currency data from the user terminal 100 to the settlement terminal 300 or a delivery of the virtual currency data between the user terminals 100, such a delivery may be realized by transmission/reception of the virtual currency data via the network 400 (in some cases, transmission/reception via the settlement device 200 to prevent double transfer of the virtual currency data).

Furthermore, it is possible to merely transfer the virtual currency data between two user terminals 100, between a user terminal 100 and a settlement terminal 300, or between two settlement terminals 300 without performing the settlement processing in the settlement device 200. In that case, for example, when the virtual currency data is transferred between the user terminals 100, the user as a transferor inputs transfer information for transferring the virtual currency data to his or her own user terminal. The transfer information includes at least a content indicating which virtual currency data should be transferred to which user. The designation of the user as a transferee can be performed, for example, by a user ID. By performing such transfer through the settlement device 200, a double transfer problem of virtual currency data can be prevented. The transfer information is sent from the user terminal 100 operated by the user as the transferor to the settlement device 200 via the network 400, for example, together with virtual currency data. The settlement device 200 sends the virtual currency data to the user terminal 100 specified by the user ID. As a result, the virtual currency data is transferred or shifted from the user terminal 100 of the user as the transferor to the user terminal 100 of the user as a transferee. The virtual currency data is recorded in the user terminal recording unit 124 by the main control unit 121 in the user terminal 100 of the user as the transferee.

<Modification Example 1>

The settlement system according to Modification Example 1 is almost the same as the settlement system according to the first embodiment. In particular, the configuration of the settlement terminal 300 and the processing to be executed in the settlement terminal 300 are not different from those in the first embodiment.

The difference therebetween is in the configurations of the user terminal 100 and the settlement device 200, and the processing to be executed therein. However, the configurations of the user terminal 100 and the settlement device 200 according to Modification Example 1 and the processing to be executed therein are mostly identical to those of the first embodiment.

The difference between the settlement system according to Modification Example 1 and the settlement system according to the first embodiment resides in the data structure of virtual currency data used in the settlement system. In the first embodiment, the virtual currency data is obtained by attaching the plaintext user ID to the virtual currency encryption data. On the other hand, the virtual currency data used in the settlement system of Modification Example 1, which is not covered by the scope of the claims, is the virtual currency encryption data itself, and does not include any plaintext user ID.

A difference based on the difference regarding the data structure of the virtual currency data exists between the user terminal 100 and the settlement device 200 of Modification Example 1 and the user terminal 100 and the settlement device 200 of the first embodiment. Conversely, no particular difference exists between Modification Example 1 and the first embodiment except for the above difference. The user terminal 100 and the settlement device 200 of Modification Example 1 will be hereinafter described while focusing on the above difference. Unless otherwise noted, there is no difference.

First, the user terminal 100 according to Modification Example 1 will be described.

When receiving virtual currency encryption data from the encryption unit 125, the main control unit 121 in the user terminal 100 of the first embodiment is configured to attach a user ID to the received virtual currency encryption data to obtain virtual currency data. On the other hand, when receiving virtual currency encryption data from the encryption unit 125, the main control unit 121 of the user terminal 100 of Modification Example 1 is configured to perform no processing on the virtual currency encryption data and use the virtual currency encryption data as virtual currency data as it is.

Note that, in Modification Example 1, the encryption processing to be performed by the encryption unit 125 of each user terminal 100 is also one scheme that is always fixed.

Next, the settlement device 200 will be described.

As in the case of the settlement device 200 according to the first embodiment, the settlement device 200 according to Modification Example 1 is also configured to accept virtual currency data, for example, from the settlement terminal 300 that has received the virtual currency data from the user terminal 100.

Such virtual currency data is sent to the decryption unit 225 as in the case of the first embodiment. The decryption unit 225 is configured to decrypt virtual currency encryption data, which is virtual currency data itself, rather than being included in virtual currency data. There is no difference between the decryption unit 225 of Modification Example 1 and the decryption unit 225 of the first embodiment in that the virtual currency encryption data is decrypted, but the processing to be executed to decrypt the virtual currency encryption data is different therebetween.

In the first embodiment, as described above, when the decryption unit 225 decrypts the virtual currency encryption data, the key to be used for performing the decryption processing is specified by the user ID included in the virtual currency data. However, in Modification Example 1, as described above, the virtual currency data which the decryption unit 225 has received from the main control unit 121 does not include any user ID, and thus it is impossible to specify the key by using the user ID. Therefore, unlike the first embodiment in which the key to be used for the decryption processing is specified by using the user ID, thereby decrypting the virtual currency encryption data by only one attempt, the decryption unit 225 of Modification Example 1 decrypts the virtual currency encryption data by a plurality of attempts. The number of keys that the decryption unit 225 can use for decryption is equal to the number of user terminals 100, and thus it is finite. Accordingly, to speak of extremes, if the decryption unit 225 attempts to perform decryption processing while combining one algorithm to be used for decryption with all of keys to be used in the user terminals 100, the decryption unit 225 can theoretically decrypt virtual currency encryption data by the combination of the above algorithm and one of many keys unless the virtual currency encryption data has been tampered with or the like. The decryption unit 225 of Modification Example 1 decrypts the virtual currency encryption data by such a brute force attack approach.

Regardless of how many attempts have been made to decrypt the virtual currency encryption data, the subsequent processing in Modification Example 1 when the virtual currency encryption data has been decrypted may be the same as subsequent processing in the first embodiment when the virtual currency encryption data has been decrypted by one attempt. Of course, when the virtual currency encryption data has been decrypted, the processing of decrypting the virtual currency encryption data may be stopped at that time. Conversely, when the virtual currency encryption data cannot be decrypted, the decryption unit 225 will attempt to decrypt the virtual currency encryption data by using all keys whose number is equal to the number of user terminals 100. As a result, the subsequent processing in Modification Example 1 in the case where the virtual currency encryption data cannot be decrypted with any key may be the same as the subsequent processing in the first embodiment when the virtual currency encryption data cannot be decrypted by only one attempt.

Even when such a brute force attack approach of decrypting the virtual currency encryption data by using all of the keys that may be used in the user terminal 100 is performed, in the case where the number of the user terminals 100 is too large, the number of times of decryption to be attempted becomes too large, so that the time required for decrypting the virtual currency encryption data becomes longer. In order to avoid such a trouble, for example, it is possible to create a rule as described below. For example, a validated period for virtual currency encryption data or virtual currency data is limited.

When a validated period is set for virtual currency data, the following means may be adopted.

When a validated period is set for virtual currency data, in addition to the virtual currency encryption data, plaintext time information is attached to the virtual currency data. The time information is, for example, information for specifying the date and time when the user input the start information in S911 to his or her user terminal 100. The time information is not required to be information for specifying the date and time when the start information was input, and may be information for specifying a time at which the user ID and the amount information were input in S912, a time at which transmission of the user ID and the amount information to the settlement device 200 in S913 was performed. Although not limited thereto, it is assumed that the time information in this case is information for specifying the time at which transmission of the user ID and the amount information to the settlement device 200 in S913 was performed. In short, for example, the virtual currency data has been subjected to a time stamp.

In order to generate such virtual currency data in the user terminal 100, for example, the main control unit 121 in the user terminal 100 may attach time information generated by a clock function provided in the main control unit 121 to the virtual currency encryption data sent from the encryption unit 125.

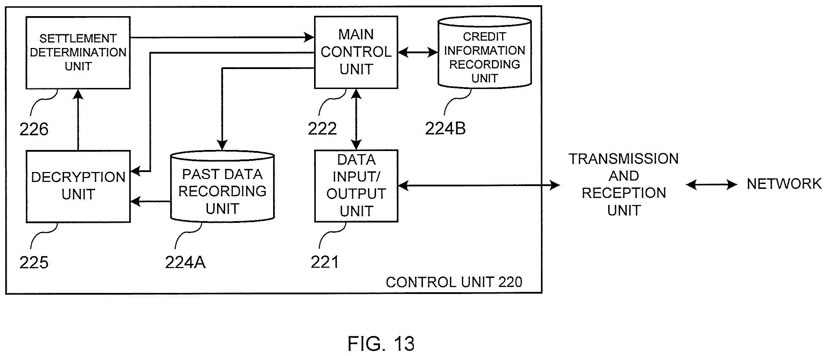

The functional blocks of the settlement device 200 include a past data recording unit 224A as shown in FIG. 13. The main control unit 222 records data as described below in the past data recording unit 224A. In the first embodiment, the user terminal 100 transmits the user ID and the amount information to the settlement device 200 in the processing of S913 in order to obtain permission to issue virtual currency data. The settlement device 200 of the first embodiment makes a credit determination using the user ID thereof and the amount information, and there is no other application for use of the user ID and the amount information. On the other hand, when the settlement device 200 of Modification Example 1 receives the user ID and the amount information from the user terminal 100 as in the case of the first embodiment, the settlement device 200 makes a credit determination by using the user ID and the amount information, and also uses the received user ID to manage the validated period of the virtual currency data.

When the main control unit 222 receives the user ID and the amount information from the user terminal 100 by processes similar to that in the case of the first embodiment, the main control unit 222 records the received user ID in the past data recording unit 224A. Since the user ID and the amount information have been sent from many user terminals 100 to the settlement device 200 in order to obtain permission to issue virtual currency data, many user IDs have been recorded in the past data recording unit 224A. When recording a user ID in the past data recording unit 224A, the main control unit 222 writes data on a date and time when the user ID is recorded in the past data recording unit 224A or a date and time when the settlement device 200 has received the user ID from a user terminal 100 via the network 400 while associating the data with the user ID. On the other hand, the main control unit 222 is configured to delete a user ID recorded in the past data recording unit 224A when a predetermined time has elapsed since the user ID was recorded in the past data recording unit 224A. For example, the main control unit 222 of the settlement device 200 is configured to record a user ID in the past data recording unit 224A while associating the user ID with the date and time when the settlement device 200 has received the user ID and the amount information from the user terminal 100, and also delete the user ID when 10 minutes have passed since the user ID was recorded in the past data recording unit 224A. As a result, in the past data recording unit 224A, user IDs of user terminals 100 that have sent the user IDs and the amount information to the settlement device 200 have been recorded during the past 10 minutes while constantly updated.

In this case, when receiving virtual currency data from the main control unit 222, the decryption unit 225 first checks whether a predetermined time (normally, this time is set to be equal to a time interval from a time when a user ID recorded in the past data recording unit 224A is recorded till a time when the user ID is deleted) has elapsed at the present time point from a time specified by time information included in the virtual currency data. As a result, when the predetermined time has not elapsed, the decryption unit 225 attempts to perform decryption. On the other hand, when the predetermined time has already elapsed, the decryption unit 225 determines that the virtual currency data is out of the validated period, and does not attempt to decrypt the virtual currency encryption data included in the virtual currency data. The treatment of the virtual currency encryption data in this case is the same as the case where the virtual currency encryption data could not be decrypted.

As a result of checking whether the predetermined time has elapsed at the present time point from the time specified by the time information included in the virtual currency data, when the predetermined time has not elapsed, the decryption unit 225 reads out, from the past data recording unit 224A, all user IDs which have been recorded in the past data recording unit 224A at that time point, and attempts to decrypt the virtual currency encryption data included in the virtual currency data by using keys which have been recorded in the decryption unit 225 in association with all of the read-out user IDs.

According to such processing, the number of times of encryption of the virtual currency encryption data attempted by the decryption unit 225 is equal to the number of user IDs read out from the past data recording unit 224A. According to this, there hardly occurs a trouble in which the number of times of decryption to be attempted becomes too large, and thus the time required for decrypting virtual currency encryption data becomes longer. As a result, the subsequent processing when the virtual currency encryption data has been successfully decrypted and the subsequent processing when the virtual currency encryption data has not been decrypted may be performed in accordance with the first embodiment as described above.

In this manner, the validated period of the virtual currency data or the virtual currency encryption data is, roughly speaking, a period from the issuance of the virtual currency data till lapse of a predetermined time (a time from recording of the user ID recorded in the past data recording unit 224A till deletion of the user ID). It is expected that such virtual currency data is easily applied to a case where payment is made immediately at a store or a restaurant, such as currently-used settlement using credit cards.

<Modification Example 2>

A settlement system according to Modification Example 2 is almost the same as the settlement system according to the first embodiment. In particular, the configuration of the settlement terminal 300 and the processing executed in the settlement terminal 300 are not different from those in the first embodiment.

On the other hand, in Modification Example 2, the data structure of the virtual currency data is slightly different from that of the first embodiment. The virtual currency data in the first embodiment is the combination of the virtual currency encryption data and the user ID, and the virtual currency encryption data is data obtained by combining the amount information and the user ID and then encrypting the same. On the other hand, the virtual currency data of Modification Example 2 includes the virtual currency encryption data and the user ID which are the same as in the case of the first embodiment, and encryption condition data of the invention of the present application which is not included in the virtual currency data of the first embodiment.

Further, the configurations of the user terminal 100 and the settlement device 200 in Modification Example 2 and the processing to be executed therein are slightly different from those in the first embodiment. However, the configurations of the user terminal 100 and the settlement device 200 of Modification Example 2 and the processing to be executed therein are mostly identical to those of the first embodiment.

In the settlement system of the first embodiment, the encryption method to be executed by the encryption unit 125 of the user terminal 100 when respective virtual currency encryption data included in many virtual currency data are generated is identical among all cases where virtual currency encryption data is generated. On the other hand, in this Modification Example, there are a plurality of encryption methods as the encryption method to be executed in order to obtain virtual currency encryption data from original data by the encryption unit 125 of each user terminal 100, or the encryption method changes at a predetermined timing.

Therefore, the decryption processing to be executed by the decryption unit 225 of the settlement device 200 of Modification Example 2 is also appropriately changed in accordance with (or in synchronization with) the change of the encryption scheme even when virtual currency encryption data included in virtual currency data issued in the same user terminal 100 are decrypted. More specifically, when the decryption unit 225 of the settlement device 200 attempts to decrypt virtual currency encryption data included in some virtual currency data received from a settlement terminal 300, it is impossible for the decryption unit 225 to perform the decryption processing unless it can be grasped which one of a plurality of user terminals 100 has issued the virtual currency encryption data and also which one of a plurality of encryption methods to be executable by the encryption unit 125 of the user terminal 100 was used to perform encryption. What makes this possible is the difference of the settlement device 200 of Modification Example 2 from the settlement device 200 of the first embodiment.

Hereinafter, the configurations of the user terminal 100 and the settlement device 200 according to Modification Example 2 and the processing to be executed therein will be described while focusing on the differences from the first embodiment. Unless otherwise noted, there is no difference.

First, the user terminal 100 and the processing to be performed therein will be described.

As described above, it is assumed in Modification Example 2 that the encryption to be performed in the encryption unit 125 changes at a predetermined timing. For example, a scheme used to encrypt original data in the encryption unit 125 of each user terminal 100 is assumed to change every time encryption of the original data is performed three times, or every time the date at a place where the settlement device 200 is located changes. Although not limited thereto, in this Example 2, each user terminal 100 is configured to change the encryption scheme every time the encryption unit 125 in each user terminal 100 performs the processing of encrypting original data into virtual currency encryption data. Therefore, as described below, the decryption processing to be performed on each virtual currency encryption data by the decryption unit 225 of the settlement device 200 also changes accordingly.

In order to change the encryption and decryption methods, there are three types of changing the algorithm, changing the key, and changing both the algorithm and the key, which are all adoptable, but the type of changing the key is also used in Modification Example 2.

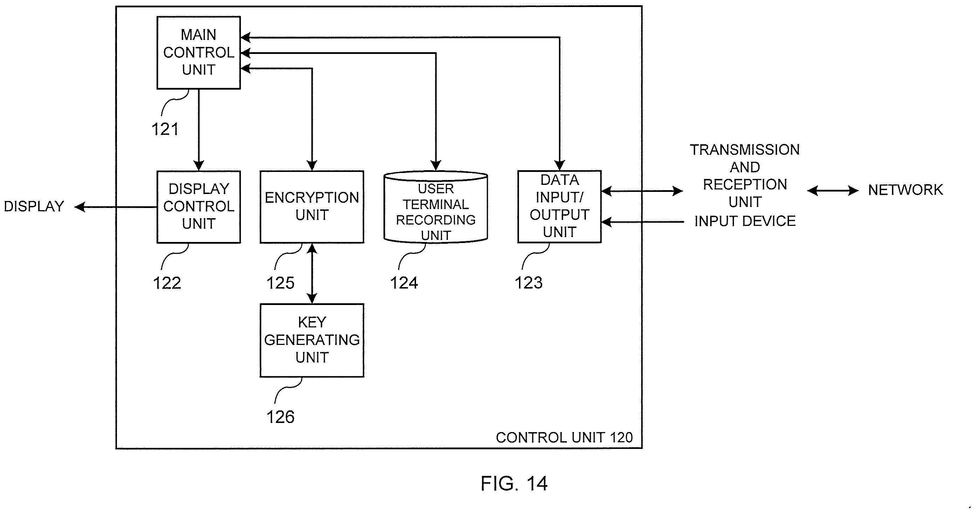

In Modification Example 2, a key generating unit 126 plays an important role in changing the key. FIG. 14 shows functional blocks generated in the user terminal 100. The functional blocks of the user terminal 100 according to Modification Example 2 are different from the functional blocks of the user terminal 100 according to the first embodiment in that the key generating unit 126 which is not present in the functional blocks of the user terminal 100 in the first embodiment is present in the functional blocks of the user terminal 100 in Modification Example 2.

The key generating unit 126 serves to generate a key to be used when the encryption processing is performed in the encryption unit 125.

Next, a key generating method to be executed in the key generating unit 126 of the user terminal 100 of Modification Example 2 and a timing at which the key is provided to the encryption unit 125 will be described.

The timing at which the key generating unit 126 supplies a key to the encryption unit 125 is a timing immediately before the encryption unit 125 performs the encryption processing.

As described above, when receiving original data from the main control unit 121, the encryption unit 125 performs the processing of encrypting the original data. When receiving the original data, the encryption unit 125 of Modification Example 2 sends data for requesting key generation to the key generating unit 126 before performing the encryption processing on the original data. The key generating unit 126 that has received this data generates data of a key, and sends it to the encryption unit 125. The encryption unit 125 encrypts the original data with an invariant algorithm and the provided key to obtain virtual currency encryption data.

For example, the key generating unit 126 generates a key as follows. The key is generated as a "solution" in the following description, and is generated as an enumeration of at least one of alphabetic characters, numbers, and symbols. The solution can be, for example, a pseudo-random number sequence which is always the same under a certain condition and has initial solution dependency. An example of generating the solution is a publicly known and well-known one-time password generation method in which one-time passwords are continuously generated from a certain initial solution.

Note that the one-time password is processing for generating a common password at two remote devices. A method called event synchronization and a method called time synchronization are known as a scheme of generating a common password at remote places. The event synchronization is a manner of synchronizing solutions requiring, as the key point, such an order that solutions generated in the same order are always the same in the case where solutions are successively generated based on an initial solution to be described below. Further, the time synchronization is a manner of synchronizing solutions requiring, as the key point, such a time that solutions generated at the same date and time based on an initial solution are always the same. The key generating unit 126 in the user terminal 100 of Modification Example 2 and a key generating unit 227 described below in the settlement device 200 are configured to be capable of generating the same solution by either the event synchronization or the time synchronization.

A case described below is mainly a case where the event synchronization is adopted.

In order to generate the solution in this embodiment, a scheme of substituting a past solution into a predetermined function using a certain initial solution (which may be two or more initial solutions) and thereby sequentially creating a new solution may be executed each time the solution is required. Thereby, the solution, which is the above "value", can be continuously generated. Such a solution becomes a pseudo-random number having initial solution dependency.

Examples of the function used for creating the above-described "solution" include the following (a) to (c). Each of the following (a) to (c) is an expression for creating $X_N$ that is the N-th "solution". Moreover, P, Q, R, and S are natural numbers.

$$(a) \quad (X_N) \ = \ (X_{N-1})^P \ + \ (X_{N-2})^Q$$

$$(b) \quad (X_N) \ = \ (X_{N-1})^P$$

$$(c) \quad (X_N) \ = \ (X_{N-1})^P \ (X_{N-2})^Q \ (X_{N-3})^R \ (X_{N-4})^S$$

The expression (a) generates a new "solution" by using past two "solutions", raising the two solutions to the P-th power and the Q-th power respectively, and summing them. It should be noted that, precisely, when the past two "values" are used and the values raised to the P-th power and the Q-th power are added, the number of digits increases, and thus the new "solution" is actually generated by extracting the appropriate number of digits from the beginning of an obtained value, extracting the appropriate number of digits from the end of the value, or extracting the appropriate number of digits from an appropriate portion of the value or the like.

The expression (b) has a new "solution" using one past "solution" to arrange the number of digits of the value raised to the P-th power as described above.

The expression (c) has a new "solution" using four past "solutions" to take the product of them raised to the P-th power, the Q-th power, the R-th power, and the S-th power, respectively, and then arranging the number of digits as described above.

The above-described expressions (a) to (c) are an example of an algorithm for generating the solution (having a different characteristic from that of the algorithm used for the encryption processing), and a change can be added to the algorithm when the solution is generated, for example, a change can also be added in which the above-described expressions (a) to (c) are used in rotation or the like.

If the solution is generated by such a method, a first solution generated based on a certain initial solution is always the same, a second solution generated is also always the same, and similarly an N-th solution generated is also always the same. This is the initial solution dependency.

Note that the key generating unit 126 records how many solutions have been generated in the past. In other words, when the solution generated immediately before is an N-th solution, a solution to be next generated is an (N+1)-th solution, and the number of solutions generated in the past is recorded so that continuous solutions having no duplication can be generated.

By using the solution generated as described above as a key, the encryption unit 125 encrypts the data indicated in the original data to generate virtual currency encryption data.

The virtual currency encryption data is sent to the main control unit 121 as in the case of the first embodiment. However, in the case of Modification Example 2, the encryption unit 125 sends, to the main control unit 121, not only the virtual currency encryption data, but also a numeral specifying how many virtual currency encryption data were generated before the above virtual currency encryption data (that is, what number key was used to encrypt the above virtual currency encryption data). Although not limited thereto, for example, this numeral may be a serial number starting from 1, which is the case in this embodiment. In other words, data of "1" is attached to virtual currency encryption data generated first, data of "2" is attached to virtual currency encryption data generated secondly, and data of "N" is attached to virtual currency encryption data generated in N-th turn, and the encryption unit 125 sends the data to the main control unit 121.

The main control unit 121 adds the user ID and the above numerical data to the virtual currency encryption data in a plaintext state. The numerical data is a unique serial number indicating how many virtual currency data were issued before the virtual currency data at the user terminal 100 that issued the above virtual currency data, and the character thereof is similar to that of a serial number described in a bill of legal money. Therefore, this is referred to as a serial number or serial number data. In other words, the virtual currency data is obtained by adding the user ID and the serial number to the virtual currency encryption data.

The scheme of using the virtual currency data is the same as that of the first embodiment, and is delivered from the user terminal 100 to, for example, the settlement terminal 300, and sent from the settlement terminal 300 to the settlement device 200 together with the settlement terminal ID.

The virtual currency data is sent from the main control unit 222 to the decryption unit 225 together with the settlement terminal ID as in the case of the first embodiment.

As in the first embodiment, in the settlement device 200, the virtual currency encryption data is sent to the decryption unit 225 via the main control unit 222. The decryption unit 225 decrypts the virtual currency encryption data as in the case of the first embodiment.

However, in order to do so, it is basically necessary to specify a key used in the encryption unit 125 of the user terminal 100 which encrypted the virtual currency encryption data. More specifically, it would be impossible for the decryption unit 225 to correctly perform the decryption processing unless two matters, that is, the virtual currency encryption data was encrypted by the encryption unit 125 of which user terminal 100, and the encryption unit 125 encrypted the virtual currency encryption data with what number key are grasped.

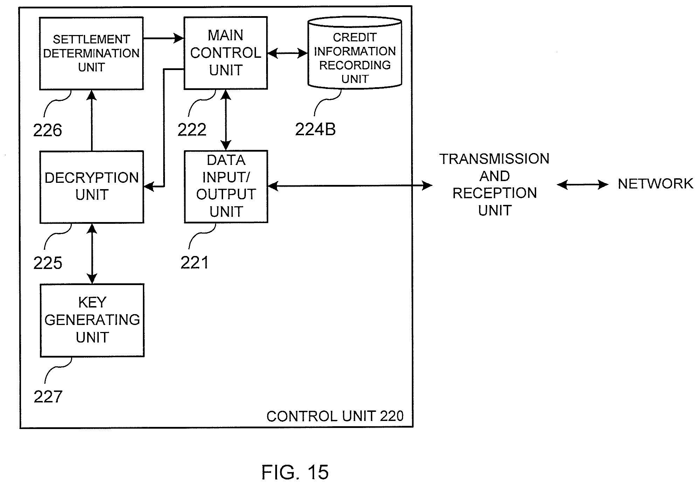

In the user terminal 100, the key generating unit 126 plays an important role in changing the key. Similarly, in the settlement device 200, the key generating unit 227 plays an important role in changing the key. FIG. 15 shows functional blocks generated in the settlement device 200. The functional blocks in the settlement device 200 according to Modification Example 2 are different from the functional blocks of the settlement device 200 according to the first embodiment in that the key generating unit 227 which is not present in the functional blocks of the settlement device 200 in the first embodiment is present in the functional blocks of the settlement device 200 of Modification Example 2.

The key generating unit 227 generates a key to be used when the decryption processing is executed in the decryption unit 225.

Next, a key generating method to be executed in the key generating unit 227 of the settlement device 200 according to Modification Example 2, and a timing at which a key is provided to the decryption unit 225 will be described.

The timing at which the key generating unit 227 provides a key to the decryption unit 225 is a timing immediately before the decryption unit 225 performs the decryption processing.

As described above, when receiving the virtual currency data from the main control unit 222, the decryption unit 225 performs the processing of decrypting the virtual currency encryption data included in the virtual currency data. When receiving the virtual currency data, the decryption unit 225 of Modification Example 2 sends data for requesting key generation to the key generating unit 227 before performing the processing of decrypting the virtual currency encryption data. The key generating unit 227 that has received this data generates data of a key, and sends the data to the decryption unit 225. The decryption unit 225 obtains the original data by decrypting the virtual currency encryption data using the invariant algorithm and the provided key.

Here, the key generating unit 227 is configured to be capable of generating the same key as the key generated by each of the key generating units 126 in the respective user terminals 100.

The key generating unit 227 records an algorithm for generating a solution possessed by the key generating unit 126 in each user terminal 100, and an initial solution for generating a solution possessed by the key generating unit 126 in each user terminal 100 while associating the algorithm and the key with the user ID of each user terminal 100. Therefore, the key generating unit 227 can generate the same solution as that generated by the key generating unit 126 of each user terminal 100.

When requesting the key generating unit 227 to generate a key, the decryption unit 225 transmits the user ID and the serial number included in the virtual currency data to the key generating unit 227 together with the request. The key generating unit 227 generates a solution using an initial solution associated with the received user ID and an algorithm for generating the solution as in the same manner performed in each user terminal 100. An answer as to how many solutions are sequentially generated by the decryption unit 225 by using the foregoing expressions (a) to (c) is that solutions whose "number is specified by a serial number". In other words, the decryption unit 225 generates solutions up to a second solution when the serial number is 2, solutions up to a third solution when the serial number is 3, and solutions up to an N-th solution when the serial number is N. It has been described above that in order for the decryption unit 225 to decrypt the virtual currency encryption data, "it is required to grasp that the virtual currency encryption data is encrypted by the encryption unit 125 of which user terminal 100, and the virtual currency encryption data is decrypted with what number key in the encryption unit 125." The former can be grasped based on the user ID, and the latter can be grasped based on the serial number. In other words, in Modification Example 2, the serial number information is the encryption condition data referred to in the present invention, and the user ID also serves as the encryption condition data.

The key generating unit 227 sends the finally generated solution to the decryption unit 225 as the solution to be used for decryption.

By using such a key and a fixed algorithm, the decryption unit 225 decrypts the virtual currency encryption data. Since the solution and algorithm to be used here coincide with the solution and the algorithm used in the encryption unit 125 that encrypted the virtual currency encryption data, the decryption unit 225 can decrypt the virtual currency encryption data.

Note that the encryption condition data included in the virtual currency data has been described to be a plaintext, but it may be in an encrypted state. However, when the encryption condition data is encrypted, it is practical to use the same encryption method for at least each user terminal 100. This is because if the encryption condition data included in each virtual currency data is encrypted by a different method (for example, a different key), for decryption of each encryption condition data, a condition for decrypting the encryption condition data (an encryption condition when the encrypted encryption condition data is encrypted) is required. If the encryption method of the encryption condition data is the same for at least each user terminal 100, the decryption unit 225 decrypts the encrypted encryption condition data to return the encrypted encryption condition data to plaintext encryption condition data before decryption of the virtual currency encryption data, and then the plaintext encryption condition data (serial number data) can be used in the same manner as described above.

Irrespective of whether the virtual currency encryption data can be decrypted or not, the subsequent processing in Modification Example 2 is the same as that of the first embodiment.

Note that the key generating unit 126 of the user terminal 100 and the key generating unit 227 of the settlement device 200 according to Modification Example 2 are configured to generate the same solution (the key used in the encryption unit 125 or the decryption unit 225) by so-called event synchronization as described above. However, in an implementation example which does not fall within the scope of the claims, the same solution may be generated by time synchronization.

An example will be described.

First, the key generating unit 126 in the user terminal 100 will be described.

When generating a solution, the key generating unit 126 uses an initial solution possessed by the key generating unit 126 as in the case of adopting the event synchronization. The data of the initial solution is assumed to be, for example, a character string including a mixture of a 20-digit number and lowercase alphabetic characters. Such an initial solution is unique to each user terminal 100. There may be one initial solution, but there are five solutions in this embodiment. The key generating unit 126 generates a solution by using all of the five initial solutions.

The key generating unit 126 performs an arithmetic operation on these initial solutions to generate a solution at that time point, that is, a time point when a request for generating a solution has received from the encryption unit 125. First, the initial solutions are converted to only numerals so that the arithmetic operation can be performed. When an alphabetical character is contained in the initial solutions, the alphabetical character is replaced with a two-digit numeral. The numeral for replacement is an alphabetical order of the alphabetical character. For example, "a" is replaced with "01", "b" is replaced with "02", and "z" is replaced with "26". For example, it is assumed that an initial solution is "5a6458p6556ff4272149". In this case, if the initial solution is converted to only a numeral according to the above-mentioned rule, the numeral becomes "50164581665560606 4272149". If only numerals are used, the number of digits would increase according to the number of alphabetic characters included in the initial solution. Note that if symbols such as (,), !, &, :, etc. are desired to be included in the solution, appropriate numerals may be assigned like "27" is assigned to "(", "28" is assigned to ")", "29" is assigned to "!", etc.

Next, the arithmetic operation is performed on the numerals. A sequence of numerals that is the source of the solution is obtained as a result of this arithmetic operation. Assuming that the sequence of numerals is represented by X, X is obtained as follows according to the year, month, day, hour, and minute in the Christian era at that time. $X_1$, $X_2$, $X_3$, $X_4$, and $X_5$ in the following expression are obtained by converting the five initial solutions into numerals. In this embodiment, the five initial solutions are provided because the solution is changed according to five elements of the year, month, day, hour, and minute in the Christian era.

$$X = X_1{}^P + X_2{}^Q + X_3{}^R + X_4{}^S + X_5{}^T$$

Here, P = the numeral of last two digits of the year in the Christian era, Q = the numeral of the month, R = the numeral of the day, S = the numeral of the hour, and T = the numeral of the minute. In this way, a different sequence of numerals can be obtained according to the time at that time. Note that the reason why the process of adding "1" is added in all of P to T is that when all of P to T happen to be equal to 0, the finally obtained solution X becomes 5, and thus frequent appearance of such a simple numeral should be avoided.

Note that for example, if the following mathematical expression is used, only one initial solution may be used.

$$X = X_1{}^P X_1{}^Q + X_1{}^R X_1{}^S + X_1{}^T$$

As a result of execution of the above-described arithmetic operation, a sequence X of numerals that is the source of the solution is obtained. Next, if any two digits in the sequence of numerals include numerals 01 to 26, these numerals are replaced with alphabetic characters a to z according to an inverted rule to the replacement rule from alphabetic characters to numerals described above.

A character string including a mixture of numerals and lowercase alphabetic characters obtained in this way has 20 or more digits in number of digits. When the number of digits is 20 or more digits, for example, 20 characters from the head of the character string are extracted, and set as a solution. When the number of digits of the character string including a mixture of numerals and lowercase alphabetic characters obtained as described above is just 20 digits, it is set as a solution as it is. When the number of digits of the character strings including a mixture of numerals and lowercase alphabetic characters obtained as described above is less than 20, the number of digits is increased based on some rule. For example, some numerals or some characters may be inserted into the character string based on the first numeral or alphabetic character of the character string until the number of digits reaches 20 digits. Alternatively, the following method may also be adopted. The above-mentioned process of replacing numerals with alphabetic characters is executed on a sequence of numerals obtained by exchanging P and T with each other in the above mathematic expression and then performing the arithmetic operation, thereby generating a character string including a mixture of new numerals and new lowercase alphabetic characters, and the thus-generated character string is linked to the tail of the mixture of the original numerals and lowercase alphabetic characters. This operation is repeated until the number of digits reaches at least 20 digits, and 20 characters from the head of the resultant characters are extracted and set as a solution.

In any case, this operation generates a solution corresponding to the date and time at that time point.

Further, the key generating unit 227 in the settlement device 200 in the case where the time synchronization is adopted is also configured to be capable of executing processing similar to the above processing to be executed by the key generating unit 126 in each user terminal 100. The key generating unit 227 in this case also records an initial solution to be used in each user terminal 100 in association with the user ID of each user terminal 100, similarly to the key generating unit 227 adopting the event synchronization. By using this, the same solution as that generated by the key generating unit 126 can also be generated in the key generating unit 227.

However, in order to enable the foregoing operation, it is necessary that the key generating unit 227 grasps the following two matters: which user terminal 100 encrypted virtual currency encryption data to be decrypted from now; and when a key (solution) with which the virtual currency encryption data was encrypted was generated. Therefore, when the event synchronization is adopted, time information is used instead of a serial number as encryption condition data included in virtual currency data. Here, the time information is information for specifying the date and time when the key was generated in the key generating unit 126 of the user terminal 100. Such time information is, for example, information which is received from the key generating unit 126 and included in the virtual currency data by the main control unit 121 of the user terminal 100.

When requesting key generation to the key generating unit 227, the decryption unit 225 sends a user ID and time information included in virtual currency data to the key generating unit 227 together with the request. The key generating unit 227 that has received these two data can grasp, from the user ID, which user terminal 100 encrypted virtual currency encryption data to be decrypted from now, and further can grasp, from the time information, when a key (solution) with which the virtual currency encryption data was encrypted was generated.

Thus, the decryption unit 225 can perform the decryption processing using the same algorithm and key set as the algorithm and key set used when the encryption processing was executed in the encryption unit 125, so that the decryption unit 225 can decrypt the virtual currency encryption data.

Note that, even in the case of Modification Example 2, it is possible to adopt the brute force attack approach described in Modification Example 1 for the decryption processing to be performed in the decryption unit 225. An example of the above case will be described below. Note that the example described below is assumed to be a case where the event synchronization is adopted.

For example, it is assumed that virtual currency data is virtual currency encryption data itself, and the virtual currency data includes neither a user ID nor serial number information. To speak of extremes, even if virtual currency data received by the decryption unit 225 is such virtual currency data, the decryption unit 225 can decrypt virtual currency encryption data included in such virtual currency data (or virtual currency encryption data which is virtual currency data itself).

This is because the decryption unit 225 in the case where the event synchronization is adopted grasps the algorithm used for the encryption processing in the encryption units 125 of all the user terminals 100, and can also receive keys that may be generated by the key generating units 126 in all the user terminals 100, from these key generating units 227. If such two conditions are satisfied, an attempt of performing decryption while combining an algorithm used in one user terminal 100 with all keys which may be used in the user terminal 100 (for example, a finite number of keys in a commonsense range) is performed for algorithms used in all the user terminals 100 and all usable keys in all the user terminals 100, whereby it would be possible to decrypt the virtual currency encryption data sometime.

Although it is theoretically possible to perform such decryption of virtual currency encryption data, it can be easily understood, but the number of times of decryption processing to be attempted by the decryption unit 225 increases enormously.

In order to avoid such a situation, for example, the following processing is possible. For example, virtual currency data generated by the user terminal 100 is set to include no serial number, but include virtual currency encryption data and a user ID. When such virtual currency data is generated, the main control unit 121 attaches only the user ID to the virtual currency encryption data received from the encryption unit 125 as in the case of the first embodiment to set virtual currency data. Further, the encryption unit 125 in each user terminal 100 in this case uses a different key provided from the key generating unit 126 every time encrypting original data to convert it to virtual currency encryption data as in the above case.

Even in the case where the virtual currency data is such data, the settlement device 200 accepts the virtual currency data from the settlement terminal 300 or the like via the network 400.

The virtual currency data accepted by the settlement device 200 is sent from the main control unit 222 to the decryption unit 225.

Here, in order to decrypt the virtual currency encryption data included in the received virtual currency data, the decryption unit 225 sends a key generation request to the key generating unit 227 together with the user ID included in the virtual currency data. Since no serial number is included in the virtual currency data, the decryption unit 225 does not send serial number data to the key generating unit 227.

However, as described above, the key generating unit 227 records an algorithm for generating a solution held by the key generating unit 126 in each user terminal 100 and an initial solution for generating a solution possessed by the key generating unit 126 in each user terminal 100 in association with the user ID of each user terminal 100, whereby the key generating unit 227 can generate keys identical to all keys which may be generated in the key generating units 126 of all the user terminals 100. For example, the key generating unit 227 generates a large number of keys (a finite number within a commonsense range, for example, 10,000 or 100,000) that can be generated in the key generating unit 126 of the user terminal 100 corresponding to the user ID sent from the decryption unit 225, and sends the large number of generated keys to the decryption unit 225. Further, the decryption unit 225 attempts to perform decryption with the large number of received keys and the fixed algorithm by the brute force attack, thereby performing the decryption with one of the keys.

Such a brute force attack decryption method may be used.

However, even in this scheme, the number of keys may be large. When this scheme is adopted, the number of keys to be generated by the key generating unit 227 is set to a number at which the probability that the generated keys include a key which was generated in the key generating unit 126 of the user terminal 100 specified by the user ID included in the virtual currency data, or used to encrypt the virtual currency encryption data included in the virtual currency data by the encryption unit 125 of the above user terminal 100 is approximately equal to 100 %. If this number becomes too large, it may take a long time to execute the above-described decryption scheme.

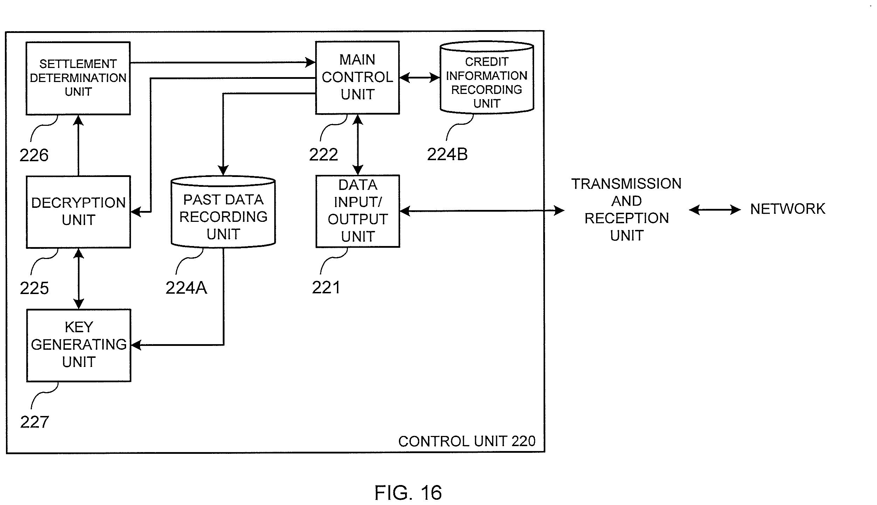

In order to prevent such a situation, for example, as shown in FIG. 16, means for providing the past data recording unit 224A in the functional blocks can be adopted. In this case, the main control unit 222 writes data into the past data recording unit 224A as in the above case, but the data to be written into the past data recording unit 224A in this case is the following data which is different from that described above.

The settlement device 200 adopting the brute force attack approach of Modification Example 2 in the decryption unit 225 is configured so that when receiving a user ID and amount information from a user terminal 100, the settlement device 200 records the number of times of receiving the user ID and the amount information with respect to each user ID into the past data recording unit 224A as in the case of the first embodiment.

Further, the key generating unit 227 which accepts a key generation request from the decryption unit 225 together with a user ID reads, from the past data recording unit 224A, the number of times at which the user ID has been sent to the settlement device 200 and which is associated with the user ID, generates solutions whose number corresponds to the number of times, and sends the solutions to the decryption unit 225. In other words, the number of times which is associated with each user ID recorded in the past data recording unit 224A and at which the user ID has been sent to the settlement device 200 defines an upper limit of the number of keys to be generated by the key generating unit 227. Even if such definition is applied, the decryption unit 225 can decrypt the virtual currency encryption data. This is because, even in Modification Example 2, when issuing the virtual currency data, the user terminal 100 must send the user ID and the amount information to the settlement device 200 before the issuance of the virtual currency data, and thus the number of keys generated by the key generating unit 126 in the user terminal 100 that subsequently received permission information does not exceed the number of times at which the settlement device 200 has received the user ID and the amount information. In other words, the key generated by the encryption unit 125 of the user terminal 100 is necessarily included in the keys generated in the key generating unit 227 of the settlement device 200.

A method of setting a validated period for virtual currency data described in the latter half of the description on Modification Example 2 can be adopted as a method of reducing the number of keys required when the decryption unit 225 attempts to decrypt virtual currency encryption data by the brute force attack approach.

A method for using the validated period for virtual currency data in Modification Example 2 will be described.

When a validated period as described in Modification Example 1 is given to virtual currency data in the settlement system of Modification Example 2, for example, it is necessary that the same device as in Modification Example 1 is applied to the user terminal 100 and the settlement device 200, and virtual currency data.

First, as in the case of Modification Example 1, in addition to virtual currency encryption data, plaintext time information is attached to the virtual currency data of Modification Example 2 to which a validated period is given. Here, as in the case of Modification Example 1, it is assumed that the virtual currency data includes neither the user ID nor the serial number. The time information may be the same as that in Modification Example 1, and it is assumed to be information specifying the time at which the user ID and the amount information in S913 were sent to the settlement device 200.

The scheme of generating such virtual currency data in the user terminal 100 may be the same as that in the case of Modification Example 1. For example, the main control unit 121 in the user terminal 100 attaches the time information to the virtual currency encryption data sent from the encryption unit 125.

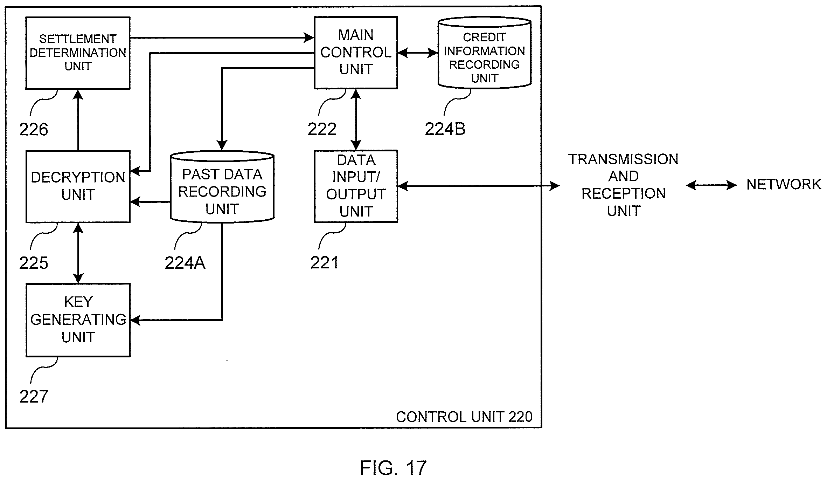

The functional blocks of the settlement device 200 include a past data recording unit 224A as shown in FIG. 17. However, the content recorded in the past data recording unit 224A is different from the content described in Modification Example 2 with reference to FIG. 16. The content described in Modification Example 1 is written in the past data recording unit 224A by the main control unit 222. In other words, the user IDs of user terminals 100 that have sent the user IDs and amount information to the settlement device 200 during a predetermined period of time in the past, for example, during past 10 minutes are recorded in the past data recording unit 224A while being updated. A scheme of recording the user IDs may be as described in Modification Example 1.

As in the case where a validated period is set to virtual currency data in Modification Example 1, when receiving virtual currency data from the main control unit 222, the decryption unit 225 of the settlement device 200 of Modification Example 2 in this case first checks whether a predetermined time (usually, this time is set to a time interval from a time when the user ID recorded in the past data recording unit 224A is recorded till a time when the user ID is deleted) has elapsed at the present time from a time specified by time information included in the virtual currency data. As a result, when the predetermined time has not elapsed, the decryption unit 225 attempts to decrypt the virtual currency data. On the other hand, when the predetermined time has already elapsed, the decryption unit 225 determines that the virtual currency data is out of the validated period and does not attempt to decrypt the virtual currency encryption data included in the virtual currency data.

As a result of checking whether the predetermined time has elapsed at the present time from the time specified by the time information included in the virtual currency data, when the predetermined time has not elapsed, the decryption unit 225 reads, from the past data recording unit 224A, all user IDs which have been recorded in the past data recording unit 224A at that time point. In the case of Modification Example 1, the decryption unit 225 attempts to decrypt the virtual currency encryption data by using keys associated with all the user IDs read from the past data recording unit 224A out of the user IDs possessed by the decryption unit 225. However, in Modification Example 2, the key is changed one after another, and thus the decryption unit 225 requests key generation to the key generating unit 227 at this time. The decryption unit 225 sends all the user IDs read from the past data recording unit 224A together with the request.

The key generating unit 227 generates a commonsensible number of keys usable in the encryption units 125 of user terminals 100 to which all the user IDs are assigned, or a commonsensible number of keys which can be generated in the key generating units 126 of the user terminals 100 to which all the user IDs are assigned, and sends these keys to the decryption unit 225.

If the decryption is attempted with all the received keys by the brute force attack, the decryption unit 225 would be able to decrypt the virtual currency encryption data. In addition, the number of times of the decryption processing to be attempted at this time is smaller than that in a case where the user IDs are not narrowed down.

Here, the following may be performed in order to further reduce the number of times of the decryption processing to be attempted by the decryption unit 225.

As described above, the user IDs of the user terminals 100 that have sent the user IDs and the amount information to the settlement device 200 during the predetermined time in the past are recorded in the past data recording unit 224A while being updated. However, in this case, the content as recorded in the above-described past data recording unit 224A in Modification Example 2, that is, the number of times at which each user ID has been sent to the settlement device 200 and which is associated with the user ID is also recorded in the past data recording unit 224A.

In the settlement device 200 having the past data recording unit 224A in which such two types of data are recorded, the key generating unit 227 which has received a key generation request from the decryption unit 225 together with a user ID as described above also reads the number of times at which the user ID has been sent from the user terminal 100 to the settlement device 200, the number of times being recorded in the past data recording unit 224A in association with the user ID received from the decryption unit 225. Then, for each of the user IDs sent from the decryption unit 225, the key generating unit 227 generates keys to be generated in the key generating unit 126 of the user terminal 100 specified by the user ID, the number of the keys being equal to the number of times at which the user ID is sent from the user terminal 100 to the settlement device 200, and sends the keys to the decryption unit 225.

According to this operation, the number of keys to be received from the key generating unit 227 by the decryption unit 225 is smaller than that in the above case, but the decryption unit 225 would be capable of decrypting the virtual currency encryption data nevertheless.

<<Second Embodiment>>

A settlement system according to a second embodiment is almost the same as the settlement system according to the first embodiment. In particular, the configurations of a user terminal 100 and a settlement terminal 300 and the processing to be executed therein have no difference from those in the first embodiment. Further, the data structure of the virtual currency data is the same as that in the first embodiment.

A main difference resides in the configuration of a settlement device 200 and processing to be executed therein. However, the configuration of the settlement device 200 of the second embodiment and the processing to be executed therein are mostly identical to those of the first embodiment.

In short, when receiving virtual currency data from the settlement terminal 300 or the like, the settlement device 200 of the first embodiment attempts to decrypt virtual currency encryption data included in the received virtual currency data, and based on the fact that the virtual currency encryption data has been successfully decrypted, the settlement device 200 verifies authenticity of the virtual currency encryption data or the virtual currency data. On the other hand, when receiving virtual currency data from the settlement terminal 300 or the like, the settlement device 200 of the second embodiment does not attempt to decrypt the virtual currency data.

Points which will not be mentioned below are the same as in the first embodiment.

As described above, in the second embodiment, the configurations of the user terminal 100 and the settlement terminal 300 and processing to be executed therein have no difference from those in the first embodiment. The virtual currency data in the second embodiment is obtained by attaching the user ID to the virtual currency encryption data as in the case of the first embodiment.

The configuration of the settlement device 200 of the second embodiment and the processing to be executed therein will be described.

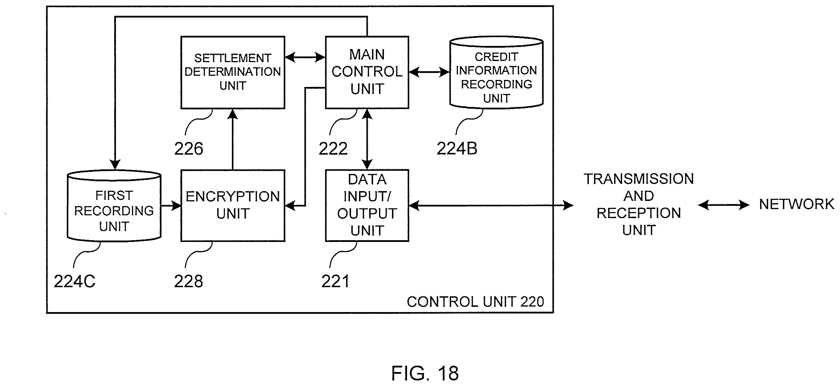

The hardware configuration of the settlement device 200 of the second embodiment is the same as that of the first embodiment. Functional blocks are generated inside the settlement device 200 of the second embodiment as in the case

43

of the first embodiment. FIG. 18 shows functional blocks to be generated inside the settlement device 200 of the second embodiment. The decryption unit 225 that is present in the first embodiment is not present in the functional blocks of the second embodiment, but instead an encryption unit 228 and a first recording unit 224C are present.

The main control unit 222 of the second embodiment also performs overall control in the control unit 220 as in the case of the first embodiment. As in the case of the first embodiment, the main control unit 222 in the second embodiment also performs credit determination processing and settlement processing.

However, in the case of the first embodiment, when the settlement device 200 accepts virtual currency data for requesting settlement from the settlement terminal 300 or the like, the main control unit 222 sends the virtual currency data to the decryption unit 225 to cause the decryption unit 225 to decrypt the virtual currency encryption data included in the virtual currency data. On the other hand, when the settlement device 200 accepts virtual currency data for requesting settlement from the settlement terminal 300 or the like, the main control unit 222 of the second embodiment sends the virtual currency data (in some cases, only virtual currency encryption data included in the virtual currency data) to the settlement determination unit 226, and also sends an instruction for causing the encryption unit 228 to perform encryption to the encryption unit 228 together with a user ID included in the virtual currency data.

As in the case of the first embodiment, the main control unit 222 of the second embodiment makes a credit determination when the main control unit 222 receives amount information from the data input/output unit 221. In this case, the main control unit 222 uses data recorded in the credit information recording unit 224B as in the case of the first embodiment. The data recorded in the credit information recording unit 224B of the second embodiment is not different from that of the first embodiment. Further, the processing to be performed after the main control unit 222 makes the credit determination is not different between the first embodiment and the second embodiment.

As in the case of the first embodiment, the main control unit 222 of the second embodiment may also receive final determination data from the settlement determination unit 226. The processing to be executed by the main control unit 222 after the main control unit receives the final determination data is not different between the first embodiment and the second embodiment regardless of whether the final determination data is positive or negative.

Further, the main control unit 222 of the second embodiment has a function of generating original data, which is not possessed by the main control unit 222 of the first embodiment. Such original data is generated based on a user ID and amount information which are sent from the user terminal 100 to the settlement device 200 to request issuance of permission information, and sent to the main control unit 222 via the transmission and reception unit and the data input/output unit 221. The original data generated by the main control unit 222 is set to be the same as original data generated by the user terminal 100, and a process of generating original data, which is executed in the main control unit 222, will be described below. Note that in the following description, the original data to be generated in the main control unit 222 will be hereinafter referred to as original data for confirmation in order to distinguish the original data from original data to be generated in the user terminal 100. The main control unit 222 is configured to record the generated original data for confirmation into the first recording unit 224C. The first recording unit 224C is recording means for recording a large number of original data for confirmation written in the main control unit 222.

As described above, the encryption unit 228 may receive an instruction for performing encryption from the main control unit 222 together with the user ID.

When receiving such an instruction, the encryption unit 228 reads original data for confirmation from the first recording unit 224C, and encrypts the original data for confirmation. The encryption unit 228 encrypts the original data for confirmation to generate encryption data for confirmation. The encryption data for confirmation is set to be the same as virtual currency encryption data which is generated by encrypting the original data in the encryption unit 125 of the user terminal 100.

The details of the encryption process as to which one of a large number of original data for confirmation recorded in the first recording unit 224C is read by the encryption unit 228, and how the encryption unit 228 encrypts the original data for confirmation read out from the first recording unit 224C to obtain encryption data for confirmation will be described below.

The encryption unit 228 is configured to send the generated encryption data for confirmation to the settlement determination unit 226.

As described above, the settlement determination unit 226 receives the virtual currency data (or the virtual currency encryption data included in the virtual currency data) from the main control unit 222, and also receives the at least one encryption data for confirmation from the encryption unit 228. When receiving these data, the settlement determination unit 226 makes a settlement determination which is a determination as to whether settlement may be permitted. As a result, the settlement determination unit 226 generates final determination data that is data including the content of either acceptance of settlement or unacceptance of settlement.

The process of such a settlement determination is different between the first embodiment and the second embodiment. How the settlement determination unit 226 of the second embodiment generates the final determination data will be described below.

In any case, when the final determination data is generated, the settlement determination unit 226 sends it to the main control unit 222

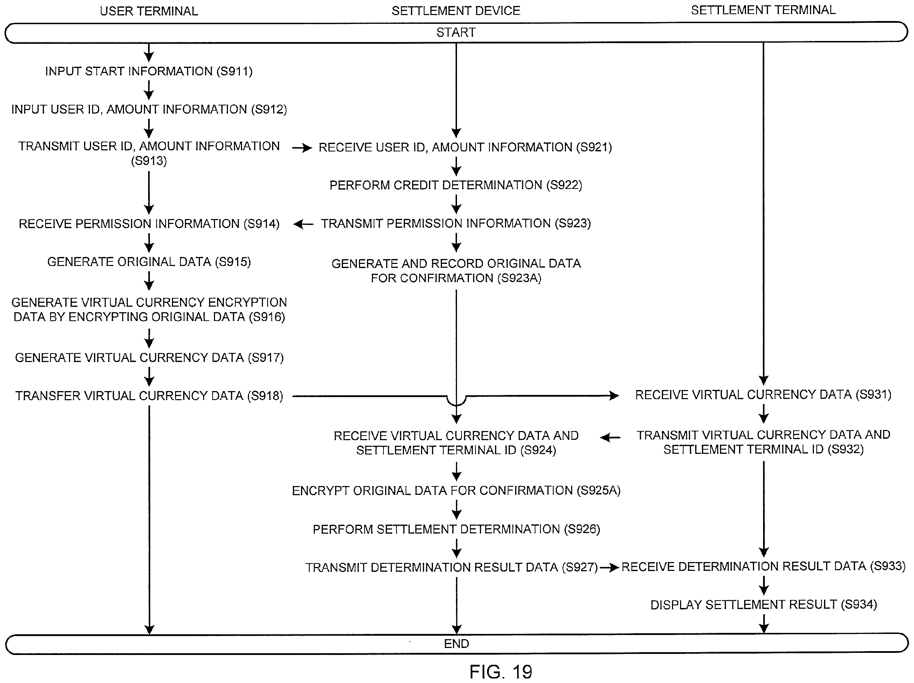

Next, a use scheme and an operation of the settlement system according to the second embodiment will be described with reference to FIG. 19.

In the second embodiment, as in the case of the first embodiment, a user ID is first set in each user terminal 100, and a settlement terminal ID is set in each settlement terminal 300 as a preparation for using such a system.

Thereafter, the processing of S911 to S918 to be executed in the user terminal 100 is the same as the processing of the first embodiment, and the processing of S931 to S934 to be executed in the settlement terminal 300 is also the same as the processing of the first embodiment. Further, the processing of S921 to S923 to be executed in the settlement device 200 and the processing of S924 and S927 are the same as those of the first embodiment.

The following description will be made together with description on these processing.

In the second embodiment, first, virtual currency data is also generated.

In the second embodiment, although not limited thereto, as in the case of the first embodiment, generation of the virtual currency data starts when the user inputs start information to his or her own user terminal 100 (S911).

The start information is sent to the main control unit 121 as in the case of the first embodiment. Triggered by this sending of the start information, the main control unit 121 controls the display control unit 122. As a result, an image for promoting the user to input a user ID and amount information is displayed on the display 101, for example, as shown in FIG. 10(A). The user inputs the user ID and the amount information (S912). Data about the user ID and the amount information are input to the data input/output unit 123, and sent to the main control unit 121.

When the input of the user ID and the amount information is completed, the user clicks a button written with "Decision" displayed on the display 101.

When the user clicks the button written with "Decision", the user ID and the amount information are sent from the data input/output unit 123 to the main control unit 121. The user ID and the amount information are sent from the transmission and reception unit to the settlement device 200 via the network 400 (S913).

The settlement device 200 receives the user ID and the amount information by the transmission and reception unit (S921). The transmission and reception unit transmits the user ID and the amount information to the data input/output unit 221, and the data input/output unit 221 sends these data to the main control unit 222.

The main control unit 222 makes a credit determination (S922). The credit determination processing is not different between the first embodiment and the second embodiment. When making a credit determination, the main control unit 222 uses data recorded in the credit information recording unit 224B.

In any case, the main control unit 222 generates permission information when the credit of the user is recognized. The permission information is sent to the user terminal 100 via the network 400 (S923).

The user terminal 100 receives the permission information by the transmission and reception unit (S914).

When receiving the permission information, the main control unit 121 of the user terminal 100 generates original data based on the previously received user ID and amount information (S915). This original data is sent to the encryption unit 125 as in the case of the first embodiment, and the encryption unit 125 that has received the original data encrypts the original data into virtual currency encryption data (S916). Note that in the second embodiment, an encryption scheme to be executed by the encryption unit 125 of each user terminal 100 is one fixed scheme as in the case of the first embodiment. Further, the main control unit 121 generates virtual currency data based on the virtual currency encryption data (S917).

As described above, when the user terminal 100 receives the permission information from the settlement device 200, the reception of the permission information triggers generation or issuance of virtual currency data in the user terminal 100. Furthermore, in the second embodiment, original data for confirmation described above is generated in parallel to the generation or issuance of the virtual currency data.

As described above, in S921, the settlement device 200 receives the user ID and the amount information from the user terminal 100. The user ID and the amount information are received by the main control unit 222. Based on the user ID and the amount information, the main control unit 222 generates the original data for confirmation and records it in the first recording unit 224C (S923A). Here, the original data for confirmation is set to be the same as the original data to be generated by the main control unit 121 of the user terminal 100 which sent the user ID and the amount information as an origin of the original data for confirmation and has received the permission information generated based on the user ID and the amount information.

As described above, the original data generated by the main control unit 121 of the user terminal 100 is a simple combination of the user ID and the amount information. Since the settlement device 200 has received the user ID and the amount information from the user terminal 100, by combining the user ID and the amount information, the main control unit 222 of the settlement device 200 can generate the original data for confirmation which is identical to the original data generated by the user terminal 100.

However, as described in the first embodiment, the original data generated in the user terminal 100 may include information other than the user ID and the amount information, such as time information, position information, and information on the attribute of the user. Even in such a case, the original data for confirmation generated by the main control unit 222 must be the same as the original data to be generated in the user terminal 100. For example, in the case of information on the attribute of the user, if the user registers the information in association with the user ID in advance in the settlement device 200, the main control unit 222 of the settlement device 200 can generate the original data for confirmation identical to the original data to be generated by the main control unit 121 of the user terminal 100 without newly receiving the information from the user terminal 100 when the original data for confirmation is generated. On the other hand, in the case of the time information, if exactness is not required, the date and time when the settlement device 200 has received the user ID and the amount information sent from the user terminal 100 can be diverted as it is in the settlement device 200. However, with respect to the position information which is generated by GPS or the like of the user terminal 100 and specifies the position of the user terminal 100 when the user inputs the start information, the main control unit 222 of the settlement device 200 cannot generate the original data for confirmation identical to the original data to be generated by the main control unit 121 of the user terminal 100 unless the main control unit 222 of the settlement device 200 receives the position information from the user terminal 100 when the original data for confirmation is generated. Accordingly, in such a case, the settlement device 200 must receive, from the user terminal 100, the information for generating the original data for confirmation identical to the original data to be generated by the main control unit 121 of the user terminal 100.

In this embodiment, as described below, the encryption scheme to be executed by the encryption unit 125 is one fixed scheme. Therefore, in the case where original data includes only a user ID and amount information, with respect to virtual currency encryption data contained in virtual currency data to be generated in the same user terminal 100, if amount information contained in respective original data which are sources for these virtual currency encryption data is the same, these virtual currency encryption data are the same. In order to avoid such a situation, a large number of original data to be generated in the same user terminal 100 should be respectively made unique. For example, if the time information is included in the original data or the serial number described in Modification Example 2 is included in the original data without limiting to any of the examples described above, respective virtual currency encryption data would be different from one another even when the encryption scheme to be executed by the encryption unit 125 is always the same. If the numeral as the serial number is as described above, the settlement device 200 can generate the same serial number as the serial number to be generated in the user terminal 100, for example, by counting, for each user terminal 100 in association with the user ID of each user terminal 100, how many times the user ID and the amount information have been sent from the same user terminal 100 to request issuance of permission information. However, when the settlement device 200 generates no permission information, no virtual currency data will be generated later in the user terminal 100. In such a case, the number of virtual currency data which have been generated in the user terminal 100 is different from the number of times at which the settlement device 200 has received the user ID and the amount information from the user terminal 100. If that is the case, a difference occurs between the serial number in the user terminal 100 and the serial number in the settlement device 200. Therefore, in the settlement device 200, the above-described counting may not be performed on a user ID and amount information for which no permission information has been generated in spite of reception of the user ID and the amount information.

The agreement as described above is made in advance between the user terminal 100 and the settlement device 200, and processing based on such an agreement is executed between the user terminal 100 and the settlement device 200. Note that provision of the information from the user terminal 100 to the settlement device 200 for enabling the main control unit 222 of the settlement device 200 to generate original data for confirmation identical to original data to be generated by the main control unit 121 of the user terminal 100 may be performed at any timing from the same timing as the timing in S913 for transmitting the user ID and the amount information from the user terminal 100 to the settlement device 200 to the timing immediately before the original data for confirmation is generated in the settlement device 200.

In any case, the original data for confirmation is recorded in the first recording unit 224C. A large number of original data for confirmation are recorded in the first recording unit 224C, and they are identical to a large number of original data generated in many user terminals 100, respectively.

When the virtual currency data is issued, the user transfers the virtual currency data from the user terminal 100 to the settlement terminal 300, for example, managed by a store clerk, which is the other party to which money should be paid (S918).

The settlement terminal 300 receives the virtual currency data from the user terminal 100 (S931).

The virtual currency data is sent together with a settlement terminal ID from the settlement terminal 300 to the settlement device 200 via the network 400 (S932).

The settlement device 200 receives the data of the settlement terminal ID and the virtual currency data at the transmission and reception unit (S924). The virtual currency data having the settlement terminal ID attached thereto is sent to the main control unit 222 as in the case of the first embodiment.

The main control unit 222 which has received the virtual currency data and the settlement terminal ID sends the data of the settlement terminal ID and the virtual currency data (in some cases, the virtual currency encryption data included in the virtual currency data) to the settlement determination unit 226, and further sends the user ID included in the virtual currency data to the encryption unit 228 together with an instruction for encrypting the user ID, which is included in the virtual currency data.

The encryption unit 228 which has received the instruction for performing encryption together with the user ID included in the virtual currency data executes the processing of encrypting the original data for confirmation to generate the encryption data for confirmation from the original data for confirmation (S925A).

At this time, the encryption unit 228 reads the original data for confirmation as an encryption target from the first recording unit 224C. The original data for confirmation includes the user ID as described above. The original data for confirmation to be read from the first recording unit 224C is the original data for confirmation including the user ID sent from the main control unit 222. Note that if the first recording unit 224C has a plurality of original data for confirmation including the user ID which the encryption unit 228 has received from the main control unit 222, the encryption unit 228 reads all of the plurality of original data for confirmation.

The encryption unit 228 encrypts the original data for confirmation read from the first recording unit 224C: in the case of one original data for confirmation, encrypts the one original data for confirmation; and in the case of a plurality of original data for confirmation, encrypts all of the plurality of original data for confirmation.

The encryption processing in this case is performed by the same scheme as used when the virtual currency encryption data included in the virtual currency data sent from the settlement terminal 300 for settlement is encrypted by the encryption unit 125 of the user terminal 100. As in the case of the decryption unit 225 of the first embodiment, the encryption unit 228 holds an algorithm for encryption processing which is commonly used when encryption processing is executed in the encryption units 125 of all the user terminals 100. The encryption unit 228 also holds unique keys each used by each encryption unit 125 when encryption processing is executed by the encryption unit 125 of each user terminal 100 while associating each unique key with the user ID of each user terminal 100. When the original data for confirmation is encrypted, the encryption unit 228 executes the encryption processing by using the above-described algorithm for the encryption processing and a key which is associated with the same user ID as a user ID sent from the main control unit 222 and held by the encryption unit 228.

As a result, the original data for confirmation is encrypted to be converted to encryption data for confirmation. When a plurality of encryption data for confirmation are generated, all of them are sent from the encryption unit 228 to the settlement determination unit 226.

The settlement determination unit 226 receives the virtual currency data (or the virtual currency encryption data included in the virtual currency data) from the main control unit 222, and also receives at least one encryption data for confirmation from the encryption unit 228.

The settlement determination unit 226 that has received them executes a settlement determination (S926). Although the purpose itself of determining authenticity of the virtual currency encryption data is not different from that of the first embodiment, a determination scheme to be executed in the second embodiment is different from that of the first embodiment.

When receiving the virtual currency data from the main control unit 222, the settlement determination unit 226 extracts the virtual currency encryption data from the virtual currency data, and compares the virtual currency encryption data with at least one encryption data for confirmation received from the settlement determination unit 226. As a result, when at least one of the encryption data for confirmation coincides with the virtual currency encryption data, it is determined that the virtual currency encryption data is authentic. Conversely, when all of the encryption data for confirmation do not coincide with the virtual currency encryption data, it is determined that the virtual currency encryption data is not authentic. Note that as described above, a target for which identity with the encryption data for confirmation is determined by the settlement determination unit 226 is not the virtual currency data itself, but the virtual currency encryption data. Therefore, what is sent from the main control unit 222 to the settlement determination unit 226 is not the virtual currency data itself, but may be the virtual currency encryption data.

The reason why the authenticity of the virtual currency encryption data can be determined by such a scheme is as follows. The virtual currency encryption data to be generated in the user terminal 100 is generated by encrypting the original data in the encryption unit 125. On the other hand, the encryption data for confirmation to be generated in the settlement device 200 is generated by encrypting the original data for confirmation by the encryption unit 228. Here, the original data and the original data for confirmation are the same as described above, and the encryption scheme to be executed by the encryption unit 125 of the user terminal 100 and the encryption scheme to be executed by the encryption unit 228 are controlled to be the same by using the user ID as described above. In other words, the virtual currency encryption data and the encryption data for confirmation which are generated from the same data by the same scheme would be the same. However, a plurality of virtual currency data generated by the user terminal 100 may exist in some cases. However, even in such a case, the original data for confirmation recorded in the first recording unit 224C of the settlement device 200 corresponds to the original data which are contained in the form of the encrypted virtual currency encryption data in all the virtual currency data generated in all the user terminals 100, and also the encryption data for confirmation read from the first recording unit 224C to perform the encryption in the encryption unit 228 are all data issued by the user terminal 100 corresponding to the user ID included in the virtual currency data sent from the settlement terminal 300. Therefore, if all the original data for confirmation read from the first recording unit 224C are encrypted by the encryption unit 228 according to a correct scheme, at least one of the resultant encryption data for confirmation would coincide with the virtual currency encryption data unless the virtual currency encryption data is tampered or the like.

In short, the fact that the same data can be obtained or reproduced by executing the same encryption method based on the same data can be regarded as being equivalent to the fact that the encrypted data has been successfully decrypted. The settlement determination unit 226 of the second embodiment determines the authenticity of the virtual currency encryption data based on such a theory. Thus, in the second embodiment, the determination of the authenticity of the virtual currency encryption data which is actually performed by the decryption unit 225 in the first embodiment is performed by the settlement determination unit 226.

Note that the further criterion for determination based on the coincidence of user IDs or the like which is performed in the first embodiment may be freely adopted in the settlement determination of the second embodiment.

In the second embodiment, as in the case of the first embodiment, when the settlement determination unit 226 determines that the virtual currency encryption data is authentic, the settlement determination unit 226 generates final determination data indicating positive information which accepts payment of the amount of money specified by amount information, whereas when the settlement determination unit 226 does not determine so, the settlement determination unit 226 generates final determination data indicating negative information which does not accept payment of the amount of money specified by the amount information.

In any case, the generated final determination data is sent from the settlement determination unit 226 to the main control unit 222.

The main control unit 222 receives the final determination data and performs the settlement processing as in the case of the first embodiment. Further, as in the case of the first embodiment, the settlement device 200 generates determination result data and transmits the determination result data to the settlement terminal 300 via the network 400 (S927).

The determination result data is received by the transmission and reception unit of the settlement terminal 300 (S933). As a result, a display corresponding to the determination result data is performed on the display of the settlement terminal 300 (S934).

Through the above operation, the payment processing from the user to the administrator of the settlement terminal 300 using the virtual currency data according to the second embodiment is completed.

Note that description has been omitted above, but the original data which have been determined to be the same as the encryption data for confirmation by the settlement determination unit 226 can be deleted from the first recording unit 224C. This can be implemented by the settlement determination unit 226 notifying the main control unit 222 of which original data is original data which has been determined to be the same as the encryption data for confirmation by the settlement determination unit 226, and further by the main control unit 222 which has received such a notification deleting the original data for confirmation specified by the notification from the first recording unit 224C. Since each virtual currency data is set as a settlement target only once in the settlement device 200, the original data for confirmation corresponding to the virtual currency data set as a settlement target is never used again. The purpose of the above-described processing is to delete such unnecessary original data for confirmation. In other words, the purpose of such processing resides in that the virtual currency data or the original data for confirmation which has been used once for payment is prevented from being used twice.

Note that in the above-described processing, it is necessary in the determination of authenticity of virtual currency encryption data to be performed by the settlement determination unit 226 that one virtual currency encryption data and one or a plurality of encryption data for confirmation are compared with each other. This has a characteristic similar to the characteristic of the brute force attack decryption processing described in Modification Examples 1 and 2, but the determination of authenticity to be performed by the settlement determination unit 226 may be performed by one-to-one comparison between one virtual currency encryption data and one encryption data for confirmation.

This can be implemented by including the serial number already described in the second embodiment in the virtual currency data generated in the user terminal 100. It is assumed that the virtual currency data in this case includes, for example, a user ID, a serial number, and virtual currency encryption data. The serial number is assumed to be in a plaintext style, but as described in Modification Example 2, it may be encrypted by the same method in all the user terminals 100.

When such virtual currency data is used, it is assumed that data recorded in the first recording unit 224C is not only original data for confirmation, but also original data for confirmation and a serial number corresponding to the original data for confirmation which are associated with each other. Since the main control unit 222 can generate the serial number as described above, the main control unit 222 can record such information in the first recording unit 224C.

In the case where such virtual currency data is used, when virtual currency data is sent from the settlement terminal 300 or the like to the settlement device 200, the main control unit 222 sends, to the encryption unit 228, not only a user ID, but also a serial number together with an instruction for performing encryption. The encryption unit 228 that has received this reads out, from the first recording unit 224C, original data for confirmation which includes therein the same user ID as the user ID received from the main control unit 222 and is associated with the serial number received from the main control unit 222.

Only one original data for confirmation satisfies such a condition, so that one encryption data for confirmation is generated from the one original data for confirmation in the encryption unit 228.

Such one original data for confirmation is sent from the encryption unit 228 to the settlement determination unit 226, whereby the comparison between the one virtual currency encryption data and the one encryption data for confirmation is performed in the settlement determination unit 226 to determine the authenticity of the virtual currency encryption data.

<Modification Example 3>

The difference between the first embodiment and the second embodiment resides in that in the first embodiment, authenticity of virtual currency encryption data is determined based on whether the virtual currency encryption data has been successfully decrypted, whereas in the second embodiment, authenticity of virtual currency encryption data is determined based on whether encryption data for confirmation identical to the virtual currency encryption data generated from the original data can be reproduced from original data for confirmation identical to original data.

In other words, although it may lack accuracy, roughly speaking, the difference between the settlement system in the second embodiment and the settlement system in the first embodiment resides in that the function of the decryption unit 225 included in the settlement device 200 in the first embodiment is replaced with the functions of the encryption unit 228, the first recording unit 224C, and the settlement determination unit 226 in the settlement device 200 of the second embodiment.

In the first embodiment, the decryption unit 225 which is configured to execute the fixed decryption scheme can be modified so as to change the decryption scheme to be executed in the decryption unit 225 in response to (in synchronization with) the change at a predetermined timing of the encryption scheme to be executed by the encryption unit 125 of the user terminal 100 as described in Modification Example 2. Similarly, the decryption scheme to be executed by the encryption unit 228, the first recording unit 224C, and the settlement determination unit 226 of the second embodiment can also be changed in response to (in synchronization with) the change at a predetermined timing of the encryption scheme to be executed by the encryption unit 125 of the user terminal 100.

Modification Example 3 is as described above.

A settlement system according to Modification Example 3 is almost identical to the settlement system according to Modification Example 2. In particular, the configurations of a user terminal 100 and a settlement terminal 300 and the processing to be executed therein are not different from those in Modification Example 2. As in the case of Modification Example 2, the functional blocks generated in the user terminal 100 are as shown in FIG. 14, and include the key generating unit 126.

Further, the data structure of the virtual currency data in Modification Example 3 is similar to that of Modification Example 2, and the virtual currency data includes the virtual currency encryption data and the user ID as in the case of the first embodiment, and also includes encryption condition data of the present invention, which is not included in the virtual currency data of the first embodiment. The encryption condition data is, but not limited to, a serial number or serial number data described in the case of Modification Example 2.

The difference of the settlement system of Modification Example 3 from the settlement system of Modification Example 2 is the difference in the settlement device 200 as described above, and resides in that the function of the decryption unit 225 included in the settlement device 200 of Modification Example 2 is replaced by the functions of the encryption unit 228, the first recording unit 224C, and the settlement determination unit 226 in the settlement device 200 of Modification Example 3. Roughly speaking, the settlement system according to Modification Example 3 is a combination of the user terminal 100 according to Modification Example 2, the settlement terminal 300 common to Modification Example 2 and the second embodiment, and the settlement device 200 obtained by combining the settlement device 200 of Modification Example 2 and the settlement device 200 of the second embodiment.

Hereinafter, the configuration of the settlement device 200 in the settlement system of Modification Example 3 which is different from Modification Example 2, and the processing to be executed therein will be mainly described.

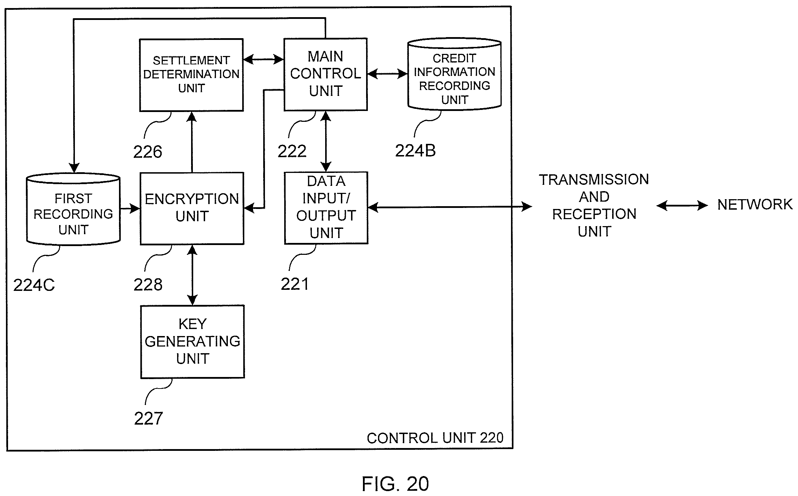

The hardware configuration of the settlement device 200 of Modification Example 3 is the same as that of Modification Example 2 and the second embodiment. Functional blocks are generated inside the settlement device 200 of Modification Example 3 as in the case of Modification Example 2 and the second embodiment. FIG. 20 shows the functional blocks generated in the settlement device 200 according to Modification Example 3. Modification Example 3 does not include the decryption unit 225 in the functional blocks of Modification Example 2, and the functional blocks of Modification Example 3 includes the encryption unit 228 and the firsts recording unit 224C which do not exist in Modification Example 2, but exit in the second embodiment.

The main control unit 222 of Modification Example 3 also performs overall control in the control unit 220 as in the case of the main control unit 222 according to the second embodiment. As in the case of Modification Example 2 and the second embodiment, the main control unit 222 in Modification Example 3 is also configured to perform credit determination processing and settlement processing.

As in the case of the second embodiment, when the settlement device 200 has accepted virtual currency data for requesting settlement from the settlement terminal 300 or the like, the main control unit 222 of Modification Example 3 sends the virtual currency data (only virtual currency encryption data included in the virtual currency data in some cases) to the settlement determination unit 226, and also sends an instruction for performing encryption to the encryption unit 228 together with a user ID and a serial number included in the virtual currency data.

The main control unit 222 of Modification Example 3 makes a credit determination when the main control unit 222 has received amount information from the data input/output unit 221 as in the case of Modification Example 2 and the second embodiment. In this case, the main control unit 222 uses data recorded in the credit information recording unit 224B as in the case of Modification Example 2 and the second embodiment. The data recorded in the credit information recording unit 224B of Modification Example 3 is not different from that in Modification Example 2 and the second embodiment. In addition, the processing to be performed after the main control unit 222 makes the credit determination is not different from that in Modification Example 2 and the second embodiment.

As in the case of Modification Example 2 and the second embodiment, the main control unit 222 of Modification Example 3 may also receive final determination data from the settlement determination unit 226 in some cases. The processing to be executed by the main control unit 222 after the main control unit 222 has received the final determination data is not different between Modification Example 2 and Modification Example 3 regardless of whether the final determination data is positive or negative.

Further, the main control unit 222 of Modification Example 3 has a function of generating original data for confirmation as in the case of the second embodiment. The structure of the original data for confirmation and the generating scheme thereof are similar to those of the second embodiment. The main control unit 222 according to Modification Example 3 is configured to record the generated original data for confirmation in the first recording unit 224C as in the case of the second embodiment. However, in Modification Example 3, what is recorded in the first recording unit 224C is original data and a serial number corresponding thereto unlike the case of the second embodiment.

As described above, the encryption unit 228 may receive an instruction for performing encryption from the main control unit 222 together with the user ID.

When receiving such an instruction, the encryption unit 228 reads original data for confirmation from the first recording unit 224C, and encrypts the original data for confirmation to obtain encryption data for confirmation. This is the same as the second embodiment, but in Modification Example 3, the encryption scheme must be changed as described above, and thus the encryption scheme is different from that of the second embodiment in the above point.

When the encryption unit 228 changes the encryption processing, the encryption unit 228 can change the algorithm, the key, or both of them. However, in the present embodiment, although not limited thereto, the encryption unit 228 is configured to change the key as in the case of Modification Example 2. A key to be used by the encryption unit 228 in the encryption processing is provided from the key generating unit 227 as in the case of Modification Example 2. The key generating unit 227 in Modification Example 2 is configured to provide a key to the decryption unit 225, but the key generating unit 227 in Modification Example 3 provides a key to the encryption unit 228. A timing at which the key generating unit 227 generates a key is a time when a request for key generation is received from the encryption unit 228, and a more specific timing will be described below.

The details of the encryption process as to which one of a large number of original data for confirmation recorded in the first recording unit 224C is read out by the encryption unit 228 of Modification Example 3 and how the encryption unit 228 encrypts the original data for confirmation read out from the first recording unit 224C to obtain encryption data for confirmation will be described below.

The encryption unit 228 is configured to send the generated encryption data for confirmation to the settlement determination unit 226.

The settlement determination unit 226 makes the settlement determination as described above. The processing to be executed by the settlement determination unit 226 is similar to that in the second embodiment. The settlement determination unit 226 is configured to generate final determination data as in the case of the second embodiment, and sends it to the main control unit 222.

A scheme of using the settlement system according to Modification Example 3 and an operation thereof will be described.

All processing steps of S931 to S934 to be executed in the settlement terminal 300 out of processing steps to be executed by the settlement system of Modification Example 3 are the same as the processing steps of the second embodiment. In addition, among processing steps to be executed in the settlement system of Modification Example 3, all processing steps other than S916 for generating virtual currency encryption data by encrypting original data and S917 for generating virtual currency data out of processing steps of S911 to S918 to be executed in the user terminal 100 are the same as the processing steps of the second embodiment. The encryption processing to be executed in the processing of S916 is similar to the encryption processing to be executed in Modification Example 2, and virtual currency data to be generated in the processing of S917 includes encryption condition data which is a serial number as described above, which is a difference between Modification Example 3 and the second embodiment.

In the settlement system of Modification Example 3, as in the case of the second embodiment, as a preparation for using such a system, a user ID is first set in each user terminal 100, and a settlement terminal ID is set in each settlement terminal 300. Subsequent processing conforms to the processing shown in FIG. 19 which is executed in the second embodiment.

First, the user terminal 100 executes the processing of S911 to S913, and the settlement device 200 executes the processing of S921 to 5923. All processing in Modification Example 3 is the same as the processing in the second embodiment.

On the other hand, in Modification Example 3, the settlement device 200 executes generation of original data for confirmation and recording of the original data for confirmation into the first recording unit 224C (S923A). Such processing is basically similar to the processing in the second embodiment. Thereafter, original data for confirmation identical to original data to be generated in the user terminal 100 is generated in the same manner as in the second embodiment. The generated original data for confirmation is recorded in the first recording unit 224C by the main control unit 222, and a serial number is attached to the original data for confirmation recorded in the first recording unit 224C as described above. Such a serial number is a serial number corresponding to the number of times at which original data for confirmation associated with the serial number recorded in the first recording unit 224C has been sent from a user terminal 100 specified by a user ID included in the original data for confirmation.

In the user terminal 100, the processing of S915 is executed in the same manner as in the second embodiment, and processing of generating virtual currency encryption data by encrypting original data in S916 is executed in the same manner as in the case of Modification Example 2.

In the processing of S916, as in the case of the second embodiment, the encryption unit 125 requests the key generating unit 126 to generate a key. In response to such a request, the key generated by the key generating unit 126 is provided to the encryption unit 125, and the encryption unit 125 encrypts the original data by using the key and a fixed algorithm.

The resultant virtual currency encryption data is sent from the encryption unit 125 to the main control unit 121, the user ID and the serial number are attached to the virtual currency encryption data to obtain virtual currency data (S917).

This virtual currency data is transferred from the user terminal 100 to the settlement terminal 300 (S918). Then, the processing of S931 and S932 is executed in the settlement terminal 300, and the settlement device 200 receives the virtual currency data together with the settlement terminal ID from the settlement terminal 300 (S924).

In the settlement device 200, the virtual currency data is sent to the main control unit 222.

As in the case of the second embodiment, the main control unit 222 sends the virtual currency data (in some cases, only the virtual currency encryption data included in the virtual currency data, and the same applies to the following description) to the settlement determination unit 226, and also sends an instruction for performing encryption to the encryption unit 228 together with the user ID and the serial number included in the virtual currency data.

The encryption unit 228 which has received such an instruction reads, from the first recording unit 224C, original data for confirmation as an encryption processing target in order to encrypt the original data for confirmation. The original data for confirmation to be read includes the user ID received from the main control unit 222 by the encryption unit 228 out of the original data for confirmation recorded in the first recording unit 224C, and the serial number received from the main control unit 222 by the encryption unit 228 is attached to the original data for confirmation. Such original data for confirmation is only one original data for confirmation.

Further, the encryption unit 228 requests the key generating unit 227 to generate a key. When requesting the key generating unit 227 to generate a key, the encryption unit 228 sends the user ID and the serial number included in the virtual currency data to the key generating unit 227 together with such a request. The key generating unit 227 uses an initial solution associated with the received user ID and an algorithm for generating a solution to generate a solution identical to the solution generated in the user terminal 100 specified by the user ID as in the case of Modification Example 2. With respect to how many solutions are continuously generated by the decryption unit 225, solutions are generated up to a solution corresponding to "a numeral specified by a serial number" as in the case of Modification Example 2. The key generating unit 227 sends a finally generated solution to the decryption unit 225 as a solution to be used for decryption. Note that the event synchronization using the serial number has been described here, but the time synchronization may be adopted in order to generate the same key in both the key generating unit 126 of the user terminal 100 and the key generating unit 227 of the settlement device 200. For that purpose, time information will be used instead of the serial number.

The encryption unit 228 encrypts one original data for confirmation read from the first recording unit 224C by using one key received from the key generating unit 227 and a fixed algorithm (S925A).

Then, the settlement determination unit 226 checks whether the virtual currency encryption data included in the virtual currency data sent from the main control unit 222 coincides with the encryption data for confirmation accepted from the encryption unit 228, thereby performing a determination similar to the determination performed by the settlement determination unit 226 of the second embodiment (S926).

Thereafter, the processing of S927 to be executed in the settlement device 200 and the processing of S933 and S934 to be executed in the settlement terminal 300 described in the second embodiment are also executed in Modification Example 3.

Note that the brute force attack approach can also be adopted in Modification Example 3. In that case, for example, the virtual currency data generated in the user terminal 100 includes no serial number.

In this case, the content of the encryption processing to be performed by the encryption unit 228 is different from the above-described content described in Modification Example 3. The encryption unit 228 that has received an instruction for performing the encryption processing from the main control unit 222 has received a user ID from the main control unit 222 together with such an instruction.

The encryption unit 125 which has received such an instruction reads out, from the first recording unit 224C, the original data for confirmation as an encryption processing target in order to encrypt the original data for confirmation. The read-out original data for confirmation is original data for confirmation including the user ID received from the main control unit 222 by the encryption unit 228 out of the original data for confirmation recorded in the first recording unit 224C. Such original data for confirmation may be only one original data for confirmation or a plurality of original data for confirmation.

Further, the encryption unit 228 requests the key generating unit 227 to generate a key. When requesting key generation to the key generating unit 227, the encryption unit 228 sends the user ID included in the virtual currency data to the key generating unit 227 together with the request. Here, the key generating unit 227 generates a number of solutions by using the initial solution associated with the received user ID and the algorithm for generating the solutions. The number of solutions is set to a multiplicity of solutions with which the probability that some of the solutions was used to generate the virtual currency encryption data in the user terminal 100 can be regarded to be 100% in effect if there are so many solutions (keys). The key generating unit 227 sends all of the multiplicity of solutions (keys) to the encryption unit 228. Note that in order to generate the same key in the key generating unit 126 of the user terminal 100 and the key generating unit 227 of the settlement device 200, the event synchronization may be adopted or the time synchronization may be adopted. If attention is paid to the number of keys, the number of keys required in the case of the time synchronization may be enormous. In that case, it will be necessary to use the validated period of virtual currency data as described below.

The encryption unit 228 encrypts one or more original data for confirmation read from the first recording unit 224C by using the multiplicity of keys received from the key generating unit 227 and the fixed algorithm. When there are a plurality of original data for confirmation, such processing is executed on all the original data for confirmation.

As a result, the encryption unit 228 generates a multiplicity of encryption data for confirmation whose number is equal to a number obtained by multiplying the number of keys generated by the key generating unit 227 by the number of original data for confirmation read from the first recording unit 224C by the encryption unit 228. All the multiplicity of encryption data for confirmation are sent from the encryption unit 228 to the settlement determination unit 226.

The settlement determination unit 226 performs a settlement determination based on whether the virtual currency encryption data included in the virtual currency data sent from the main control unit 222 coincides with one of the multiplicity of encryption data for confirmation received from the encryption unit 228. When the virtual currency encryption data coincides with one of the multiplicity of encryption data for confirmation, the result of the settlement determination is positive, and when the virtual currency encryption does not coincide with any of the multiplicity of encryption data for confirmation, the result of the settlement determination is negative.

Note that in this case, if the number of times of the encryption processing to be executed by the encryption unit 228 is excessively large, it would be also possible to apply, to Modification Example 3, an approach of setting a validated period to the virtual currency data described in Modification Example 2. In this case, a past data recording unit 224A similar to that described in Modification Example 2 may be generated in the functional blocks of the settlement device 200, and used together with virtual currency data including time information such as a timestamp according to a scheme similar to the scheme described in Modification Example 2.

<<Third embodiment>>

A settlement system according to a third embodiment is almost the same as the settlement system according to the second embodiment. In particular, the configurations of a user terminal 100 and a settlement terminal 300 and processing to be executed therein are not different from those in the second embodiment. The data structure of virtual currency data is identical to that in the second embodiment.

Main differences are the configuration of the settlement device 200 and the processing to be executed therein. However, most of the configuration of the settlement device 200 of the third embodiment and the processing to be executed therein are identical to those in the second embodiment.

The settlement device 200 according to the second embodiment and the settlement device 200 according to the third embodiment are common in that encryption data for confirmation generated by encrypting original data for confirmation is used for settlement determination. However, the settlement device 200 according to the second embodiment and the settlement device 200 according to the third embodiment are different from each other in that in the settlement device 200 of the second embodiment, original data for confirmation which is generated in advance is encrypted into encryption data for confirmation after virtual currency data including virtual currency encryption data generated from original data identical to the original data for confirmation is received from the settlement terminal 300 or the like, where in the settlement device 200 of the third embodiment, generated original data for confirmation is encrypted into encryption data for confirmation before virtual currency data including virtual currency encryption data generated from original data identical to the original data for confirmation is received from the settlement terminal 300 or the like.

As described above, in the third embodiment, the configurations of the user terminal 100 and the settlement terminal 300 and the processing to be executed by them are identical to those in the first embodiment. The virtual currency data in the third embodiment is obtained by attaching the user ID to the virtual currency encryption data as in the case of the first embodiment.

Hereinafter, the configuration of the settlement device 200 and the processing to be executed therein in the settlement system of the third embodiment which are different from those of the second embodiment will be mainly described.

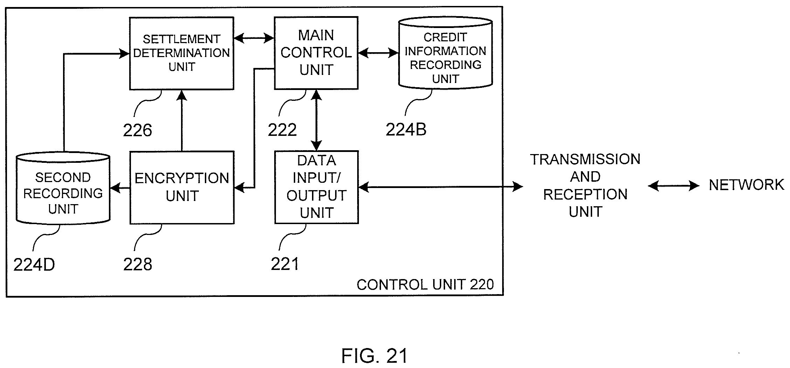

The hardware configuration of the settlement device 200 of the third embodiment is identical to that of the second embodiment. Functional blocks similar to those in the case of the second embodiment are generated inside the settlement device 200 according to the third embodiment. FIG. 21 shows functional blocks generated inside the settlement device 200 of the third embodiment are almost identical to those in the second embodiment, but the first recording unit 224C that is present in the second embodiment is not present, and instead of that, a second recording unit 224D is present.

The main control unit 222 of the third embodiment also performs overall control in the control unit 220 as in the case of the second embodiment. As in the case of the second embodiment, the main control unit 222 in the third embodiment also performs the credit determination processing and the settlement processing.

However, in the case of the second embodiment, after the settlement device 200 accepts, from the settlement terminal 300 or the like, virtual currency data which is requested to be settled, the main control unit 222 sends the virtual currency data (only virtual currency encryption data included in the virtual currency data in some cases), and also sends to the encryption unit 228, an instruction for performing encryption together with a user ID included in the virtual currency data. Although the main control unit 222 of the third embodiment sends virtual currency data (only virtual currency encryption data included in the virtual currency data in some cases) to the settlement determination unit 226 after the settlement device 200 accepts, from the settlement terminal 300 or the like, virtual currency data which is requested to be settled, the main control unit 222 of the third embodiment does not send any instruction for performing encryption to the encryption unit 228. The main control unit 222 of the third embodiment sends an instruction for performing encryption to the encryption unit 228 irrespective of whether the settlement device 200 accepts, from the settlement terminal 300 or the like, virtual currency data which is requested to be settled, and for example, before the virtual currency data is accepted, and in this embodiment, although not limited thereto, at a timing just after the main control unit 222 generates permission information. Further, when sending an instruction for performing encryption to the encryption unit 228, the main control unit 222 in the third embodiment also sends original data for confirmation together with such an instruction to the encryption unit 228.

The main control unit 222 of the third embodiment performs a credit determination when the main control unit 222 has received amount information from the data input/output unit 221 as in the case of the second embodiment. In this case, the main control unit 222 uses data recorded in the credit information recording unit 224B as in the case of the second embodiment. The data recorded in the credit information recording unit 224B of the third embodiment is not different from that of the second embodiment. Further, the processing to be performed after the main control unit 222 performs the credit determination is also not different between the second embodiment and the third embodiment.

As in the case of the second embodiment, the main control unit 222 of the third embodiment may also receive final determination data from the settlement determination unit 226. The processing to be executed by the main control unit 222 after the final determination data has been received is not different between the second embodiment and the third embodiment regardless of whether the final determination data is positive or negative.

The main control unit 222 of the third embodiment has a function of generating original data for confirmation similarly to the main control unit 222 of the second embodiment. Such functions possessed by the main control unit 222 of the third embodiment are the same as those of the second embodiment.

As described above, the encryption unit 228 may receive original data for confirmation from the main control unit 222.

When receiving such an instruction, the encryption unit 228 encrypts the original data for confirmation received from the main control unit 222. The encryption unit 228 encrypts the original data for confirmation, whereby encryption data for confirmation is generated. The encryption data for confirmation is set to be identical to virtual currency encryption data generated by encrypting original data in the encryption unit 125 of the user terminal 100.

The details of the encryption process as to how the encryption unit 228 encrypts the original data for confirmation received from the main control unit 222 into the encryption data for confirmation will be described below.

The encryption unit 228 records the generated encryption data for confirmation into the second recording unit 224D. A multiplicity of encryption data for confirmation are recorded in the second recording unit 224D.

As described above, virtual currency data (or virtual currency encryption data included therein) may be sent from the main control unit 222 to the settlement determination unit 226 as described above. When receiving this, the settlement determination unit 226 performs a settlement determination. As a result, the settlement determination unit 226 generates final determination data that is data including a content of either acceptance of the settlement or unacceptance of the settlement.

The process of such settlement determination is different between the second embodiment and the third embodiment. How the settlement determination unit 226 of the third embodiment generates final determination data will be described below.

In any case, when the final determination data is generated, the settlement determination unit 226 sends it to the main control unit 222.

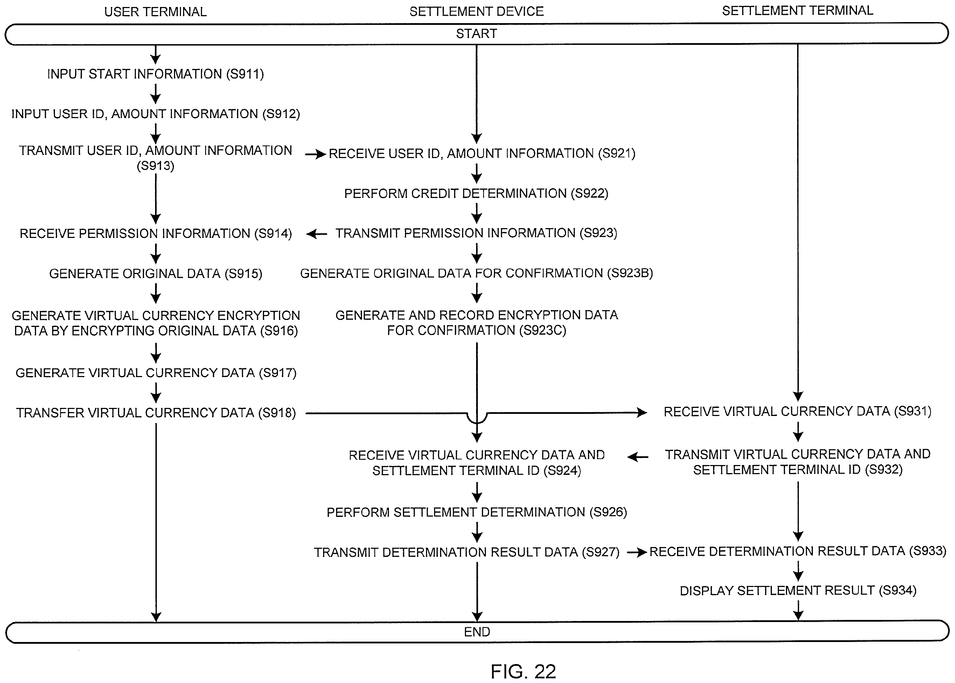

Next, a use scheme and an operation of the settlement system according to the third embodiment will be described with reference to FIG. 22.

In the third embodiment, as in the case of the second embodiment, as a preparation for using such a system, first, a user ID is set in each user terminal 100, and a settlement terminal ID is set in each settlement terminal 300.

Thereafter, processing of S911 to S918 to be executed in the user terminal 100 is the same as that of the second embodiment, and processing of S931 to S934 to be executed in the settlement terminal 300 is also the same as that of the second embodiment. Further, processing of S921 to S923 and processing of S924 and S927 to be executed in the settlement device 200 are the same as those of the second embodiment.

The following description will be made together with description on the above processing.

In the third embodiment, virtual currency data is first generated.

In the third embodiment, as in the case of the second embodiment, although not limited thereto, generation of virtual currency data is started upon user's inputting start information to his or her own user terminal 100 (S911).

According to a display on the display 101, the user inputs a user ID and amount information (S912). Next, the user ID and the amount information are sent from the data input/output unit 123 to the main control unit 121. The user ID and the amount information are sent from the transmission and reception unit to the settlement device 200 via the network 400 (S913).

The settlement device 200 receives the user ID and the amount information by the transmission and reception unit (S921). The transmission and reception unit sends the user ID and the amount information to the data input/output unit 221, and the data input/output unit 221 sends the data to the main control unit 222.

The main control unit 222 performs a credit determination (S922). Such credit determination processing is not different between the second embodiment and the third embodiment. When performing the credit determination, the main control unit 222 uses data recorded in the credit information recording unit 224B.

In any case, the main control unit 222 generates permission information when the credit of the user is recognized. The permission information is sent to the user terminal 100 via the network 400 (S923).

The user terminal 100 receives the permission information by the transmission and reception unit (S914).

When receiving the permission information, the main control unit 121 of the user terminal 100 generates original data based on the user ID and the amount information which have been received earlier (S915). This original data is sent to the encryption unit 125 as in the case of the second embodiment, and the encryption unit 125 that has received the original data encrypts the original data into virtual currency encryption data (S916). Note that in the third embodiment, as in the case of the second embodiment, an encryption scheme to be executed by the encryption unit 125 of each user terminal 100 is one fixed scheme. Further, the main control unit 121 generates virtual currency data based on such virtual currency encryption data (S917).

As described above, when the permission information is received from the settlement device 200 by the user terminal 100, the permission information triggers generation or issuance of virtual currency data. In the third embodiment, in parallel to the above operation, generation of original data for confirmation (S923B), generation of encryption data for confirmation by encrypting the original data for confirmation, and recording of the encryption data for confirmation into the second recording unit 224D (S923C) are performed. Such processing of S923B and S923C is performed, for example, immediately after the processing of S923 for transmission of the permission information.

As described above, in S921, the settlement device 200 receives the user ID and the amount information from the user terminal 100. The user ID and the amount information are received by the main control unit 222. Based on these data, the main control unit 222 generates original data for confirmation as in the case of the second embodiment (S923B). Here, the original data for confirmation is set to be the same as the original data to be generated by the main control unit 121 of the user terminal 100 which sent the user ID and the amount information as an origin of the original data for confirmation and has received the permission information generated based on the user ID and the amount information.

The main control unit 222 sends the generated original data for confirmation to the encryption unit 228 together with an instruction for performing encryption.

The encryption unit 228 that has received the instruction for performing encryption together with the original data for confirmation executes the processing of encrypting the original data for confirmation to generate encryption data for confirmation from the original data for confirmation (S923C).

The original data for confirmation includes the user ID as described above. Further, the encryption unit 228 holds keys to be used in all the user terminals 100. The encryption unit 228 encrypts the original data for confirmation received from the main control unit 222 by using a key to be used in the user terminal 100 specified by the user ID and a fixed algorithm for the encryption processing. As a result, the original data for confirmation is encrypted and converted to encryption data for confirmation. The encryption unit 228 writes the generated encryption data for confirmation into the second recording unit 224D.

When the virtual currency data is issued, the user transfers the virtual currency data from the user terminal 100, for example, to a settlement terminal 300 managed by a clerk of a store which is the other party to which money should be paid (S918).

The settlement terminal 300 receives the virtual currency data from the user terminal 100 (S931).

The virtual currency data is sent from the settlement terminal 300 to the settlement device 200 via the network 400 together with a settlement terminal ID (S932).

The settlement device 200 receives data of the settlement terminal ID and the virtual currency data by the transmission and reception unit (S924). The virtual currency data to which the settlement terminal ID is attached is sent to the main control unit 222 as in the case of the second embodiment.

The main control unit 222 that has received them sends the data of the settlement terminal ID and the virtual currency data (in some cases, virtual currency encryption data included in the virtual currency data) to the settlement determination unit 226.

The settlement determination unit 226 receives the virtual currency data (or the virtual currency encryption data included therein) from the main control unit 222.

The settlement determination unit 226 that has received the virtual currency data performs a settlement determination (S926). The purpose of determining authenticity of the virtual currency encryption data is the same as that of the second embodiment, but a determination scheme to be executed in the third embodiment is slightly different from that of the second embodiment.

When receiving the virtual currency data from the main control unit 222, the settlement determination unit 226 extracts the virtual currency encryption data from the virtual currency data, and compares the virtual currency encryption data with a multiplicity of encryption data for confirmation recorded in the second recording unit 224D. When at least one of the multiplicity of encryption data for confirmation coincides with the virtual currency encryption data, the virtual currency encryption data concerned is determined to be authentic. Conversely, when all of the encryption data for confirmation do not coincide with the virtual currency encryption data, the virtual currency encryption data is determined not to be authentic.

The authenticity of the virtual currency encryption data can be determined by such a scheme for the same reason as in the case of the second embodiment. Again, the difference between the second embodiment and the third embodiment resides in only the timing at which the original data for confirmation is encrypted into the encryption data for confirmation. Therefore, for the reason which has been already described in the second embodiment in which the authenticity of the virtual currency encryption data can be determined by using the encryption data for confirmation, it is also possible in the third embodiment to determine the authenticity of the virtual currency encryption data.

Final determination data generated in the same manner as in the second embodiment is sent from the settlement determination unit 226 to the main control unit 222.

The main control unit 222 receives the final determination data and performs the settlement processing as in the case of the second embodiment. Further, as in the case of the second embodiment, the settlement device 200 generates determination result data, and transmits the determination result data to the settlement terminal 300 via the network 400 (S927).

The determination result data is received by the transmission and reception unit of the settlement terminal 300 (S933). As a result, a display corresponding to the determination result data is performed on the display of the settlement terminal 300 (S934).

Through the above operation, the processing of payment from the user to the administrator of the settlement terminal 300 by using the virtual currency data according to the third embodiment is completed.

Note that in the above description, the virtual currency data is assumed to include the user ID, but such a user ID is not used in S926 relating to the execution of the settlement determination. In other words, in the third embodiment, the user ID is in a floating state in which it does not function. Therefore, actually, in the third embodiment, the virtual currency data may not include the user ID.

However, the user ID included in the virtual currency data can also be used as follows. In that case, the data recorded in the second recording unit 224D are slightly changed. As described above, the second recording unit 224D records a multiplicity of encryption data for confirmation generated by the encryption unit 228. In the case where the user ID is used, the encryption unit 228 may record, in the second recording unit 224D, a user ID included in original data for confirmation which is a source of encryption data for confirmation while associating the user ID with the encryption data for confirmation. As a result, the encryption data for confirmation recorded in the second recording unit 224D is set to be tagged for each user ID.

When the settlement determination unit 226 searches, from the second recording unit 224D, encryption data for confirmation identical to the virtual currency encryption data included in the virtual currency data received from the main control unit 222, the settlement determination unit 226 targets only encryption data for confirmation tagged with a user ID identical to the user ID included in the virtual currency data as targets for searching the encryption data for confirmation identical to the virtual currency encryption data. In the third embodiment, to begin with, the brute force attack approach described above is executed, and this makes it possible to reduce the number of targets on which identity determination based on the brute force attack is performed.

In the third embodiment, as in the case of the second embodiment, the used encryption data for confirmation, that is, the encryption data for confirmation coinciding with the virtual currency encryption data can be deleted from the second recording unit 224D.

<Modification Example 4>

The relationship between Modification Example 4 and the third embodiment is identical to the relationship between Modification Example 3 and the second embodiment. In other words, in Modification Example 4, as in the case of Modification Example 3, it is assumed that an encryption method to be executed by the encryption unit 125 of the user terminal 100 and an encryption scheme to be executed by the encryption unit 228 of the settlement device 200 are also changed.

Modification Example 4 is the same as the third embodiment except for the above point. The configuration of the settlement terminal 3 and all processing to be executed therein is identical to those of the third embodiment, and this is the case in Modification Example 4. The configuration of the user terminal 100 and all processing to be executed therein is identical to those of the user terminal 100 of Modification Example 3.

The configuration of the settlement device 200 in the settlement system of Modification Example 4 and the processing to be executed therein which are different from those of the third embodiment will be mainly described below.

The hardware configuration of the settlement device 200 of Modification Example 4 is identical to that of the third embodiment. Function blocks which are almost identical to those of the third embodiment are generated inside the settlement device 200 of Modification Example 4, but it is different from the third embodiment only in that a key generating unit 227 is present.

The main control unit 222 of Modification Example 4 also performs overall control in the control unit 220 as in the case of the main control unit 222 of the third embodiment. As in the case of the third embodiment, the main control unit 222 of Modification Example 4 is also configured to execute credit determination processing and settlement processing. The credit determination processing and the settlement processing are the same as those in the third embodiment. Data recorded in the credit information recording unit 224B and usage of the data for the credit determination are the same as those in the third embodiment.

The main control unit 222 of Modification Example 4 has a function of generating original data for confirmation as in the case of the third embodiment. The structure of the original data for confirmation and the generation scheme thereof are identical to those of the third embodiment. The main control unit 222 of Modification Example 4 sends the generated original data for confirmation to the encryption unit 125 together with an instruction for performing encryption as in the case of the third embodiment.

As described above, the encryption unit 228 may receive an instruction for performing encryption from the main control unit 222 together with original data for confirmation.

When receiving such an instruction, the encryption unit 228 encrypts the original data for confirmation received from the main control unit 222 into encryption data for confirmation. This operation is the same as the operation in the third embodiment. However, in Modification Example 4, the encryption scheme must be changed as described above, and in that respect, the encryption scheme is different from that in the third embodiment.

When the encryption processing is changed, the encryption unit 228 can change the algorithm, the key, or both of them. However, the present embodiment is not limited thereto, but the key is changed as in the case of Modification Example 3. A key to be used by the encryption unit 228 for the encryption processing is provided from the key generating unit 227 as in the case of Modification Example 3. The timing at which the key generating unit 227 generates the key is a time when a request for key generation has been received from the encryption unit 228, and it is not different from that of Modification Example 3.

The details of an encryption process as to how the encryption unit 228 of Modification Example 4 encrypts the original data for confirmation into the encryption data for confirmation will be described below.

The encryption unit 228 is configured to write the generated encryption data for confirmation into the second recording unit 224D as in the case of the third embodiment.

The settlement determination unit 226 performs the settlement determination as described above. The processing to be executed by the settlement determination unit 226 is similar to that of the third embodiment. The settlement determination unit 226 is configured to generate final determination data as in the case of the third embodiment, and sends it to the main control unit 222.

The use scheme and operation of the settlement system according to Modification Example 4 will be described.

The processing to be executed in the settlement system according to Modification Example 4 is basically as shown in FIG. 22. The difference thereof resides in the details of the processing of S916 in the user terminal 100 and the details of the processing of S923C in the settlement device 200. The above processing is different from those of the third embodiment in that the encryption scheme changes.

In the settlement system of Modification Example 4, as in the case of the third embodiment, first, as a preparation for using the system, a user ID is set in each user terminal 100, and a settlement terminal ID is set in each settlement terminal 300.

First, processing of S911 to S913 is executed in the user terminal 100, and processing of S921 to S923 is executed in the settlement device. All of the above processing in Modification Example 4 is identical to those of the third embodiment.

The user terminal 100 receives permission information by the transmission and reception unit thereof (S914).

In the user terminal 100, upon this reception, the processing of S914 to 917 is executed to generate or issue virtual currency data. These steps are identical to the respective processing to be executed in the user terminal 100 described in Modification Example 3.

As described above, in the user terminal 100, upon reception of the permission information from the settlement device 200, this reception triggers generation or issuance of the virtual currency data. In Modification Example 4, as in the case of the third embodiment, in parallel to the above operation performed are generation of original data for confirmation (S923B), and generation of encryption data for confirmation by encrypting the original data for confirmation and recording of the encryption data for confirmation into the second recording unit 224D (S923C). As in the case of the third embodiment, such processing of S923B and S923C is performed, for example, immediately after the processing of S923 regarding transmission of the permission information.

As described above, in S921, the settlement device 200 receives a user ID and amount information from the user terminal 100. As in the case of the third embodiment, based on the user ID and the amount information, the main control unit 222 generates original data for confirmation (S923B).

The main control unit 222 sends the generated original data for confirmation to the encryption unit 228 together with an instruction for performing encryption.

The encryption unit 228 that has received the instruction for performing encryption together with the original data for confirmation executes the processing of encrypting the original data for confirmation to generate encryption data for confirmation from the original data for confirmation (S923C).

The encryption unit 228 requests key generation to the key generating unit 227 to obtain a key for encrypting the original data for confirmation. At that time, the encryption unit 228 sends the user ID included in the original data for confirmation to the key generating unit 227 together with the request for key generation.

As in the case of Modification Example 3, the key generating unit 227 uses an initial solution associated with the received user ID and an algorithm for generating a solution to generate the same solution as that generated in the user terminal 100 specified by the user ID. Here, with respect to how many solutions are continuously generated by the key generating unit 227, solutions are generated up to "a solution next to a solution generated immediately before". Since a solution generated in the user terminal 100 and a solution generated in the settlement terminal 300 are synchronized with each other so as to be identical to each other when both the solutions are generated in the same order and compared with each other, the key generating unit 227 of the settlement terminal 300 can generate the same key as in the key generating unit 126 of the user terminal 100. Note that the same key can be likewise generated in both the event synchronization and the time synchronization. Therefore, the key generating unit 126 and the key generating unit 227 may generate keys by synchronizing the keys in the time synchronization instead of the event synchronization as described above.

The key generating unit 227 sends a finally generated solution to the encryption unit 228 as a solution used for encryption.

The encryption unit 228 encrypts the original data for confirmation received from the main control unit 222 by using the key received from the key generating unit 227 and a fixed algorithm for encryption processing.

As a result, the original data for confirmation is encrypted and converted to encryption data for confirmation. The encryption unit 228 writes the generated encryption data for confirmation into the second recording unit 224D.

All of the subsequent processing to be performed by the settlement device 200 and the settlement terminal 300 is the same as those in the third embodiment.

Note that in the above description, the virtual currency data is assumed to include the user ID, but, for the same reason as in the third embodiment, the virtual currency data may not include the user ID. However, in Modification Example 4, the user ID included in the virtual currency data may also be used for the same purpose and in the same manner as in the third embodiment.

In Modification Example 4, as in the case of the third embodiment, it is possible to delete the used encryption data for confirmation from the second recording unit 224D.

**Claims**

1. A user terminal that, in combination with a management device, constitutes a virtual currency data issuing system configured to include:

the user terminal that generates virtual currency data that is data having a monetary value, and that comprises a user terminal input means that accepts input of information, a user terminal transmission and reception means that transmits and receives data via a predetermined network, and a user terminal information processing means that performs information processing, the user terminal information processing means comprising a user terminal solution generating means that can continuously generate a solution that is formed by enumerating a predetermined number of at least one of characters, numbers, and symbols based on an initial solution that differs on a user terminal basis, with a solution generated under a same condition always being a same solution, the user terminal being one of a plurality of user terminals each intended to be used by a user; and
the management device that performs management of generation of the virtual currency data in the user terminal, and that comprises a management device transmission and reception means that transmits and receives data via the network, and a management device information processing means that performs information processing, the management device information processing means comprises a server solution generating means that records initial solutions that are identical to initial solutions of the user terminals in association with user IDs of the user terminals, which is information for distinguishing each user of the user terminal from a user of another user terminal and which differs on a user terminal basis, respectively, and based on the solutions can generate the solution that is identical to the solution generated by the user terminal solution generating means of the user terminals, respectively, and the management device decryption means is configured to determine a scheme of decrypting the virtual currency encryption data based on the solution that is provided from the management device solution generating means;
the user terminal and the management device each being connectable to the network;
wherein
the user terminal input means is configured to accept amount information that is information that specifies an amount of money to be paid with virtual currency data that a user desires to issue, and
the user terminal information processing means comprises:

a user terminal first information processing means that attaches a user ID, which is information for distinguishing each user of the user terminal from a user of another user terminal and which differs on a user terminal basis, to the amount information accepted by the user terminal input means, and that causes the amount information with the user ID attached to be transmitted from the user terminal transmission and reception means to the management device via the network;
in the management device:

the management device transmission and reception means is configured to accept the amount information with the user ID attached from the user terminal, and
the management device information processing means comprises:

a credit determination unit that makes a determination as to whether the virtual currency data of an amount of money specified by the amount information with the user ID attached is to be issued for the user specified by the user ID accepted by the management device transmission and reception means, and that generates issuance permission information when it is made a determination that the virtual currency data is to be issued for the user, and
a management device first information processing means that causes the issuance permission information generated by the credit determination unit to be transmitted from the management device transmission and reception means via the network to the user terminal which sent the amount information, and
the user terminal transmission and reception means is configured to receive the issuance permission information from the management device, and
the user terminal information processing means comprises:

a user terminal encryption means that, when the user terminal transmission and reception means receives the issuance permission information, generates virtual currency encryption data by encrypting original data including the amount information using a scheme that is different to that used in another user terminal, wherein the user terminal encryption means is configured to change a scheme used to encrypt the original data each time the original data is encrypted, wherein the user terminal encryption means is configured to change a scheme used to encrypt the original data based on the solution that is provided from the user terminal solution generating means and

a user terminal second information processing means that generates virtual currency data including at least the virtual currency encryption data by adding necessary data to the virtual currency encryption data, wherein the user terminal second information processing means is configured to add to the virtual currency encryption data, encryption condition data for specifying a condition of encryption executed by the user terminal encryption means when the virtual currency encryption data is encrypted, and wherein the user terminal second information processing means is configured to add to the virtual currency encryption data a user ID that specifies the user terminal which encrypts the virtual currency encryption data, and to adopt the virtual currency encryption data to which the encryption condition data and the user ID is added as the virtual currency data, and wherein a serial number, indicating how many virtual currency data were issued before the virtual currency data at the user terminal that issued said virtual currency data, is used as the encryption condition data, and wherein the management device transmission and reception means is configured to accept, via a network, virtual currency data generated by any of the user terminals from the user terminal which generates the virtual currency data or from any device that received the virtual currency data by transfer directly or indirectly from the user terminal which generates the virtual currency data; and

the management device information processing means comprises:

a settlement means that, when the virtual currency data accepted from the user terminal is authentic, accepts settlement of an amount of money specified by the amount information encrypted and included in virtual currency encryption data included in the virtual currency data with respect to a user of a terminal that is a transmitting source of the virtual currency data, wherein

the management device information processing means comprises a management device decryption means for decrypting virtual currency encryption data included in the virtual currency data received by the management device transmission and reception means, wherein the management device decryption means is configured so that, when decrypting virtual currency encryption data included in the virtual currency data received by the management device transmission and reception means, the management device decryption means decrypts the virtual currency encryption data using a scheme corresponding to that used when the virtual currency encryption data is encrypted, wherein the management device decryption means is configured so that, when decrypting virtual currency encryption data included in the virtual currency data received by the management device transmission and reception means, the management device decryption means determines a scheme of decrypting the virtual currency encryption data according to the user ID and the encryption condition data that is included in the virtual currency data together with the virtual currency encryption data and

the settlement means is configured to accept the settlement by determining the virtual currency data in which the virtual currency encryption data is included to be authentic when the management device decryption means is able to decrypt the virtual currency encryption data.

2. A management device that, in combination with a user terminal, constitutes a virtual currency data issuing system configured to include:

the user terminal that generates virtual currency data that is data having a monetary value, and that comprises a user terminal input means that accepts input of information, a user terminal transmission and reception means that transmits and receives data via a predetermined network, and a user terminal information processing means that performs information processing, the user terminal information processing means comprising a user terminal solution generating means that can continuously generate a solution that is formed by enumerating a predetermined number of at least one of characters, numbers, and symbols based on an initial solution that differs on a user terminal basis, with a solution generated under a same condition always being a same solution, the user terminal being one of a plurality of user terminals each intended to be used by a user; and

the management device that performs management of generation of the virtual currency data in the user terminal, and that comprises a management device transmission and reception means that transmits and receives data via the network, and a management device information processing means that performs information processing, the management device information processing means comprises a server solution generating means that records initial solutions that are identical to initial solutions of the user terminals in association with user IDs of the user terminals, which is information for distinguishing each user of the user terminal from a user of another user terminal and which differs on a user terminal basis, respectively, and based on the solutions can generate the solution that is identical to the solution generated by the user terminal solution generating means of the user terminals, respectively, and the management device decryption means is configured to determine a scheme of decrypting the virtual currency encryption data based on the solution that is provided from the management device solution generating means;

the user terminal and the management device each being connectable to the network;

wherein

the user terminal input means is configured to accept amount information that is information that specifies an amount of money to be paid with virtual currency data that a user desires to issue, and

the user terminal information processing means comprises:

a user terminal first information processing means that attaches a user ID, which is information for distinguishing each user of the user terminal from a user of another user terminal and which differs on a user terminal basis, to the amount information accepted by the user terminal input means, and that causes the amount information with the user ID attached to be transmitted from the user terminal transmission and reception means to the management device via the network;

in the management device:

the management device transmission and reception means is configured to accept the amount information with the user ID attached from the user terminal, and

the management device information processing means comprises:

a credit determination unit that makes a determination as to whether the virtual currency data of an amount of money specified by the amount information with the user ID attached is to be issued for the user specified by the user ID accepted by the management device transmission and reception means, and that generates issuance permission information when it is made a determination that the virtual currency data is to be issued for the user, and

a management device first information processing means that causes the issuance permission information generated by the credit determination unit to be transmitted from the management device transmission and reception means via the network to the user terminal which sent the amount information, and

the user terminal transmission and reception means is configured to receive the issuance permission information from the management device, and

the user terminal information processing means comprises:

a user terminal encryption means that, when the user terminal transmission and reception means receives the issuance permission information, generates virtual currency encryption data by encrypting original data including the amount information using a scheme that is different to that used in another user terminal, wherein the user terminal encryption means is configured to change a scheme used to encrypt the original data each time the original data is encrypted, wherein the user terminal encryption means is configured to change a scheme used to encrypt the original data based on the solution that is provided from the user terminal solution generating means and

a user terminal second information processing means that generates virtual currency data including at least the virtual currency encryption data by adding necessary data to the virtual currency encryption data, wherein the user terminal second information processing means is configured to add to the virtual currency encryption data, encryption condition data for specifying a condition of encryption executed by the user terminal encryption means when the virtual currency encryption data is encrypted, and wherein the user terminal second information processing means is configured to add to the virtual currency encryption data a user ID that specifies the user terminal which encrypts the virtual currency encryption data, and to adopt the virtual currency encryption data to which the encryption condition data and the user ID is added as the virtual currency data, and wherein a serial number, indicating how many virtual currency data were issued before the virtual currency data at the user terminal that issued said virtual currency data, is used as the encryption condition data, and wherein the management device transmission and reception means is configured to accept, via a network, virtual currency data generated by any of the user terminals from the user terminal which generates the virtual currency data or from any device that received the virtual currency data by transfer directly or indirectly from the user terminal which generates the virtual currency data; and
the management device information processing means comprises:

a settlement means that, when the virtual currency data accepted from the user terminal is authentic, accepts settlement of an amount of money specified by the amount information encrypted and included in virtual currency encryption data included in the virtual currency data with respect to a user of a terminal that is a transmitting source of the virtual currency data, wherein
the management device information processing means comprises a management device decryption means for decrypting virtual currency encryption data included in the virtual currency data received by the management device transmission and reception means, wherein the management device decryption means is configured so that, when decrypting virtual currency encryption data included in the virtual currency data received by the management device transmission and reception means, the management device decryption means decrypts the virtual currency encryption data using a scheme corresponding to that used when the virtual currency encryption data is encrypted, wherein the management device decryption means is configured so that, when decrypting virtual currency encryption data included in the virtual currency data received by the management device transmission and reception means, the management device decryption means determines a scheme of decrypting the virtual currency encryption data according to the user ID and the encryption condition data that is included in the virtual currency data together with the virtual currency encryption data and
the settlement means is configured to accept the settlement by determining the virtual currency data in which the virtual currency encryption data is included to be authentic when the management device decryption means is able to decrypt the virtual currency encryption data.

**Patentansprüche**

1. Benutzerendvorrichtung, die in Kombination mit einer Verwaltungsvorrichtung ein Datenausgabesystem für virtuelle Währungen bildet, das so konfiguriert ist, dass es Folgendes enthält:

die Benutzerendvorrichtung, die Daten für virtuelle Währungen erzeugt, die Daten mit einem Geldwert sind, und die Folgendes umfasst: ein Eingabemittel der Benutzerendvorrichtung, das die Eingabe von Informationen akzeptiert, ein Sende- und Empfangsmittel der Benutzerendvorrichtung, das Daten über ein vorbestimmtes Netzwerk sendet und empfängt, und ein Informationsverarbeitungsmittel der Benutzerendvorrichtung, das eine Informationsverarbeitung durchführt, wobei das Informationsverarbeitungsmittel der Benutzerendvorrichtung ein Lösungserzeugungsmittel der Benutzerendvorrichtung umfasst, das kontinuierlich eine Lösung erzeugen kann, die durch Aufzählen einer vorbestimmten Anzahl von mindestens einem von Zeichen, Zahlen und Symbolen basierend auf einer Anfangslösung gebildet wird, die sich auf einer Basis der Benutzerendvorrichtung unterscheidet, wobei eine unter denselben Bedingungen erzeugte Lösung immer dieselbe Lösung ist, wobei die Benutzerendvorrichtung eine von einer Vielzahl von Benutzerendvorrichtungen ist, die jeweils zur Verwendung durch einen Benutzer vorgesehen sind; und
die Verwaltungsvorrichtung, die die Verwaltung der Erzeugung der virtuellen Währungsdaten in der Benutzerendvorrichtung durchführt und Folgendes umfasst: ein Sende- und Empfangsmittel der Verwaltungsvorrichtung, das Daten über das Netzwerk sendet und empfängt, und ein Informationsverarbeitungsmittel der Verwaltungsvorrichtung, das eine Informationsverarbeitung durchführt, wobei das Informationsverarbeitungsmittel der Verwaltungsvorrichtung ein Serverlösungserzeugungsmittel umfasst, das anfängliche Lösungen aufzeichnet, die identisch mit anfänglichen Lösungen der Benutzerendvorrichtung sind, die Benutzer-IDs der Benutzerendvorrichtung zugeordnet sind, die Informationen zur Unterscheidung jedes Benutzers der Benutzerendvorrichtung von einem Benutzer einer anderen Benutzerendvorrichtung sind und die sich jeweils auf einer Basis der Benutzerendvorrichtung unterscheiden, und basierend auf den Lösungen jeweils die Lösung erzeugen kann, die identisch mit der Lösung ist, die durch das Lösungserzeugungsmittel der Benutzerendvorrichtung der Benutzerendvorrichtungen erzeugt wird, und wobei das Entschlüsselungsmittel der Verwaltungsvorrichtung dafür konfiguriert ist, ein Schema zum Entschlüsseln der virtuellen Währungsverschlüsselungsdaten basierend auf der Lösung zu bestimmen, die von dem Lösungserzeugungsmittel der Verwaltungsvorrichtung bereitgestellt wird;

wobei die Benutzerendvorrichtung und die Verwaltungsvorrichtung jeweils mit dem Netzwerk verbindbar sind; wobei

das Eingabemittel der Benutzerendvorrichtung dafür konfiguriert sind, Betragsinformationen zu akzeptieren, die Informationen sind, die einen Geldbetrag spezifizieren, der mit virtuellen Währungsdaten zu zahlen ist, die ein Benutzer ausgeben möchte, und

das Informationsverarbeitungsmittel der Benutzerendvorrichtung Folgendes umfasst:

ein erstes Informationsverarbeitungsmittel der Benutzerendvorrichtung, das eine Benutzer-ID, die Informationen zur Unterscheidung jedes Benutzers der Benutzerendvorrichtung von einem Benutzer einer anderen Benutzerendvorrichtung sind und die sich basierend auf einer Benutzerendvorrichtung unterscheiden, an die von dem Eingabemittel der Benutzerendvorrichtung akzeptierten Betragsinformationen anfügt, und die bewirkt, dass die Betragsinformationen mit der angefügten Benutzer-ID von dem Sende- und Empfangsmittel der Benutzerendvorrichtung über das Netzwerk an die Verwaltungsvorrichtung übertragen werden;

wobei in der Verwaltungsvorrichtung:

das Sende- und Empfangsmittel der Verwaltungsvorrichtung so konfiguriert ist, dass es die Betragsinformationen mit der angehängten Benutzer-ID von der Benutzerendvorrichtung akzeptiert, und

wobei das Informationsverarbeitungsmittel der Verwaltungsvorrichtung Folgendes umfasst:

eine Kreditbestimmungseinheit, die bestimmt, ob die virtuellen Währungsdaten eines Geldbetrags, der durch die Betragsinformationen mit der angehängten Benutzer-ID angegeben ist, für den Benutzer ausgegeben werden sollen, der durch die Benutzer-ID angegeben ist, die von der Sende- und Empfangsmittel der Verwaltungsvorrichtung akzeptiert wird, und die Ausgabegenehmigungsinformationen erzeugt, wenn bestimmt wird, dass die virtuellen Währungsdaten für den Benutzer ausgegeben werden sollen, und

ein erstes Informationsverarbeitungsmittel der Verwaltungsvorrichtung, das bewirkt, dass die von der Kreditbestimmungseinheit erzeugten Ausgabegenehmigungsinformationen von dem Sende- und Empfangsmittel der Verwaltungsvorrichtung über das Netzwerk an die Benutzerendvorrichtung übertragen werden, die die Betragsinformationen gesendet hat, und

wobei das Sende- und Empfangsmittel der Benutzerendvorrichtung so konfiguriert ist, dass es die Ausgabegenehmigungsinformationen von der Verwaltungsvorrichtung empfängt, und

das Informationsverarbeitungsmittel der Benutzerendvorrichtung Folgendes umfasst:

ein Verschlüsselungsmittel der Benutzerendvorrichtung, das, wenn das Sende- und Empfangsmittel der Benutzerendvorrichtung die Ausgabegenehmigungsinformationen empfängt, Verschlüsselungsdaten für virtuelle Währungen erzeugt, indem es Originaldaten, die die Betragsinformationen enthalten, unter Verwendung eines Schemas verschlüsselt, das sich von dem in einer anderen Benutzerendvorrichtung verwendeten Schema unterscheidet, wobei das Verschlüsselungsmittel der Benutzerendvorrichtung dafür konfiguriert sind, ein Schema, das zum Verschlüsseln der Originaldaten verwendet wird, jedes Mal zu ändern, wenn die Originaldaten verschlüsselt werden, wobei das Verschlüsselungsmittel der Benutzerendvorrichtung dafür konfiguriert ist, ein Schema, das zum Verschlüsseln der Originaldaten verwendet wird, basierend auf der Lösung zu ändern, die von dem Lösungserzeugungsmittel der Benutzerendvorrichtung bereitgestellt wird, und

ein zweites Informationsverarbeitungsmittel der Benutzerendvorrichtung, das virtuelle Währungsdaten erzeugt, die mindestens die virtuellen Währungsverschlüsselungsdaten enthalten, indem notwendige Daten zu den virtuellen Währungsverschlüsselungsdaten hinzugefügt werden, wobei das zweite Informationsverarbeitungsmittel der Benutzerendvorrichtung dafür konfiguriert ist, den virtuellen Währungsverschlüsselungsdaten Verschlüsselungsbedingungsdaten hinzuzufügen, um eine Bedingung der Verschlüsselung zu spezifizieren, die von dem Verschlüsselungsmittel der Benutzerendvorrichtung ausgeführt wird, wenn die virtuellen Währungsverschlüsselungsdaten verschlüsselt werden, und wobei das zweite Informationsverarbeitungsmittel der Benutzerendvorrichtung dafür konfiguriert ist, den virtuellen Währungsverschlüsselungsdaten eine Benutzer-ID hinzuzufügen, die die Benutzerendvorrichtung angibt, die die virtuellen Währungsverschlüsselungsdaten verschlüsselt, und die virtuellen Währungsverschlüsselungsdaten, zu denen die Verschlüsselungsbedingungsdaten und die Benutzer-ID hinzugefügt wurden, als die virtuellen Währungsdaten zu übernehmen, und wobei eine Seriennummer, die angibt, wie viele virtuellen Währungsdaten vor den virtuellen Währungsdaten an der Benutzerendvorrichtung ausgegeben wurden, die die virtuellen Währungsdaten ausgegeben hat, als die Verschlüsselungsbedingungsdaten verwendet wird, und wobei das Sende- und Empfangsmittel der Verwaltungsvorrichtung so konfiguriert ist, dass es über ein Netzwerk virtuelle Währungsdaten akzeptiert, die von einer der Benutzerendvorrichtungen von der Benutzerendvorrichtung, die die virtuellen Währungsdaten erzeugt, oder von einer beliebigen Vorrichtung, die die virtuellen Währungsdaten durch direkte oder indirekte Übertragung von der Benutzerendvorrichtung, die die virtuellen Währungsdaten erzeugt, empfangen hat, erzeugt werden; und
wobei das Informationsverarbeitungsmittel der Verwaltungsvorrichtung Folgendes umfasst:

ein Abwicklungsmittel, das, wenn die von der Benutzerendvorrichtung akzeptierten virtuellen Währungsdaten authentisch sind, die Abwicklung eines Geldbetrags akzeptiert, der durch die Betragsinformationen spezifiziert ist, die verschlüsselt sind und in den virtuellen Währungsverschlüsselungsdaten enthalten sind, die in den virtuellen Währungsdaten enthalten sind, in Bezug auf einen Benutzer einer Endvorrichtung, die eine Sendequelle der virtuellen Währungsdaten ist, wobei
das Informationsverarbeitungsmittel der Verwaltungsvorrichtung ein Entschlüsselungsmittel der Verwaltungsvorrichtung zum Entschlüsseln von virtuellen Währungsverschlüsselungsdaten umfasst, die in den virtuellen Währungsdaten enthalten sind, die von dem Sende- und Empfangsmittel der Verwaltungsvorrichtung empfangen werden, wobei das Entschlüsselungsmittel der Verwaltungsvorrichtung so konfiguriert ist, dass beim Entschlüsseln von virtuellen Währungsverschlüsselungsdaten, die in den virtuellen Währungsdaten enthalten sind, die von dem Sende- und Empfangsmittel der Verwaltungsvorrichtung empfangen werden, das Entschlüsselungsmittel der Verwaltungsvorrichtung die virtuellen Währungsverschlüsselungsdaten unter Verwendung eines Schemas entschlüsselt, das dem Schema entspricht, das verwendet wird, wenn die virtuellen Währungsverschlüsselungsdaten verschlüsselt werden, wobei das Entschlüsselungsmittel der Verwaltungsvorrichtung so konfiguriert sind, dass beim Entschlüsseln von virtuellen Währungsverschlüsselungsdaten, die in den virtuellen Währungsdaten enthalten sind, die von dem Sende- und Empfangsmittel der Verwaltungsvorrichtung empfangen werden, das Entschlüsselungsmittel der Verwaltungsvorrichtung ein Schema zum Entschlüsseln der virtuellen Währungsverschlüsselungsdaten gemäß der Benutzer-ID und den Verschlüsselungsbedingungsdaten bestimmt, die in den virtuellen Währungsdaten zusammen mit den virtuellen Währungsverschlüsselungsdaten enthalten sind, und
das Abwicklungsmittel dafür konfiguriert ist, die Abwicklung zu akzeptieren, indem es die virtuellen Währungsdaten, in denen die virtuellen Währungsverschlüsselungsdaten enthalten sind, als authentisch bestimmt, wenn das Entschlüsselungsmittel der Verwaltungsvorrichtung in der Lage ist, die virtuellen Währungsverschlüsselungsdaten zu entschlüsseln.

2. Verwaltungsvorrichtung, die in Kombination mit einer Benutzerendvorrichtung ein Datenausgabesystem für virtuelle Währungen bildet, das so konfiguriert ist, dass es Folgendes enthält:

die Benutzerendvorrichtung, die Daten für virtuelle Währungen erzeugt, die Daten mit einem Geldwert sind, und die Folgendes umfasst: ein Eingabemittel der Benutzerendvorrichtung, das die Eingabe von Informationen akzeptiert, ein Sende- und Empfangsmittel der Benutzerendvorrichtung, das Daten über ein vorbestimmtes Netzwerk sendet und empfängt, und ein Informationsverarbeitungsmittel der Benutzerendvorrichtung, das eine Informationsverarbeitung durchführt, wobei das Informationsverarbeitungsmittel der Benutzerendvorrichtung ein Lösungserzeugungsmittel der Benutzerendvorrichtung umfasst, das kontinuierlich eine Lösung erzeugen kann, die durch Aufzählen einer vorbestimmten Anzahl von mindestens einem von Zeichen, Zahlen und Symbolen basierend auf einer Anfangslösung gebildet wird, die sich auf einer Basis der Benutzerendvorrichtung unterscheidet, wobei eine unter denselben Bedingungen erzeugte Lösung immer dieselbe Lösung ist, wobei die Benutzerendvorrichtung eine von einer Vielzahl von Benutzerendvorrichtungen ist, die jeweils zur Verwendung durch einen Benutzer vorgesehen sind; und

die Verwaltungsvorrichtung, die die Verwaltung der Erzeugung der virtuellen Währungsdaten in der Benutzerendvorrichtung durchführt und Folgendes umfasst: ein Sende- und Empfangsmittel der Verwaltungsvorrichtung, das Daten über das Netzwerk sendet und empfängt, und ein Informationsverarbeitungsmittel der Verwaltungsvorrichtung, das eine Informationsverarbeitung durchführt, wobei das Informationsverarbeitungsmittel der Verwaltungsvorrichtung ein Serverlösungserzeugungsmittel umfasst, das anfängliche Lösungen aufzeichnet, die identisch mit anfänglichen Lösungen der Benutzerendvorrichtung sind, die Benutzer-IDs der Benutzerendvorrichtung zugeordnet sind, die Informationen zur Unterscheidung jedes Benutzers der Benutzerendvorrichtung von einem Benutzer einer anderen Benutzerendvorrichtung sind und die sich jeweils auf einer Basis der Benutzerendvorrichtung unterscheiden, und basierend auf den Lösungen jeweils die Lösung erzeugen kann, die identisch mit der Lösung ist, die durch das Lösungserzeugungsmittel der Benutzerendvorrichtung der Benutzerendvorrichtungen erzeugt wird, und wobei das Entschlüsselungsmittel der Verwaltungsvorrichtung dafür konfiguriert ist, ein Schema zum Entschlüsseln der virtuellen Währungsverschlüsselungsdaten basierend auf der Lösung zu bestimmen, die von dem Lösungserzeugungsmittel der Verwaltungsvorrichtung bereitgestellt wird;

wobei die Benutzerendvorrichtung und die Verwaltungsvorrichtung jeweils mit dem Netzwerk verbindbar sind; wobei

das Eingabemittel der Benutzerendvorrichtung dafür konfiguriert sind, Betragsinformationen zu akzeptieren, die Informationen sind, die einen Geldbetrag spezifizieren, der mit virtuellen Währungsdaten zu zahlen ist, die ein Benutzer ausgeben möchte, und

das Informationsverarbeitungsmittel der Benutzerendvorrichtung Folgendes umfasst:

ein erstes Informationsverarbeitungsmittel der Benutzerendvorrichtung, das eine Benutzer-ID, die Informationen zur Unterscheidung jedes Benutzers der Benutzerendvorrichtung von einem Benutzer einer anderen Benutzerendvorrichtung sind und die sich basierend auf einer Benutzerendvorrichtung unterscheiden, an die von dem Eingabemittel der Benutzerendvorrichtung akzeptierten Betragsinformationen anfügt, und die bewirkt, dass die Betragsinformationen mit der angefügten Benutzer-ID von dem Sende- und Empfangsmittel der Benutzerendvorrichtung über das Netzwerk an die Verwaltungsvorrichtung übertragen werden; wobei in der Verwaltungsvorrichtung:

das Sende- und Empfangsmittel der Verwaltungsvorrichtung so konfiguriert ist, dass es die Betragsinformationen mit der angehängten Benutzer-ID von der Benutzerendvorrichtung akzeptiert, und wobei das Informationsverarbeitungsmittel der Verwaltungsvorrichtung Folgendes umfasst:

eine Kreditbestimmungseinheit, die bestimmt, ob die virtuellen Währungsdaten eines Geldbetrags, der durch die Betragsinformationen mit der angehängten Benutzer-ID angegeben ist, für den Benutzer ausgegeben werden sollen, der durch die Benutzer-ID angegeben ist, die von der Sende- und Empfangsmittel der Verwaltungsvorrichtung akzeptiert wird, und die Ausgabegenehmigungsinformationen erzeugt, wenn bestimmt wird, dass die virtuellen Währungsdaten für den Benutzer ausgegeben werden sollen, und

ein erstes Informationsverarbeitungsmittel der Verwaltungsvorrichtung, das bewirkt, dass die von der Kreditbestimmungseinheit erzeugten Ausgabegenehmigungsinformationen von dem Sende- und Empfangsmittel der Verwaltungsvorrichtung über das Netzwerk an die Benutzerendvorrichtung übertragen werden, die die Betragsinformationen gesendet hat, und

wobei das Sende- und Empfangsmittel der Benutzerendvorrichtung so konfiguriert ist, dass es die Ausgabegenehmigungsinformationen von der Verwaltungsvorrichtung empfängt, und das Informationsverarbeitungsmittel der Benutzerendvorrichtung Folgendes umfasst:

ein Verschlüsselungsmittel der Benutzerendvorrichtung, das, wenn das Sende- und Empfangsmittel der Benutzerendvorrichtung die Ausgabegenehmigungsinformationen empfängt, Verschlüsselungsdaten für virtuelle Währungen erzeugt, indem es Originaldaten, die die Betragsinformationen enthalten, unter Verwendung eines Schemas verschlüsselt, das sich von dem in einer anderen Benutzerendvorrichtung verwendeten Schema unterscheidet, wobei

**64**

das Verschlüsselungsmittel der Benutzerendvorrichtung dafür konfiguriert sind, ein Schema, das zum Verschlüsseln der Originaldaten verwendet wird, jedes Mal zu ändern, wenn die Originaldaten verschlüsselt werden, wobei das Verschlüsselungsmittel der Benutzerendvorrichtung dafür konfiguriert ist, ein Schema, das zum Verschlüsseln der Originaldaten verwendet wird, basierend auf der Lösung zu ändern, die von dem Lösungserzeugungsmittel der Benutzerendvorrichtung bereitgestellt wird, und

ein zweites Informationsverarbeitungsmittel der Benutzerendvorrichtung, das virtuelle Währungsdaten erzeugt, die mindestens die virtuellen Währungsverschlüsselungsdaten enthalten, indem notwendige Daten zu den virtuellen Währungsverschlüsselungsdaten hinzugefügt werden, wobei das zweite Informationsverarbeitungsmittel der Benutzerendvorrichtung dafür konfiguriert ist, den virtuellen Währungsverschlüsselungsdaten Verschlüsselungsbedingungsdaten hinzuzufügen, um eine Bedingung der Verschlüsselung zu spezifizieren, die von dem Verschlüsselungsmittel der Benutzerendvorrichtung ausgeführt wird, wenn die virtuellen Währungsverschlüsselungsdaten verschlüsselt werden, und wobei das zweite Informationsverarbeitungsmittel der Benutzerendvorrichtung dafür konfiguriert ist, den virtuellen Währungsverschlüsselungsdaten eine Benutzer-ID hinzuzufügen, die die Benutzerendvorrichtung angibt, die die virtuellen Währungsverschlüsselungsdaten verschlüsselt, und die virtuellen Währungsverschlüsselungsdaten, zu denen die Verschlüsselungsbedingungsdaten und die Benutzer-ID hinzugefügt wurden, als die virtuellen Währungsdaten zu übernehmen, und wobei eine Seriennummer, die angibt, wie viele virtuellen Währungsdaten vor den virtuellen Währungsdaten an der Benutzerendvorrichtung ausgegeben wurden, die die virtuellen Währungsdaten ausgegeben hat, als die Verschlüsselungsbedingungsdaten verwendet wird, und wobei das Sende- und Empfangsmittel der Verwaltungsvorrichtung so konfiguriert ist, dass es über ein Netzwerk virtuelle Währungsdaten akzeptiert, die von einer der Benutzerendvorrichtungen von der Benutzerendvorrichtung, die die virtuellen Währungsdaten erzeugt, oder von einer beliebigen Vorrichtung, die die virtuellen Währungsdaten durch direkte oder indirekte Übertragung von der Benutzerendvorrichtung, die die virtuellen Währungsdaten erzeugt, empfangen hat, erzeugt werden; und

wobei das Informationsverarbeitungsmittel der Verwaltungsvorrichtung Folgendes umfasst:

ein Abwicklungsmittel, das, wenn die von der Benutzerendvorrichtung akzeptierten virtuellen Währungsdaten authentisch sind, die Abwicklung eines Geldbetrags akzeptiert, der durch die Betragsinformationen spezifiziert ist, die verschlüsselt sind und in den virtuellen Währungsverschlüsselungsdaten enthalten sind, die in den virtuellen Währungsdaten enthalten sind, in Bezug auf einen Benutzer einer Endvorrichtung, die eine Sendequelle der virtuellen Währungsdaten ist, wobei

das Informationsverarbeitungsmittel der Verwaltungsvorrichtung ein Entschlüsselungsmittel der Verwaltungsvorrichtung zum Entschlüsseln von virtuellen Währungsverschlüsselungsdaten umfasst, die in den virtuellen Währungsdaten enthalten sind, die von dem Sende- und Empfangsmittel der Verwaltungsvorrichtung empfangen werden, wobei das Entschlüsselungsmittel der Verwaltungsvorrichtung so konfiguriert ist, dass beim Entschlüsseln von virtuellen Währungsverschlüsselungsdaten, die in den virtuellen Währungsdaten enthalten sind, die von dem Sende- und Empfangsmittel der Verwaltungsvorrichtung empfangen werden, das Entschlüsselungsmittel der Verwaltungsvorrichtung die virtuellen Währungsverschlüsselungsdaten unter Verwendung eines Schemas entschlüsselt, das dem Schema entspricht, das verwendet wird, wenn die virtuellen Währungsverschlüsselungsdaten verschlüsselt werden, wobei das Entschlüsselungsmittel der Verwaltungsvorrichtung so konfiguriert sind, dass beim Entschlüsseln von virtuellen Währungsverschlüsselungsdaten, die in den virtuellen Währungsdaten enthalten sind, die von dem Sende- und Empfangsmittel der Verwaltungsvorrichtung empfangen werden, das Entschlüsselungsmittel der Verwaltungsvorrichtung ein Schema zum Entschlüsseln der virtuellen Währungsverschlüsselungsdaten gemäß der Benutzer-ID und den Verschlüsselungsbedingungsdaten bestimmt, die in den virtuellen Währungsdaten zusammen mit den virtuellen Währungsverschlüsselungsdaten enthalten sind, und

das Abwicklungsmittel dafür konfiguriert ist, die Abwicklung zu akzeptieren, indem es die virtuellen Währungsdaten, in denen die virtuellen Währungsverschlüsselungsdaten enthalten sind, als authentisch bestimmt, wenn das Entschlüsselungsmittel der Verwaltungsvorrichtung in der Lage ist, die virtuellen Währungsverschlüsselungsdaten zu entschlüsseln.

**Revendications**

1. Terminal d'utilisateur constituant, conjointement avec un module de gestion, un système d'émission de données de monnaie virtuelle configuré pour comprendre :

le terminal d'utilisateur générant des données de monnaie virtuelle, à savoir des données ayant une valeur monétaire, et comprenant un dispositif d'entrée du terminal d'utilisateur acceptant l'entrée d'informations, un dispositif de transmission et de réception du terminal d'utilisateur transmettant et recevant des données à travers un réseau prédéterminé, et un dispositif de traitement des informations du terminal d'utilisateur assurant le traitement d'informations, le dispositif de traitement des informations du terminal d'utilisateur comprenant un dispositif de génération de solutions du terminal d'utilisateur en mesure de générer en continu une solution constituée par l'énumération d'un nombre prédéterminé d'au moins un des suivants : caractères, chiffres, et symboles, basés sur une solution initiale variant en fonction d'un terminal d'utilisateur, une solution générée dans des conditions identiques étant toujours la même, le terminal d'utilisateur étant un terminal parmi une pluralité de terminaux d'utilisateur, chaque terminal étant prévu pour être utilisé par un utilisateur ; et
le module de gestion assurant la gestion de la génération des données de monnaie virtuelle dans le terminal d'utilisateur, et comprenant un dispositif de transmission et de réception du module de gestion transmettant et recevant des données par le biais du réseau, et un dispositif de traitement des informations du module de gestion, assurant le traitement des informations, le dispositif de traitement des informations du module de gestion comprenant un dispositif de génération de solutions du serveur, qui enregistre des solutions initiales identiques à des solutions initiales des terminaux d'utilisateur conjointement avec des identifiants d'utilisateur des terminaux d'utilisateur, à savoir des informations permettant de distinguer chaque utilisateur du terminal d'utilisateur d'un utilisateur d'un autre terminal d'utilisateur, et variant en fonction d'un terminal d'utilisateur, respectivement, et pouvant, en fonction des solutions, générer la solution qui est identique à la solution générée par le dispositif de génération de solutions du terminal d'utilisateur des terminaux d'utilisateur, respectivement, et le dispositif de décryptage du module de gestion étant configuré pour déterminer un système de décryptage des données de cryptage de la monnaie virtuelle d'après la solution fournie par le dispositif de génération de solutions du module de gestion ;
le terminal d'utilisateur et le module de gestion pouvant être chacun connectés au réseau ;
le dispositif d'entrée du terminal d'utilisateur étant configuré pour accepter des informations sur le montant, à savoir des informations spécifiant une quantité d'argent à verser avec des données de monnaie virtuelle qu'un utilisateur souhaite émettre, et
le dispositif de traitement des informations du terminal d'utilisateur comprenant :

un dispositif de traitement des premières informations du terminal d'utilisateur, qui joint un identifiant d'utilisateur, à savoir des informations permettant de distinguer chaque utilisateur du terminal d'utilisateur d'un utilisateur d'un autre terminal d'utilisateur, et qui varient d'un terminal d'utilisateur à un autre, aux informations sur le montant acceptées par le dispositif d'entrée du terminal d'utilisateur, et donnant lieu à la transmission des informations sur le montant, auxquelles est joint l'identifiant d'utilisateur, du dispositif de transmission et de réception du terminal d'utilisateur au module de gestion par le biais du réseau ;
dans le module de gestion :

le dispositif de transmission et de réception du module de gestion est configuré pour accepter, du terminal d'utilisateur, les informations sur le montant auxquelles est joint l'identifiant d'utilisateur, et
le dispositif de traitement des informations du module de gestion comprend :

un module de détermination du crédit déterminant si les données de monnaie virtuelle relatives à une somme d'argent spécifiée par les informations sur le montant, auxquelles est joint l'identifiant d'utilisateur, doivent être émises pour l'utilisateur spécifié par l'identifiant d'utilisateur accepté par le dispositif de transmission et de réception du module de gestion, et générant des informations d'autorisation de l'émission après avoir déterminé que les données de monnaie virtuelle doivent être émises pour l'utilisateur, et
un dispositif de traitement des premières informations du module de gestion donnant lieu à la transmission des informations d'autorisation de l'émission, générées par le module de détermination de crédit, du dispositif de transmission et de réception du module de gestion, par le biais du réseau, au terminal d'utilisateur qui a transmis les informations sur le montant, et

le dispositif de transmission et réception du terminal d'utilisateur étant configuré pour recevoir, du module de gestion, les informations d'autorisation de l'émission, et

le dispositif de traitement des informations du terminal d'utilisateur comprenant :

un dispositif de cryptage du terminal d'utilisateur générant, à la réception, par le dispositif de transmission et de réception du terminal d'utilisateur, d'informations d'autorisation de l'émission, des données de cryptage de monnaie virtuelle en cryptant des données d'origine, y compris les informations sur le montant, en utilisant un système différent de celui qu'utilise un autre terminal d'utilisateur, le dispositif de cryptage de terminal d'utilisateur étant configuré pour modifier un système utilisé pour crypter les données d'origine chaque fois que sont cryptées les données d'origine, le dispositif de cryptage du terminal d'utilisateur étant configuré pour modifier un système utilisé pour crypter les données d'origine d'après la solution apportée par le dispositif de génération de solutions du terminal d'utilisateur, et

un dispositif de traitement des deuxièmes informations du terminal d'utilisateur assurant la génération de données de monnaie virtuelle, y compris au moins les données de cryptage de la monnaie virtuelle, en ajoutant des données nécessaires aux données de cryptage de la monnaie virtuelle, le dispositif de traitement des deuxièmes informations du terminal d'utilisateur étant configurées pour ajouter, aux données de cryptage de la monnaie virtuelle, des données sur les conditions de cryptage afin de spécifier une condition de cryptage exécutée par le dispositif de cryptage du terminal d'utilisateur lorsque les données de cryptage de la monnaie virtuelle sont cryptées, et le dispositif de traitement des deuxièmes informations du terminal d'utilisateur étant configuré pour ajouter aux données de cryptage de la monnaie virtuelle un identifiant d'utilisateur précisant le terminal d'utilisateur cryptant les données de cryptage de la monnaie virtuelle, et pour adopter les données de cryptage de la monnaie virtuelle auxquelles les données sur les conditions de cryptage et l'identifiant d'utilisateur sont ajoutées en tant que données sur la monnaie virtuelle, et un numéro matricule, indiquant combien de données sur la monnaie virtuelle ont été émises avant les données sur la monnaie virtuelle au terminal d'utilisateur d'où ont été émises lesdites données sur la monnaie virtuelle, étant utilisé en tant que donnée sur les conditions de cryptage, et le dispositif de transmission et de réception du module de gestion étant configuré pour accepter, à travers un réseau, des données sur la monnaie virtuelle générées par un quelconque des terminaux d'utilisateur depuis le terminal d'utilisateur générant les données sur la monnaie virtuelle, ou tout autre dispositif ayant reçu les données sur la monnaie virtuelle par un transfert direct ou indirect depuis le terminal d'utilisateur générant les données sur la monnaie virtuelle ; et

le dispositif de traitement des informations du module de gestion comprend :

un module de règlement qui, lorsque les données sur la monnaie virtuelle acceptées depuis le terminal d'utilisateur sont authentiques, accepte le règlement d'une somme d'argent spécifiée par les informations sur le montant cryptées et comprises dans les données de cryptage de la monnaie virtuelle comprises dans les données sur la monnaie virtuelle relativement à un utilisateur d'un terminal, qui est une source de transmission des données sur la monnaie virtuelle,

le dispositif de traitement des informations du module de gestion comprenant un dispositif de décryptage du module de gestion pour décrypter des données de cryptage de la monnaie virtuelle comprises dans les données sur la monnaie virtuelle reçues par le dispositif de transmission et réception du module de gestion, le dispositif de décryptage du module de gestion étant configuré de sorte que lors du décryptage des données de décryptage de la monnaie virtuelle comprises dans les données sur la monnaie virtuelle reçues par le dispositif de transmission et réception du module de gestion, le dispositif de décryptage du module de gestion décrypte les données de cryptage de la monnaie virtuelle en utilisant un système correspondant à celui qui est utilisé lors du cryptage des données de cryptage de la monnaie virtuelle, le dispositif de décryptage du module de gestion étant configuré de sorte que lors du décryptage de données de cryptage de la monnaie virtuelle comprises dans les données sur la monnaie virtuelle reçues par le dispositif de transmission et réception du module de gestion, le dispositif de décryptage du module de gestion détermine un système de décryptage des données de cryptage de la monnaie virtuelle en fonction de l'identifiant d'utilisateur et des données sur les conditions de cryptage, qui sont

**67**

comprises dans les données sur la monnaie virtuelle, ainsi que les données de cryptage de la monnaie virtuelle, et

le module de règlement étant configuré pour accepter le règlement en déterminant que les données sur la monnaie virtuelle, dans lesquelles sont comprises les données de cryptage de la monnaie virtuelle, sont authentiques, lorsque le dispositif de décryptage du module de gestion est en mesure de décrypter les données de cryptage de la monnaie virtuelle.

2. Module de gestion, qui, conjointement avec un terminal d'utilisateur, constitue un système d'émission de données de monnaie virtuelle, configuré pour comprendre :

le terminal d'utilisateur générant des données de monnaie virtuelle, à savoir des données ayant une valeur monétaire, et comprenant un dispositif d'entrée du terminal d'utilisateur acceptant l'entrée d'informations, un dispositif de transmission et de réception du terminal d'utilisateur, transmettant et recevant des données à travers un réseau prédéterminé, et un dispositif de traitement des informations du terminal d'utilisateur, assurant le traitement d'informations, le dispositif de traitement des informations du terminal d'utilisateur comprenant un dispositif de génération de solutions du terminal d'utilisateur en mesure de générer en continu une solution constituée par l'énumération d'un nombre prédéterminé d'au moins un des suivants : caractères, chiffres, et symboles, basés sur une solution initiale variant en fonction d'un terminal d'utilisateur, une solution générée dans des conditions identiques étant toujours la même, le terminal d'utilisateur étant un terminal parmi une pluralité de terminaux d'utilisateur, chaque terminal étant prévu pour être utilisé par un utilisateur ; et

le module de gestion assurant la gestion de la génération des données de monnaie virtuelle dans le terminal d'utilisateur, et comprenant un dispositif de transmission et de réception du module de gestion transmettant et recevant des données par le biais du réseau, et un dispositif de traitement des informations du module de gestion, assurant le traitement des informations, le dispositif de traitement des informations du module de gestion comprenant un dispositif de génération de solutions du serveur, enregistrant des solutions initiales identiques à des solutions initiales des terminaux d'utilisateur conjointement avec des identifiants d'utilisateur des terminaux d'utilisateur, à savoir des informations permettant de distinguer chaque utilisateur du terminal d'utilisateur d'un utilisateur d'un autre terminal d'utilisateur, et variant en fonction d'un terminal d'utilisateur, respectivement, et pouvant, en fonction des solutions, générer la solution qui est identique à la solution générée par le dispositif de génération de solutions du terminal d'utilisateur des terminaux d'utilisateur, respectivement, et le dispositif de décryptage du module de gestion étant configuré pour déterminer un système de décryptage des données de cryptage de la monnaie virtuelle d'après la solution fournie par le dispositif de génération de solutions du module de gestion ;

le terminal d'utilisateur et le module de gestion pouvant être chacun connectés au réseau ;

le dispositif d'entrée du terminal d'utilisateur étant configuré pour accepter des informations sur le montant, à savoir des informations spécifiant une quantité d'argent à verser avec des données de monnaie virtuelle qu'un utilisateur souhaite émettre, et

le dispositif de traitement des informations du terminal d'utilisateur comprenant :

un dispositif de traitement des premières informations du terminal d'utilisateur, qui joint un identifiant d'utilisateur, à savoir des informations permettant de distinguer chaque utilisateur du terminal d'utilisateur d'un utilisateur d'un autre terminal d'utilisateur, et qui varient d'un terminal d'utilisateur à un autre, aux informations sur le montant acceptées par le dispositif d'entrée du terminal d'utilisateur, et donnant lieu à la transmission des informations sur le montant, auxquelles est joint l'identifiant d'utilisateur, du dispositif de transmission et de réception du terminal d'utilisateur au module de gestion par le biais du réseau ;

dans le module de gestion :

le dispositif de transmission et de réception du module de gestion est configuré pour accepter, du terminal d'utilisateur, les informations sur le montant auxquelles est joint l'identifiant d'utilisateur, et

le dispositif de traitement des informations du module de gestion comprend :

un module de détermination du crédit déterminant si les données de monnaie virtuelle relatives à une somme d'argent spécifiée par les informations sur le montant, auxquelles est joint l'identifiant d'utilisateur, doivent être émises pour l'utilisateur spécifié par l'identifiant d'utilisateur accepté par le dispositif de transmission et de réception du module de gestion, et générant des informations d'autorisation de l'émission après avoir déterminé que les données de monnaie virtuelle doivent être émises pour l'utilisateur, et

un dispositif de traitement des premières informations du module de gestion donnant lieu à la transmission des informations d'autorisation de l'émission, générées par le module de détermination de crédit, du dispositif de transmission et de réception du module de gestion, par le biais du réseau, au terminal d'utilisateur qui a transmis les informations sur le montant, et

le dispositif de transmission et réception du terminal d'utilisateur étant configuré pour recevoir, du module de gestion, les informations d'autorisation de l'émission, et

le dispositif de traitement des informations du terminal d'utilisateur comprenant :

un dispositif de cryptage du terminal d'utilisateur générant, à la réception, par le dispositif de transmission et de réception du terminal d'utilisateur, des informations d'autorisation de l'émission, des données de cryptage de monnaie virtuelle en cryptant des données d'origine, y compris les informations sur le montant, en utilisant un système différent de celui qu'utilise un autre terminal d'utilisateur, le dispositif de cryptage de terminal d'utilisateur étant configuré pour modifier un système utilisé pour crypter les données d'origine chaque fois que sont cryptées les données d'origine, le dispositif de cryptage du terminal d'utilisateur étant configuré pour modifier un système utilisé pour crypter les données d'origine d'après la solution apportée par le dispositif de génération de solutions du terminal d'utilisateur, et

un dispositif de traitement des deuxièmes informations du terminal d'utilisateur assurant la génération de données de monnaie virtuelle, y compris au moins les données de cryptage de la monnaie virtuelle, en ajoutant des données nécessaires aux données de cryptage de la monnaie virtuelle, le dispositif de traitement des deuxièmes informations du terminal d'utilisateur étant configurées pour ajouter, aux données de cryptage de la monnaie virtuelle, des données sur les conditions de cryptage afin de spécifier une condition de cryptage exécutée par le dispositif de cryptage du terminal d'utilisateur lorsque les données de cryptage de la monnaie virtuelle sont cryptées, et le dispositif de traitement des deuxièmes informations du terminal d'utilisateur étant configuré pour ajouter aux données de cryptage de la monnaie virtuelle un identifiant d'utilisateur précisant le terminal d'utilisateur cryptant les données de cryptage de la monnaie virtuelle, et pour adopter les données de cryptage de la monnaie virtuelle auxquelles les données sur les conditions de cryptage et l'identifiant d'utilisateur sont ajoutées en tant que données sur la monnaie virtuelle, et un numéro matricule, indiquant combien de données sur la monnaie virtuelle ont été émises avant les données sur la monnaie virtuelle au terminal d'utilisateur d'où ont été émises lesdites données sur la monnaie virtuelle, étant utilisé en tant que donnée sur les conditions de cryptage, et le dispositif de transmission et de réception du module de gestion étant configuré pour accepter, à travers un réseau, des données sur la monnaie virtuelle générées par un quelconque des terminaux d'utilisateur depuis le terminal d'utilisateur générant les données sur la monnaie virtuelle, ou tout autre dispositif ayant reçu les données sur la monnaie virtuelle par un transfert direct ou indirect depuis le terminal d'utilisateur générant les données sur la monnaie virtuelle ; et

le dispositif de traitement des informations du module de gestion comprend :

un module de règlement qui, lorsque les données sur la monnaie virtuelle acceptées depuis le terminal d'utilisateur sont authentiques, accepte le règlement d'une somme d'argent spécifiée par les informations sur le montant cryptées et comprises dans les données de cryptage de la monnaie virtuelle comprises dans les données sur la monnaie virtuelle relativement à un utilisateur d'un terminal, qui est une source de transmission des données sur la monnaie virtuelle,

le dispositif de traitement des informations du module de gestion comprenant un dispositif de décryptage du module de gestion pour décrypter des données de cryptage de la monnaie virtuelle comprises dans les données sur la monnaie virtuelle reçues par le dispositif de transmission et réception du module de gestion, le dispositif de décryptage du module de gestion étant configuré de sorte que lors du décryptage des données de décryptage de la monnaie virtuelle comprises dans les données sur la monnaie virtuelle reçues par le dispositif de transmission et réception du module de gestion, le dispositif de décryptage du module de gestion décrypte les données de cryptage de la monnaie virtuelle en utilisant un système correspondant à celui qui est utilisé lors du cryptage des données de cryptage de la monnaie virtuelle, le dispositif de décryptage du module de gestion étant configuré de sorte que lors du décryptage de données de cryptage de la monnaie virtuelle comprises dans les données sur la monnaie virtuelle reçues par le dispositif de transmission et réception du module de gestion, le dispositif de décryptage du module de gestion détermine un système de décryptage des données de cryptage de la monnaie virtuelle en fonction de l'identifiant d'utilisateur et des données sur les conditions de cryptage, qui sont comprises dans les données sur la monnaie virtuelle, ainsi que les données de cryptage de la monnaie virtuelle, et

le module de règlement étant configuré pour accepter le règlement en déterminant que les données sur la monnaie virtuelle, dans lesquelles sont comprises les données de cryptage de la monnaie virtuelle, sont authentiques, lorsque le dispositif de décryptage du module de gestion est en mesure de décrypter les données de cryptage de la monnaie virtuelle.

FIG. 1

EP 3 667 595 B1

FIG. 2

FIG. 3

FIG. 4

EP 3 667 595 B1

211  212  213

CPU  ROM  RAM

216

HDD  INTERFACE

215  214

FIG. 5

FIG. 6

FIG. 7

FIG. 8

| USER TERMINAL | SETTLEMENT DEVICE | SETTLEMENT TERMINAL |
|---|---|---|

START

INPUT START INFORMATION (S911)

INPUT USER ID, AMOUNT INFORMATION (S912)

TRANSMIT USER ID, AMOUNT INFORMATION (S913) → RECEIVE USER ID, AMOUNT INFORMATION (S921)

PERFORM CREDIT DETERMINATION (S922)

RECEIVE PERMISSION INFORMATION (S914) ← TRANSMIT PERMISSION INFORMATION (S923)

GENERATE ORIGINAL DATA (S915)

GENERATE VIRTUAL CURRENCY ENCRYPTION DATA BY ENCRYPTING ORIGINAL DATA (S916)

GENERATE VIRTUAL CURRENCY DATA (S917)

TRANSFER VIRTUAL CURRENCY DATA (S918) → RECEIVE VIRTUAL CURRENCY DATA (S931)

RECEIVE VIRTUAL CURRENCY DATA AND SETTLEMENT TERMINAL ID (S924) ← TRANSMIT VIRTUAL CURRENCY DATA AND SETTLEMENT TERMINAL ID (S932)

DECRYPT VIRTUAL CURRENCY ENCRYPTION DATA (S925)

PERFORM SETTLEMENT DETERMINATION (S926)

TRANSMIT DETERMINATION RESULT DATA (S927) → RECEIVE DETERMINATION RESULT DATA (S933)

DISPLAY SETTLEMENT RESULT (S934)

END

FIG. 9

（A）

START
SETTLEMENT                 (DECISION)

USER ID: [                    ]

AMOUNT OF
MONEY (YEN): [                    ]

（B）

START
SETTLEMENT                 (DECISION)

USER ID: [      d2af1apfa      ]

AMOUNT OF
MONEY (YEN): [      25,000      ]

FIG. 10

| USER ID | DEPOSIT ACCOUNT BALANCE (YEN) |
|---|---|
| kgpi4649a | 2500 |
| LP000ddaa | 0 |
| d2af1apfa | 100000 |
| 220piiai1 | 25000 |
| iaorzkk00 | 300000 |
| . | . |
| . | . |
| . | . |

FIG. 11

VIRTUAL CURRENCY DATA

101

FIG. 12

FIG. 13

FIG. 14

FIG. 15

FIG. 16

FIG. 17

FIG. 18

USER TERMINAL | SETTLEMENT DEVICE | SETTLEMENT TERMINAL

START

INPUT START INFORMATION (S911)

INPUT USER ID, AMOUNT INFORMATION (S912)

TRANSMIT USER ID, AMOUNT INFORMATION (S913) → RECEIVE USER ID, AMOUNT INFORMATION (S921)

PERFORM CREDIT DETERMINATION (S922)

RECEIVE PERMISSION INFORMATION (S914) ← TRANSMIT PERMISSION INFORMATION (S923)

GENERATE ORIGINAL DATA (S915)

GENERATE AND RECORD ORIGINAL DATA FOR CONFIRMATION (S923A)

GENERATE VIRTUAL CURRENCY ENCRYPTION DATA BY ENCRYPTING ORIGINAL DATA (S916)

GENERATE VIRTUAL CURRENCY DATA (S917)

TRANSFER VIRTUAL CURRENCY DATA (S918) ────────────→ RECEIVE VIRTUAL CURRENCY DATA (S931)

RECEIVE VIRTUAL CURRENCY DATA AND SETTLEMENT TERMINAL ID (S924) ← TRANSMIT VIRTUAL CURRENCY DATA AND SETTLEMENT TERMINAL ID (S932)

ENCRYPT ORIGINAL DATA FOR CONFIRMATION (S925A)

PERFORM SETTLEMENT DETERMINATION (S926)

TRANSMIT DETERMINATION RESULT DATA (S927) → RECEIVE DETERMINATION RESULT DATA (S933)

DISPLAY SETTLEMENT RESULT (S934)

END

FIG. 19

FIG. 20

FIG. 21

START

INPUT START INFORMATION (S911)

INPUT USER ID, AMOUNT INFORMATION (S912)

TRANSMIT USER ID, AMOUNT INFORMATION (S913) → RECEIVE USER ID, AMOUNT INFORMATION (S921)

PERFORM CREDIT DETERMINATION (S922)

RECEIVE PERMISSION INFORMATION (S914) ← TRANSMIT PERMISSION INFORMATION (S923)

GENERATE ORIGINAL DATA (S915)     GENERATE ORIGINAL DATA FOR CONFIRMATION (S923B)

GENERATE VIRTUAL CURRENCY ENCRYPTION DATA BY ENCRYPTING ORIGINAL DATA (S916)     GENERATE AND RECORD ENCRYPTION DATA FOR CONFIRMATION (S923C)

GENERATE VIRTUAL CURRENCY DATA (S917)

TRANSFER VIRTUAL CURRENCY DATA (S918) ————————→ RECEIVE VIRTUAL CURRENCY DATA (S931)

RECEIVE VIRTUAL CURRENCY DATA AND SETTLEMENT TERMINAL ID (S924) ← TRANSMIT VIRTUAL CURRENCY DATA AND SETTLEMENT TERMINAL ID (S932)

PERFORM SETTLEMENT DETERMINATION (S926)

TRANSMIT DETERMINATION RESULT DATA (S927) → RECEIVE DETERMINATION RESULT DATA (S933)

DISPLAY SETTLEMENT RESULT (S934)

END

FIG. 22

EP 3 667 595 B1

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5999625 A